# EUROPEAN PATENT SPECIFICATION

(11) **EP 1 839 437 B1**
(45) Date of publication and mention of the grant of the patent: **16.05.2012**
(21) Application number: 05818976.2
(22) Date of filing: 14.12.2005
(51) Int. Cl.: H04N 5/44, H04N 21/434, H04N 21/482, H04N 21/443, H04N 21/84, H04N 5/445

(54) **APPARATUS AND METHOD FOR DISPLAYING BROADCASTING INFORMATION IN DIGITAL BROADCASTING RECEIVER**
VORRICHTUNG UND VERFAHREN ZUR ANZEIGE VON RUNDFUNKINFORMATIONEN BEI EINEM DIGITALEN RUNDFUNKEMPFÄNGER
APPAREIL ET PROCEDE D'AFFICHAGE D'INFORMATIONS DE DIFFUSION SUR UN RECEPTEUR DE DIFFUSION NUMERIQUE

(30) Priority: 14.12.2004 KR 20040105878; 13.12.2005 KR 20050122483
(43) Date of publication of application: 03.10.2007
(73) Proprietor: Samsung Electronics Co., Ltd., Gyeonggi-do 442-742 (KR)
(72) Inventor: SEO, Jeong-Wook, Suseong-gu, Daegu 706-777 (KR); Lee, Jong-Kerl, Gumi-si, Gyeongsangbuk-do 730-110 (KR); Park, Wei-Jin, Seoul 135-829 (KR)
(74) Representative: Hutter, Jacobus Johannes
(86) International application number: PCT/KR2005/004301
(87) International publication number: WO 2006/065074

(56) References cited:
- JP-A- 10 108 144
- JP-A- 2000 032 414
- US-A1- 2002 186 296
- US-A1- 2003 112 467
- US-A1- 2004 034 866
- US-B1- 6 601 237
- KYEONGOK KANG ET AL: "Metadata broadcasting for personalized service: a practical solution" ETRI JOURNAL, ELECTRONICS AND TELECOMMUNICATIONS RESEARCH INSTITUTE, KR LNKD- DOI:10.4218/ETRIJ.04.0603.0011, vol. 26, no. 5, 1 October 2004 (2004-10-01), pages 452-466, XP002513087 ISSN: 1225-6463
- isabelle amonou, christian bertin, franck geslin: "TV-Anytime in the context of broadband and broadcast networks" 5 June 2003 (2003-06-05), XP002584131 Retrieved from the Internet: URL:http://tim.irisa.fr/veille/TVadsl/Broa dband%20TV/Broadband%20TVSEM/Presentations /Day%202%20morning/TVA%20GBS/TVA_2003-05-0 6.pdf> [retrieved on 2010-05-26]
- EVAIN J-P ET AL: "TV-Anytime Phase 1" EBU TECHNICAL REVIEW, PHILIP LAVEN, GRAND-SACONNEX, GENEVA, CH, no. 295, 1 July 2003 (2003-07-01), pages 1-11, XP002543034 ISSN: 1609-1469
- EVAIN J-P: "TV-Anytime A preliminary specification on schedule!" EBU REVIEW TECHNICAL, EUROPEAN BROADCASTING UNION, GENEVA, CH, 1 September 2000 (2000-09-01), pages 1/14-1, XP002279571 ISSN: 1018-7391
- ATSC: "ATSC Request for Proposals - Metadata for Advanced EPG Functionality" ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. M7140, 3 March 2001 (2001-03-03), XP030036266

## Description

### Technical Field

The present invention relates to a displaying apparatus and method of a digital broadcasting receiver, and more particularly, to an apparatus and method for displaying broadcasting information.

### Background Art

In general, a current wireless terminal is in trend where a multimedia-dedicated processor is installed or a multimedia function is reinforced. A technology for employing a television function in the wireless terminal is being currently announced, and the wireless terminal is in trend where even installation of a digital broadcasting receiver is researched. Accordingly, the current wireless terminal should have a construction for providing various multimedia functions and therefore, the construction and a process of the wireless terminal get complicated.

Document XP002513087 'KYEONGOK KANG; ET AL, "Metadata Broadcasting for Personalized Service: a Practical Solution" ETRI JOURNAL, ELECTRONICS AND TELECOMMUNICATIONS RESEARCH INSTITUTE, KR LNKD-DOI:10.4218/ETRIJ.04.0603.0011, Vol.26, No.5, 1 October 2004 (2004-10-01), Pages 452 - 466, ISSN: 1225-6463', discloses a framework of metadata broadcasting to provide personalized service according to user preferences and various terminal/network conditions. For interoperability, the proposed solution is designed to be compliant with the relevant standards of the TV-Anytime Forum, MPEG-7 Systems, and MPEG-2 Systems. Considering a home network environment, a metadata-based content adaptation scheme is proposed. Each component technology has been implemented individually, integrated into an end-to-end prototype broadcasting system.

Document XP002584131 'isabelle amonou; christian bertin; franck geslin: "TV-Anytime in the context of broadband and broadcast networks", Pages: 1 - 30', discloses that TV Anytime is an end to end standard offering a new way to describe and locate TV contents. TV Anytime is being adopted in the contexts of Broadcast (DVB), Broadband (IP/DSL), and in a cooperative context involving broadband and broadcast networks. TV Anytime will enhance broadband TV services in a near future and facilitate the transition of enhanced audiovisual services on all networks.

Document XP002543034 'EVAIN J-P; MURRET-LABARTHE H: EBU TECHNICAL REVIEW, 20030701 Philip Laven, Grand-Saconnex, Geneva, CH - ISSN 1609-1469, No. 295, Pages: 1 - 11, discloses that TV-Anytime is an "open" set of specifications for use with personal video recorders. It is being adapted for use in Europe (the DVB Consortium), Japan (ARIB), the USA (ATSC) and other areas. This article describes Phase 1 of the specifications, which will shortly be published as ETSI Technical Specifications and Reports.

Document XP002279571, 'EVAIN J-P: EBU REVIEW TECHNICAL, 20000901 EUROPEAN BROADCASTING UNION, GENEVA, CH - ISSN 1018-7391, No. 295, Pages: 1/14 - 1-1/14-14', describes the current work to define a metadata solution, within the metadata technical framework approved by the TV-Anytime Forum, and discloses that TV-Anytime aims to specify an end-to-end system which will allow the consumer to select and acquire the content of interest - for consumption at his/her own time of preference.

Document XP030036266 'ATSC: ITU Study Group 16 - Video Coding Experts Group -ISO/IEC MPEG & ITU-T VCEG(ISO/IEC JTC1/SC29/WG11 AND ITU-T SG16 Q6), 20010303 XX, XX, No. M7140' discloses a request for proposal that applies to a protocol for the carriage of metadata in an ATSC digital television (DTV) broadcast stream to support advanced EPG functionality in a DTV receiver, such as: a) Display of channel and event logos; b) Browsing and searching for TV programs by category (genre), star performers, and other attributes of the programs; c) Multimedia descriptions of TV programs, including movie-style posters, audio clips, and video trailers; and d) Links to other sources of information, such as web sites.

The digital broadcasting receiver provides many broadcasting channel signals, and also should provide a service for summarizing and displaying programs of respective broadcasting channels. Therefore, a user viewing digital broadcasting should be able to select the broadcasting channels, and easily confirm the programs of the selected broadcasting channel. For this, the digital broadcasting receiver needs a user interface (Hereinafter, referred to as "UI") for selecting the broadcasting channel and displaying broadcasting information of the selected broadcasting channel. Even the wireless terminal with a function of receiving the digital broadcasting should be able to display UI information displayed in the digital broadcasting receiver. In other words, a display unit of the wireless terminal has a relatively smaller size and also has a lower resolution than that of the general digital broadcasting receiver. Accordingly, it is difficult for the wireless terminal having a function of the digital broadcasting receiver to display broadcasting program information like the general digital broadcasting receiver.

### Disclosure

### Technical Problem

It is, therefore, an object of the present invention to provide a method for displaying digital broadcasting information in a wireless terminal having a digital broadcasting receiver.

It is another object of the present invention to provide a method for constructing an EPG table displaying broadcasting program information in a digital broadcasting receiver.

It is a further object of the present invention to provide a method for displaying broadcasting program information of a service channel selected by a user, using an EPG table storing information of physical and service channels and program information of the respective service channels, in a wireless terminal having a digital broadcasting receiver.

It is a further another object of the present invention to provide an apparatus and method for, upon display of channel information, displaying summary information including names of broadcasting channels provided, and upon selection of the displayed service channel, displaying summary information of program of the selected service channel in a digital broadcasting receiver.

It is a still further another object of the present invention is to provide an apparatus and method for generating EPG data, and structured EPG data obtained by structuring service channel information of the EPG data and program information of respective service channels, and upon display of the channel information, selectively displaying the EPG data or the structured EPG data depending on user's selection in a digital broadcasting receiver.

It is yet further another object of the present invention is to provide an apparatus and method for generating ESG data, and structured EPG data obtained by structuring service channel information of the ESG data and program information of respective service channels, and upon display of the channel information, selectively displaying the ESG data or the structured EPG data depending on user's selection in a digital broadcasting receiver.

### Technical Solution

To achieve the above and other objects, there is provided an apparatus for displaying channel information in a digital broadcasting receiver, the apparatus including: a broadcasting receiver for receiving and demodulating a digital broadcasting signal of a selected channel; a data processor for demultiplexing the demodulated broadcasting signal, separating EPG (electronic program guide) and broadcasting data, and decoding the broadcasting data; a controller for controlling an operation for analyzing the EPG data, generating summary information on a service channel-by-service channel basis, generating summary information of programs of respective service channels, generating structured EPG data, and upon request for displaying the channel information, displaying the EPG data or the structured EPG data by user's selection; a memory for storing the EPG data and the structured EPG data under control of the controller; and a display unit for displaying the selected EPG data or structured EPG data as the channel information.

The structured EPG data includes: first EPG data provided as much as number of the service channels, each of which has service channel information having service channel category and name; and second EPG data having event information broadcasted over the service channel and stored in a broadcasting time sequence, and the event information having a broadcasting start time, a broadcasting time, an event name, and an event summary of a corresponding event.

The first EPG data further includes: a network layer for storing a physical channel identification, broadcasting station information, and a plurality of numbers of the service channels using the physical channel; and service layers provided as much as the number of the service channels, and each storing a service channel identification, a service channel number, a service category, and a service channel name, and the second EPG data includes event layers provided as much as number of programs of a corresponding service channel, and the event layers are provided in number corresponding to the respective service channels and each has the event broadcasting start time, the event broadcasting time, the event name, an event category, and the event summary.

Upon user's request for the channel information, the controller controls an operation for displaying the EPG and structured EPG data, having access to the EPG or structured EPG data selected by a user in the memory, and displaying the EPG or structured EPG data on the display unit, and upon user's request for displaying the structured EPG data, the controller displays the first EPG data, and displays the second EPG data of the service channel based on the user' s selection.

In another aspect of the present invention, there is provided an apparatus for displaying channel information in a digital broadcasting receiver, the apparatus including: a broadcasting receiver for receiving and demodulating a digital broadcasting signal of a selected channel, and outputting IP (Internet protocol) datagram data; a data processor for decapsulating IP data of the IP datagram data, separating a service data packet stream or an ESG (electronic service guide) data packet stream, and demultiplexing and decoding the service data packet stream into audio and video data; a controller for controlling an operation for parsing the ESG data packet stream, generating structured ESG data, analyzing the structured ESG data, generating summary information on a service channel-by-service channel basis, generating summary information of programs of respective service channels, generating structured EPG data, and upon request for displaying the channel information, displaying the structured ESG data or the structured EPG data by user's selection; a memory for storing the structured ESG data and EPG data by the controller; and a display unit for displaying the selected structured ESG data or structured EPG data as the channel information.

Upon receipt of the ESG data packet stream, the controller parses the ESG data, generates and stores the structured ESG data in the memory, combines channel information data of a service information fragment and an acquisition fragment of the structured ESG data, generates the summary information of the programs of the respective service channels, generates structured first EPG data, combines channel information data of contents fragments and schedule event fragments, and generates structured second EPG data.

The controller matches a service identification field, a name field, and a genre field of the service information fragment and the acquisition fragment of the structured ESG data to service channel name, category and language, respectively, to generate the first EPG data, and the controller matches a broadcasting start time field of the schedule event fragment of the structured ESG data and a broadcasting field, a title field, a genre field, and a synopsis field of the contents fragment to an event start time, an event broadcasting time, an event name, an event category, and an event summary of the event information to generate and store the structured second EPG data in the memory.

The controller matches a SDP (session description protocol) field of the acquisition information fragment of the structured ESG data to a network layer of the first EPG data, and matches a service ID field, a service genre field, and a service name field of the service information fragment to corresponding service channel number, service type, and service channel name of a service layer of the first EPG data, respectively, to generate the structured first EPG data, and the controller matches a content identification field and the broadcasting start time field of the schedule event fragment of the structured ESG data to event identification and start time of the second EPG data, respectively, and matches the broadcasting time field, the title field, the genre field, and the synopsis field of the contents fragment to a broadcasting time, an event name, a content level, and an event summary of the second EPG data, respectively, to generate the structured second EPG data.

Upon user' s request for the channel information, the controller controls an operation for displaying the structured ESG and structured EPG data, having access to the structured ESG or EPG data selected by a user in the memory, and displaying the structured ESG or EPG data on the display unit.

In a further aspect of the present invention, there is provided method for displaying channel information in a digital broadcasting receiver, the method including the steps of receiving and demodulating a digital broadcasting signal of a selected channel; demultiplexing the demodulated broadcasting signal, separating EPG (electronic program guide) and broadcasting data, and decoding the broadcasting data; storing the EPG data, analyzing the EPG data, generating summary information on a service channel-by-service channel basis, generating summary information of programs of respective service channels, and generating and storing structured EPG data; and upon request for displaying the channel information, displaying the EPG data or the structured EPG data selected.

The step of generating the structured EPG data includes the steps of generating first EPG data provided as much as number of the service channels, each of which has service channel information having service channel category and name; and generating second EPG data having event information broadcasted over the service channel and stored in a broadcasting time sequence, and the event information having a broadcasting start time, a broadcasting time, an event name, and an event summary of a corresponding event.

The first EPG data further includes: a network layer for storing a physical channel identification, broadcasting station information, and a plurality of numbers of the service channels using the physical channel; and service layers provided as much as the number of the service channels, and each storing a service channel identification, a service channel number, a service category, and a service channel name, and the second EPG data includes event layers provided as much as number of programs of a corresponding service channel, and the event layers are provided in number corresponding to the respective service channels and each has the event broadcasting start time, the event broadcasting time, the event name, an event category, and the event summary.

The step of displaying the channel information includes the steps of: upon request for the channel information, guiding for selection of the EPG and structured EPG data; upon selection of the EPG data in the above step, displaying the EPG data as the channel information, and upon selection of the structured EPG data, displaying the structured EPG data as the channel information.

The step of displaying the structured EPG data including the steps of: displaying the first EPG data, and guiding for selection of the service channel; and displaying the second EPG data of the service channel selected in the above step, as the channel information.

In a further another aspect of the present invention, there is provided a method for displaying channel information in a digital broadcasting receiver, the method including the steps of: receiving and demodulating a digital broadcasting signal of a selected channel, and outputting IP (Internet protocol) datagram data; decapsulating IP data of the IP datagram data, separating a service data packet stream or an ESG (electronic service guide) data packet stream, and demultiplexing and decoding the service data packet stream into audio and video data; parsing the ESG data packet stream, and generating and storing structured ESG data; analyzing the structured ESG data, generating summary information on a service channel-by-service channel basis, generating summary information of programs of respective service channels, and generating and storing structured EPG data; and upon request for displaying the channel information, displaying the selected ESG data or the structured EPG data as the channel information.

The step of generating the structured EPG data including the steps of: upon receipt of the ESG data packet stream, parsing the ESG data, and generating and storing the structured ESG data; combining channel information data of a service information fragment and an acquisition fragment of the structured ESG data, generating the summary information of the programs of the respective service channels, generating structured first EPG data, combining channel information data of contents fragments and schedule event fragments, and generating and storing structured second EPG data.

In the step of generating the first EPG data, a service identification field, a name field, and a genre field of the service information fragment and the acquisition fragment of the structured ESG data are matched to service channel name, category and language, respectively, to generate the first EPG data, and in the step of generating the second EPG data, a broadcasting start time field of the schedule event fragment of the structured ESG data and a broadcasting field, a title field, a genre field, and a synopsis field of the contents fragment are matched to an event start time, an event broadcasting time, an event name, an event category, an event summary of the event information to generate the structured second EPG data.

The step of displaying the channel information by a user includes the steps of: guiding for selection of the ESG and structured EPG data; and upon selection of the ESG data, displaying the structured ESG data as the channel information, and upon selection of the EPG data, selecting the structured EPG data as the channel information.

### Advantageous Effects

According to the present invention, there is an effect of selecting an inputted digital broadcasting channel on a display unit of a wireless terminal, and displaying an audio and video display state of the selected channel and program information of respective service channels depending on user's selection.

### Description of Drawings

FIG. 1 illustrates a construction of a digital broadcasting receiver;
FIG. 2 illustrates a construction of a decoder of a digital broadcasting receiver using EPG channel information in FIG. 1;
FIG. 3 illustrates a construction of a demultiplexer of FIG. 2;
FIGS. 4A to 4C illustrate a construction of a broadcasting signal inputted;
FIG. 5 illustrates a software construction of a digital broadcasting receiver according to an embodiment of the present invention;
FIGS. 6A and 6B illustrate architecture of an application interface in a digital broadcasting receiver according to an embodiment of the present invention;
FIG. 7 illustrates a construction of a user interface screen of a digital broadcasting receiver according to an embodiment of the present invention;
FIGS. 8A to 8L illustrate examples of a screen construction based on the screen construction of FIG. 7;
FIG. 9 illustrates a menu layer construction of a digital broadcasting receiver according to an embodiment of the present invention;
FIG. 10 illustrates an example of a construction of an EPG table according to an embodiment of the present invention;
FIGS. 11A and 11B illustrate constructions of a high level and a low level of an EPG table having the construction of FIG. 10;
FIG. 12 illustrates a construction of a broadcasting receiver, including a tuner and a demodulator, of an IP-based digital broadcasting receiver using ESG data as channel information in FIG. 1;
FIG. 13 illustrates a construction of a data processor of an IP-based digital broadcasting receiver using ESG data as channel information in FIG. 1;
FIGS. 14A and 14B illustrate architectures of application interfaces in an IP-based digital broadcasting receiver using ESG data as channel information according to an embodiment of the present invention;
FIG. 15 illustrates a construction of a UI screen of an IP-based digital broadcasting receiver using ESG data as channel information according to an embodiment of the present invention;
FIG. 16A illustrates an example of a stream construction of an IP datagram in an IP-based digital broadcasting receiver using ESG data as channel information, FIG. 16B illustrates a construction of a service data packet stream in the IP datagram, and FIG. 16C illustrates a construction of an ESG data packet stream in the IP datagram;
FIG. 17 is a flowchart illustrating a procedure of acquiring a FLUTE payload in the ESG data packet stream of FIG. 16C;
FIG. 18A illustrates a construction of an ALC header of an ALC/LCT building block in a FLUTE header of the ESC data packet stream of FIG. 16C, and FIG. 18B illustrates a construction of a LCT header being the second field in the ALC header of FIG. 18A;
FIG. 19 illustrates a structure of ESG data in an IP-based digital broadcasting receiver using ESG data as channel information;
FIG. 20 illustrate a procedure of extracting and structuring ESG data from an ESG data packet stream, and editing and structuring the ESG data in a format of EPG data according to an embodiment of the present invention;
FIG. 21 illustrates a structure of ESG data obtained by parsing XML-structured ESG data;
FIG. 22 illustrates a structure of structured EPG data obtained by linking and matching ESG data with a format of EPG data according to an embodiment of the present invention; and
FIG. 23 is a flowchart illustrating a preprocessing process of converting structured ESG data of FIG. 22 into a format of structured EPG data.

### Best Mode for Carrying out the Invention

Hereinafter, preferred embodiments of the present invention will be described in detail with reference to accompanying drawings. Wherever possible, the same reference numerals will be used throughout the drawings to refer to the same or like parts.

In the following description, specific details such as a data structure and a broadcasting display screen of a digital broadcasting receiver are provided for more comprehensive understanding of the present invention. It will be apparent to those skilled in the art that various modifications and variations can be also made in the present invention without the specific details.

In an embodiment of the present invention relating to a user interface for displaying a digital broadcasting signal in a wireless terminal having a function of receiving digital broadcasting, there are provided the user interface and a construction of the digital broadcasting receiver processing the user interface, for selecting a digital broadcasting function by a user, displaying information of a selected broadcasting channel, and displaying program information of respective broadcasting channels depending on a characteristic of a display unit of the wireless terminal. In other words, in an embodiment of the present invention, there are provided the user interface for selecting functions of processing the digital broadcasting, and an electronic program guide (EPG) and electronic service guide (ESG) processing structure for effectively displaying broadcasted program information. In an embodiment of the present invention, structured EPG data is generated in EPG or ESG channel information, and the structured EPG data includes simplified service channel information (Hereinafter, referred to as "first EPG data") and program information of respective service channel (Hereinafter, referred to as "second EPG data"). For the first and second EPG data, necessary channel information are extracted and edited from EPG or ESG data, respectively. Accordingly, when the channel information is displayed, the user of the digital broadcasting receiver can fast search for summarized service channel information, and summarized program information of a specific service channel.

The first EPG data can include service channel information including a category (service type or genre type) and a name (service name) of the respective service channels provided in the digital broadcasting. The second EPG data is provided in number corresponding to the respective service channels. In the second EPG data of one service channel, program (event or content) data broadcasted over the corresponding service channel are stored in a broadcasting start time sequence. Each of program information of the second EPG data includes a broadcasting start time (start time), a broadcasting time (duration), a program name (event name and title field), and a schematic program summary (text char. or synopsis field) of a corresponding program.

Currently, the digital broadcasting is classified into a digital multimedia broadcasting (DMB) and a digital video broadcasting (DVB). The DMB is classified into a terrestrial DMB and a satellite DMB. The DVB is classified into a DVB_T and a DVB_H. In an embodiment of the present invention, a method for displaying the broadcasting program in the DVB_T and DVB_H broadcastings will be described on the assumption that the digital broadcasting receiver is the DVB. In a DVB_T type digital broadcasting signal having a MPEG-2 TS format, packet data of the MPEG-2 TS format are demultiplexed and separated into video, audio, and broadcasting relating information data, and the separated data are processed in set methods, respectively. A DVB_H type digital broadcasting signal has a MPEG TS format including Internet protocol (IP) information. Accordingly, unlike a DVB_T broadcasting receiver, a DVB_H broadcasting receiver processes IP information in the MPEG TS formatted broadcasting signal and then, demultiplexes and separates the packet data of the MPEG TS format into the video, audio, and broadcasting relating information data, and processes the separated data in the set methods, respectively. In an embodiment of the present invention, first, a method for extracting electronic program data (EPG) (Hereinafter, referred to as "broadcasting program data") being broadcasting relating data (Hereinafter, referred to as "broadcasting data") of the DVB_T type digital broadcasting signal and displaying broadcasting relating information will be described Second, a method for extracting electronic service data (ESG) (Hereinafter, referred to as "broadcasting service data") being the broadcasting data of the DVB_H type digital broadcasting signal and displaying broadcasting relating information will be described.

Hereinafter, the present invention will be in detail described with reference to the accompanying drawings.

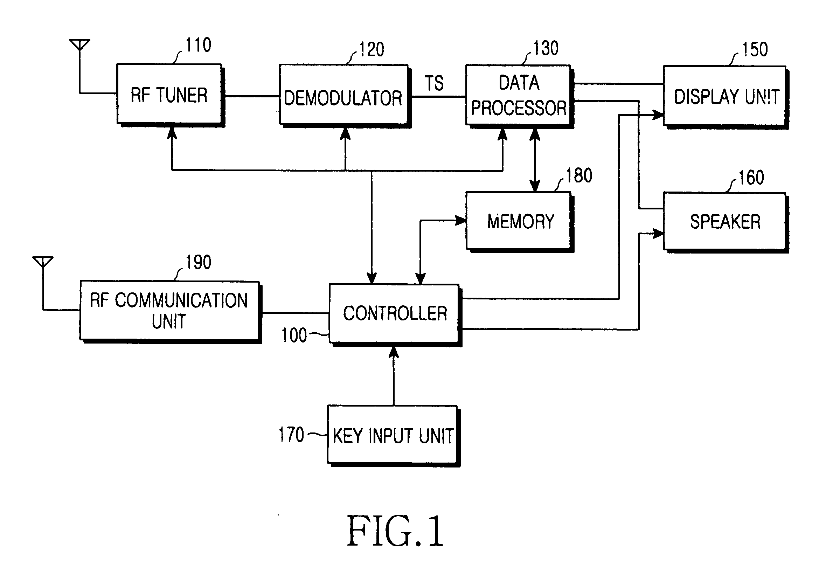

FIG. 1 illustrates a construction of a digital broadcasting receiver. The construction of FIG. 1 includes a radio frequency (RF) tuner 110, a demodulator 120, and a data processor 130 of the digital broadcasting receiver.

Referring to FIG. 1, the digital broadcasting signal can be a very high frequency (VHF) region and/or ultra high frequency (UHF) region signal and/or an L-band signal. If the user selects the broadcasting channel, a controller 100 outputs control data corresponding to the channel selected in the RF tuner 110. The RF tuner 110 generates a RF frequency depending on the channel data, mixes the generated RF frequency with the received broadcasting signal, detects a broadcasting channel signal selected by the user, and applies the detected signal to the demodulator 120. Then, the demodulator 120 receives the broadcasting signal of the selected channel from the RF tuner 110, and demodulates the received broadcasting signal in a set demodulation method. The demodulator 120 can be an orthogonal frequency division multiplexing (OFDM) (or coded orthogonal frequency division multiplexing (COFDM)) demodulator. The RF tuner 110 and the demodulator 120 can be broadcasting receivers for receiving, demodulating, and outputting the signal of the broadcasting channel set by the user under control of the controller 100. It is assumed that the signal outputted from the demodulator 120 is a MPEG-2 transport stream (TS) signal, and this signal is applied to the data processor 130. Then, the data processor 130 demultiplexes the received MPEG-2 TS signal into the video, the audio, and the data, decodes the demultiplexed video and audio data, and outputs the decoded video and audio data as a video signal and an audio signal. The video signal can be a signal of RGB or YUV, and the audio signal is generally outputted in a PCM stereo sound format. The video signal from the data processor 130 is outputted to and displayed on a display unit 150, and the audio signal is applied to and reproduced in a speaker 160.

As described above, the DVB_T and the DVB_H are similar in that a transport data structure is a MPEG-2 TS structure but, since the DVB_H processes IP-based broadcasting data, receivers have a mutually different construction. In a description of a structure of the broadcasting data, the DVB_T has the program data EPG of the broadcasted channel and on contrary, the DVB_H includes not only program data of the broadcasting channel but also multimedia information relating to the broadcasting program and information (e.g. purchase information) for communicating with the broadcasting channel. Accordingly, the ESG being the broadcasting data of the DVB_H has an IP-based transport data format, and includes the program data of the broadcasting channel and a variety of broadcasting relating data. In other words, the ESG data includes a traditional channel service, multimedia data (title image, title video, and title audio) information on contents being program broadcasted through the service channel, and purchase information for performing a function of communicating with a broadcasting station or a broadcasting provider. In case where the ESG data is displayed as the information of the broadcasting channel, programs (e.g. events) of several broadcasting channels (e.g. service channels) can be together displayed depending on a broadcasting time sequence. For example, programs of several broadcasting companies such as a broadcasting program of an "A" broadcasting company and a broadcasting program of a "B" broadcasting company can be displayed in the broadcasting time sequence. It is desirable to add a function of displaying programs of a specific broadcasting company in the broadcasting time sequence. The broadcasting channel information can include a variety of information. In this case, it can take a long time to display the broadcasting channel information. Accordingly, it is desirable to generate and display structured EPG data, which includes summary information (referred to as "first EPG data" in this embodiment of the present invention) of the service channel including the broadcasting companies (service channels) provided from the digital broadcasting receiver and information (referred to as "second EPG data" in this embodiment of the present invention) of names, broadcasting times, and summary information of programs (events) provided from the respective broadcasting companies (service channels).

Accordingly, in an embodiment of the present invention, in the digital broadcasting receiver receiving the EPG data, upon receipt of the EPG data, the first and second EPG data are extracted from the EPG data and the structured EPG data is generated, and upon display of the channel information, the EPG data and the structured EPG data can be selected and displayed as the channel information. Further, in the digital broadcasting receiver receiving the ESG data, upon receipt of the ESG data, the first and second EPG data are extracted from the ESG data and the structured EPG data is generated, and upon display of the channel information, the ESG data and the structured EPG data can be selected and displayed as the channel information.

In the following description, methods for arranging the programs on a broadcasting channel-by-broadcasting channel basis in the EPG and ESG data, and effectively summarizing and displaying information of the programs are provided. In the following description, first, a method for processing the EPG data of the DVB_T will be described and then, a method for processing the ESG data of the DVB_H will be described.

First, a procedure of processing the DVB_T type digital broadcasting signal will be described.

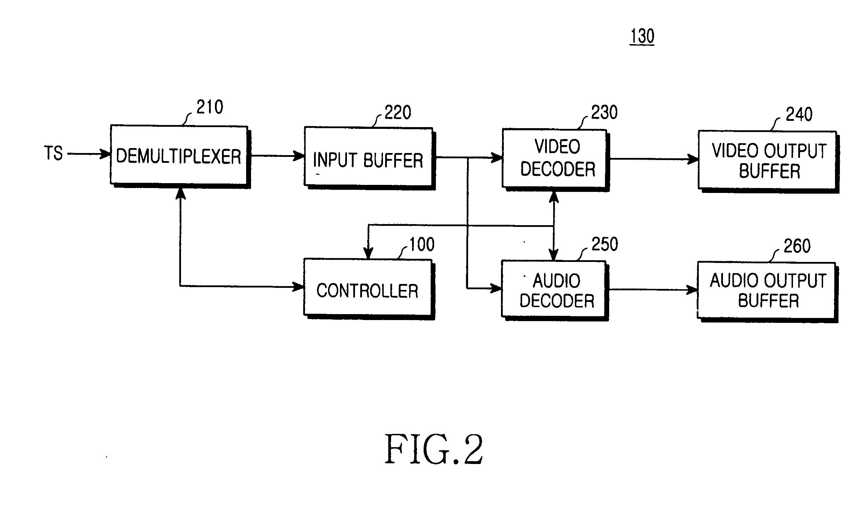

A construction of the data processor 130 of the digital broadcasting receiver will be described FIG. 2 illustrates a construction of the data processor 130.

Referring to FIG. 2, the demultiplexer 210 receives the demodulated MPEG-2 TS data outputted from the demodulator 120, and separates each of the received data into audio, video, and other data. The controller 100 selects and informs of broadcasting information and program identification (PID) to be selected in the demultiplexer 210. Accordingly, the demultiplexer 210 selects target data from a variety of data outputted from the demodulator 120 depending on the selected PID, and separates the selected data into the video and audio. An input buffer 220 is a general queue (capable of being a kind of circular buffer whose construction is similar with a first-in first-out (FIFO) and in which input and output are oppositely performed), and stores real-time demultiplexed data as much as data processed in a video decoder 230 and an audio decoder 250 of a rear stage. The video decoder 230 decodes the video data. It is general that the digital broadcasting receiver receives and converts a video elementary stream (ES) into YUV 4:2:0 data. However, the video data should be outputted adaptively to the display unit (LCD) of the digital broadcasting receiver. Therefore, the video data can be also converted into red, green, and blue (RGB) data. The audio decoder 250 decodes the audio data and, similarly with the decoding of the video data, receives and converts an audio ES into a pulse code modulation (PCM) audio. The converted PCM audio data is stored in the audio output buffer 260, and is outputted adaptive to an output time point

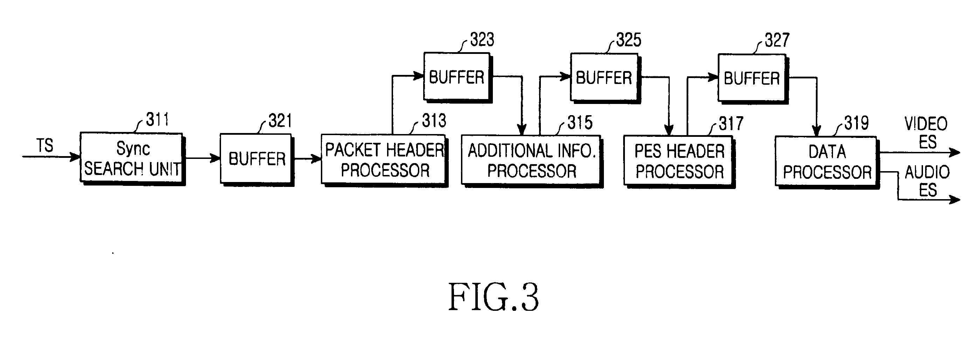

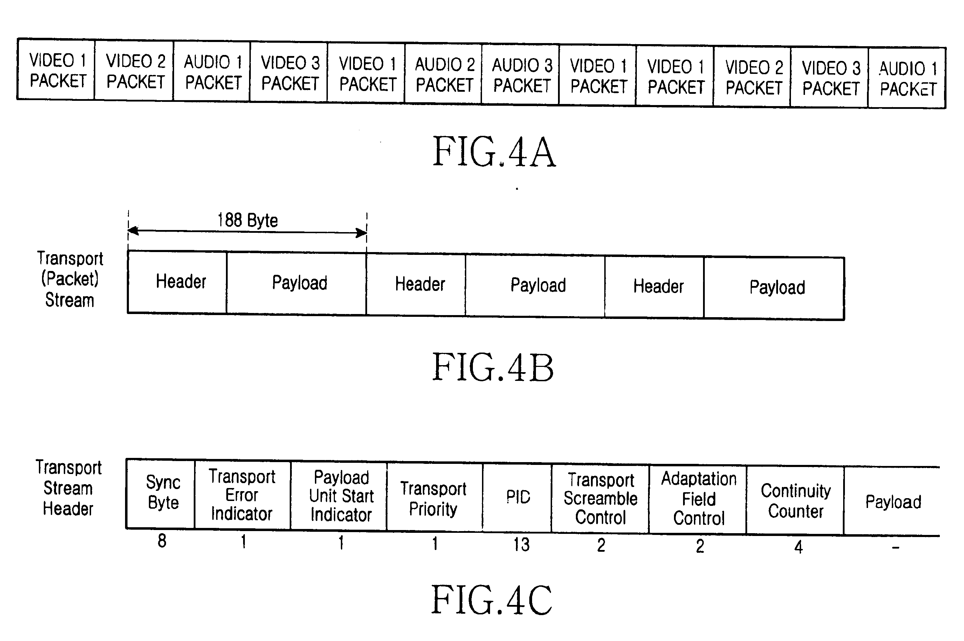

In the digital broadcasting receiver having the above structure, a reception signal can be the TS signal. The TS signal is generated from a multiplexer of a digital broadcasting transmitter. FIG. 3 illustrates a construction of the demultiplexer 210 of FIG. 2, and FIGS. 4A to 4C illustrate packet constructions of the TS signal inputted.

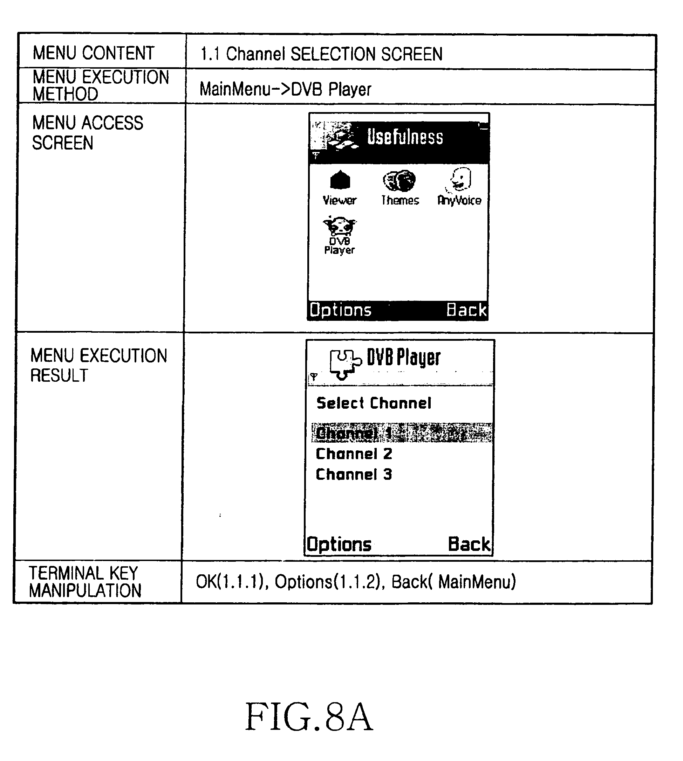

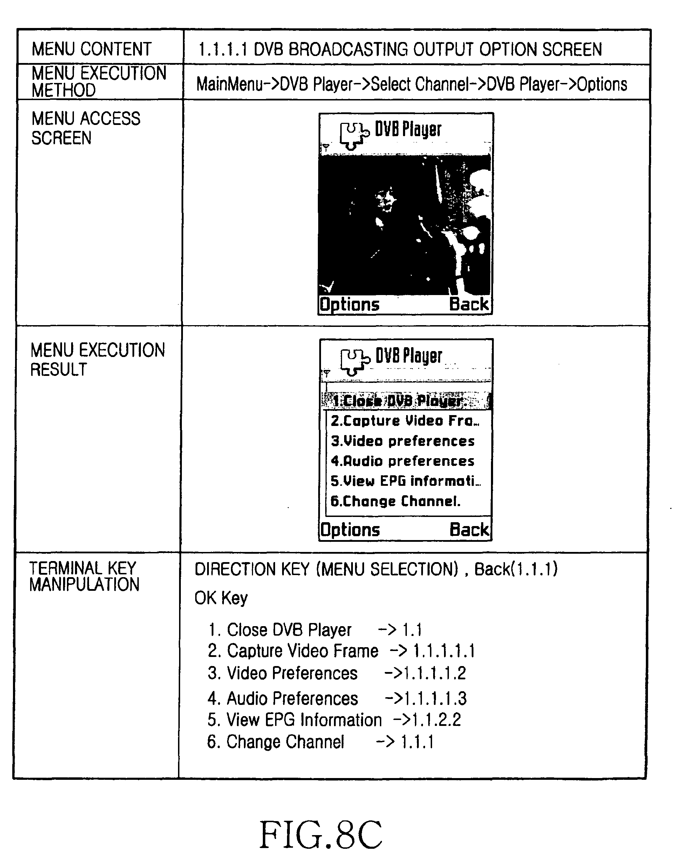

First, with reference to FIGS. 4A to 4C, a structure of the inputted TS signal will be described. The TS signal is a packet stream, and includes video packets and audio packets as shown in FIG. 4A. The video and audio packets are randomly multiplexed and transmitted in the digital broadcasting transmitter. As shown in FIG. 4B, the audio and video packets of FIG. 8A include packet header and payload, and the packet header and payload has 188 bytes. In other words, one packet of data has 188 bytes. As shown in FIG. 8C, the packet header has a size of 4 bytes, and respective parameters of the packet header have a function as in Table 1 below.

**Table 1**

| Class | Description | bits |
|---|---|---|
| Sync byte | Sync byte, 0X47 | 8 |
| Transport error indicator | When error occurs in a current packet: 1 | 1 |
| Payload start indicator | When a current packet is a start of PES: 1 | 1 |
| transport priority | Used in decoder | 1 |
| PID | Identifier identifying a kind of a packet | 13 |
| scrambling control | Setting a scrambling mode | 2 |
| adaptation field control | 01: no additional information/only payload exists | 2 |
| | 10: only additional information exists/no payload | |
| | 11: additional information and payload all exist | |
| | 00: reserve | |
| continuity counter | 4 byte counter, increasing by 1 for the same PID | 4 |

In other words, the packet data starts with a sync byte, and on the basis of the sync byte, one packet is distinguished. A sync search unit of FIG. 3 searches for the inputted packet data and detects the sync byte, and upon detection of the sync byte, buffers subsequently inputted packet data to the buffer 513. Then, the buffer 513 buffers the inputted packet data. The buffer 513 can be a 188-byte buffer having a packet size, a 376-byte (2×188bytes) buffer having an integer of the packet size, a 564-byte (3×188bytes) buffer, or the like. As in the Table 1, the packet headers of 4 bytes are buffered to first to fourth byte positions of the buffer 213.

Then, a packet header processor 313 of FIG. 3 has a construction of processing the packet header shown in FIG.4C and the Table 1, and compares a PID representing stream information of the video/audio signal of the set broadcasting channel with a PID of the TS signal outputted from the buffer 513, decides whether or not to process the received packet, and controls not to process the packet buffered to the buffer 513 when the packet is not the set PID. The PID is used as information for identifying a network information table (NIT), a service description table (SDT), and the audio or video packet of the broadcasting channel in a following packet. The NIT is a frequency channel information table of a digital broadcasting station, and the SDT is a broadcasting channel table provided for a frequency channel. Accordingly, if the user selects a predetermined digital broadcasting channel, the controller 100 first receives the NIT and confirms the frequency channel used by the selected broadcasting channel and then, controls the RF tuner 110 to fix a RF channel to a frequency of the selected broadcasting channel. In the digital broadcasting, a plurality of broadcasting channels are provided to one frequency channel, and the one frequency channel is shared and used by the plurality of broadcasting channels. Accordingly, the SIT includes information for distinguishing the audio and video ESs of the plurality of broadcasting stations using the one RF channel, and the controller 100 decides the audio and video PIDs of a user's desiring broadcasting channel with reference to the SDT. The demultiplexer 210 searches for the PID of the received packets and, only when the searched PID is the decided PID, demultiplexes the inputted packets.

Accordingly, if the packet is buffered to the buffer 321, the packet header processor 313 analyzes the PID of the buffered packet header and, if it is analyzed to be the PID for identifying the NIT or not, transmits packet data of 5^{th} to 188^{th} bytes buffered to the buffer 321, to the controller 100. Then, the controller 100 analyzes the NIT and then, controls the RF tuner 110 to fix the RF channel to the frequency channel of the broadcasting station selected by the user. After that, upon receipt of the SDT identifying PID, the packet header processor 313 also transmits the packets buffered to the buffer 321, to the controller 100. Next, the controller 100 receives the audio and video identifying PIDs of the selected broadcasting station, and decides the received PIDs as target PIDs. After that, the packet header processor 313 analyzes the set target PIDs, and demultiplexes the received packets of the broadcasting station.

If the target PID is decided as described above, upon receipt of the packet, the packet header processor 313 checks whether or not the PID of the packet header is the set PID. If the PID of the buffered packet is checked not to be the set PID, the packet header processor 313 does not perform a process of demultiplxing the inputted packet However, if the PID of the inputted packet header is the set PID, the packet header is analyzed. If the packet buffered to the buffer 513 has the same value as the set target PID, the packet header processor 313 analyzes the packet header and controls operations of processors 315 to 521 depending on adaptation field control.

The packet header processor 313 extracts and processes the packet header from the buffer 321, and outputs remaining data excepting the packet header, to the buffer 323. The adaptation field processor 315 extracts and processes an adaptation field from the buffer 323, and outputs remaining data excepting the adaptation information, to the buffer 325. A PES header processor 417 extracts and processes PES header information from the buffer 325, and outputs remaining information excepting the PES header, to the buffer 327. A data processor 419 has access to data from the buffer 327, and converts the data of the buffer 327 into the video ES or the audio ES depending on the PID information transmitted form the controller 100, and demultiplexes and outputs the converted video ES or audio ES to the corresponding video decoder 230 or the audio decoder 250, respectively.

As above, the demultiplexer 210 analyzes the inputted packets and, when the analyzed packet is the NIT and SDT packets, transmits the buffered packet to the controller 100. When the analyzed packet is payload data of the psket-set PID, the demultiplexer 210 processes the analyzed packets through the corresponding adaptation field processor 315, the PES header processor 317, and the data processor 319, respectively, and demultiplexes and transmits the processed packets to the corresponding data processor 130.

In the digital broadcasting receiver having the above construction, its software structure can be mainly distinguished into an application programming interface layer (Hereinafter, referred to as "API layer") 413, and an application layer 411. The application layer of the digital broadcasting receiver is operated on the basis of a set of the prepared API collected, and controls hardware (DTV driver) 417 of the digital broadcasting receiver and processes an inputted TS stream. Hardware 427 such as a display (LCD), a keypad, and an audio processor is controlled to share hardware of the wireless terminal. A physical layer of the digital broadcasting receiver such as the hardware 417 can be the RF tuner 110, the demodulator 120, and the data processor 130 of FIG. 1, and the hardware 427 can be the key input unit 170, the speaker 160, and the display unit 150.

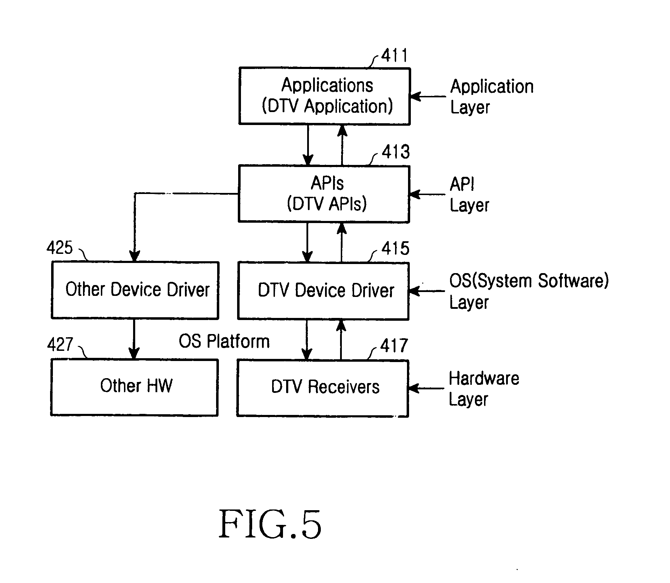

Referring to FIG. 5, the digital broadcasting receiver 417 can be divided into several parts on the basis of network connection. An enhanced broadcasting receiver provides broadcasting where graphic, image, and text are included in the broadcasting signal. Further, a function of a return channel can be supported in other hardware fimctions such as GSM and CDMA. For this, the hardware 417 of the digital broadcasting receiver supports a local viewer (player) and linkage function, a graphic processing function, and an audio-video stream selecting function. An interactive broadcasting receiver including the return channel makes it possible to communicate with a head-end or a server, and makes it possible to add various applications such as an electronic commerce, an electronic mail (e-mail), and a chatting service. The return channel can be used to, in course of viewing program, transmit product purchase information, viewer's opinion on the program, viewer's game information when the program supporting a game, and a viewer's message relating to program viewing or message not relating to the program, to the broadcasting station or the server. The return channel can be a RF communication using a RF communication unit 190.

The application layer 411 provides applications selecting a TV program besides a general TV broadcasting and displaying program information in the digital broadcasting receiver, and it is expected to provide applications of more various formats in the future. The application layer 411 mainly processes a digital broadcast play function (DTV player), an electronic program guide (Hereinafter, referred to as "EPG"), and program-specific applications. First, the digital broadcast play function refers to a function of receiving and playing actual broadcasting video and audio for the TV program of the general DTV broadcasting so that the user can view the TV program. The EPG provides DTV program schedule information to the user, and provides a function of allowing the user to select his/her desiring program and to view the selected program. Through the EPG, a preview screen of a local channel of each broadcasting station can be also provided The program-specific applications provide a specific application adapted to the DTV program format. For example, the program-specific applications can be program for displaying information on a specific player while the user plays game in the TV program or views sports program. In the application, the program-specific applications are ended when the user performs a program change (channel change). Even a chatting program belongs to the program-specific applications.

The API layer 413 provides a function of performing an operation of the application layer 411 operated in the digital broadcasting receiver. As the API layer 413, there are TV program access, service selection, application lifecycle management, and broadcasting data access. First, the TV program access is a function of allowing the application layer 411 to have access to the program information provided to the user, in order to select the service (TV program). The TV program access function is managed by a SI manager to have access to a service information (SI) database (DB). The service selection provides a function of selecting and displaying a user viewing service from a plurality of services, and up to executing application to be used in the corresponding service. Describing the application lifecycle management function, an application lifecycle refers to several status variations from initialization to extinction. The application lifecycle management function is managed by an application manager with reference to an application information table (AIT). The broadcasting data access controls a file system and streaming data of the A/V stream and a separate data stream through the demultiplexer 210.

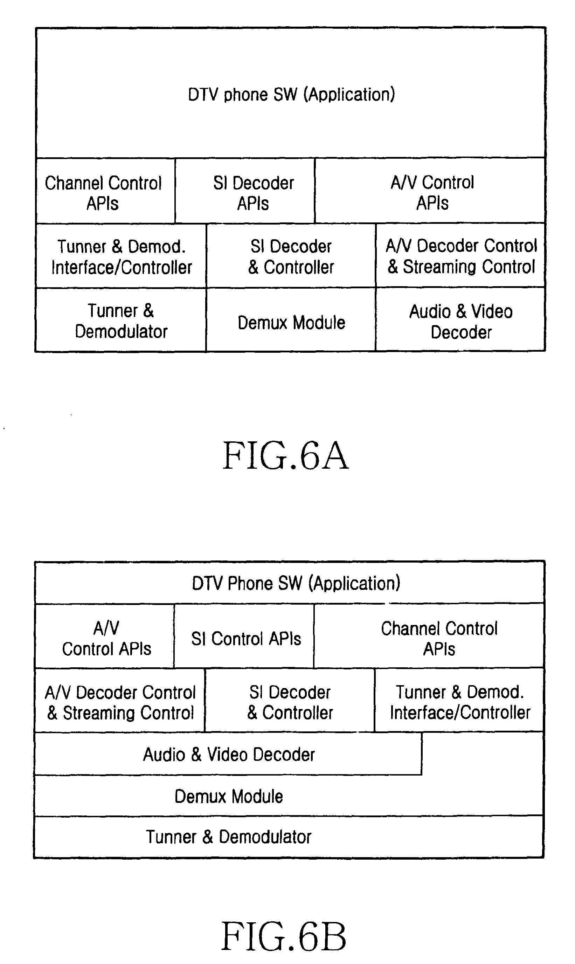

FIGS. 6A and 6B illustrate API architectures of the wireless terminal having the digital broadcasting receiver. FIG. 6A illustrates the API architecture in case where the RF tuner 110, the demodulator 120, and the data processor 130 are embodied in hardware, and FIG. 6B illustrates the API architecture in case where the RF tuner 110 and the demodulator 120 are embodied in hardware, and the data processor 130 is embodied in software.

Referring to FIG. 6A, for each the audio/video decoder or the SI decoder (service information decoder), a controller exists (capable of being a dynamic link library (DLL) format of the wireless terminal), and a manager for managing the tuner is equipped. Each of them is controlled by a class type interface, and the interfaces are collected to provide application programming interfaces (APIs), respectively. Properties of the respective APIs will be described below.

First, channel control APIs will be described. The channel control APIs provide a function of controlling the demultiplexer 210 by a PID value through the turner 110 and initiating the service. Further, the channel control APIs provide a function of searching for a physical channel at a frequency bandwidth and inputting a transport stream of the broadcasting for a desired frequency. Third, service information control APIs are stored in a service information table (SIT), and provide a variety of EPG information and other information on the service. Third, audio & video control APIs provide a function of variously displaying desired audio and video parts through a multimedia application interface or a video streaming interface of an operating system. Further, the audio & video control APIs also provide a function of storing a desired scene as an image file on the air. In the channel control APIs, functions capable of being actually provided are decided depending on performances of the tuner 110 and the demodulator 120.

First, the channel control APIs will be in detail described.

The channel control APIs include a tuner control manager and a tuner control interface. The tuner control interface being an access format of the tuner control manager is provided to control the tuner 110 and the demodulator 120. The demultiplexer 210 is given access and the TS signal divided through the PID is newly matched to a data source format, respectively. In this manner, the tuner 110 is controlled to provide a corresponding physical channel and the demultiplexer 210 is controlled to provide stream data of a corresponding service.

A class of the tuner control manager is generally provided to have the DLL format. The DTV tuner control interface provides a class for having access to the DTV tuner controller and controlling channel relating functions.

Second, the service information control APIs require the SIT for performing a function of updating the EPG relating information and the service information to the SIT through the SI decoder and a function of taking information on a specific portion from the SIT, and a SI controller (SI manager) for the SI decoder. The application embodies an interface portion for using the SI controller.

Third, the audio & video control APIs provide the following functions to process AN streaming. A "VideoStreamPlayerUtility" class has access to a format decoder and a codec portion set for the MPEG-2 TS through a "VideoStreamController" class, and controls a video stream.

As shown, the API architecture of FIG. 6A illustrates a case where the tuner 110, the demodulator 120, and the data processor 130 (including the demultiplexer 210, the video decoder 230, and the audio decoder 250) are provided in hardware. However, as shown in FIG. 6B, in the API architecture, the tuner 110 and the demodulator 120 is provided in hardware, and the data processor 130 can be also provided in software. In other words, as shown in FIG. 6B, a demux module and an audio & video decoder are operated in software. Each module of the demultiplexer, the decoder, and the SI decoder can be provided in hardware or software. Even in the digital broadcasting receiver having the architecture of FIG. 6B, the above API architecture is provided, and the same operation is also performed.

The application of the digital broadcasting receiver refers to an application showing not only a video relating portion such as a broadcasting view function, a video change function, and a service channel change function but also information on a schedule table for each service being a so-called EPG or a broadcasting program event

The functions of the application of the digital broadcasting receiver include an initial screen and channel search function, a broadcasting view and audio/video option setting function, and an EPG information view function.

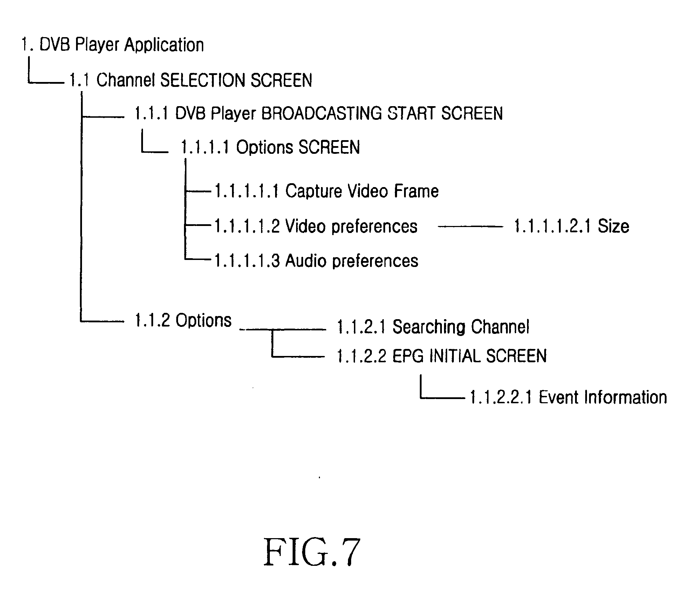

FIG. 7 illustrates a construction of a UI screen of the digital broadcasting receiver according to an embodiment of the present invention, and FIGS. 8A to 8L illustrate examples of the screen construction of FIG. 7. Here, numerals (1, 1.1, 1.1.1, 1.1.2, 1.1.1.1, 1,1,2,1,···.) shown in front of FIG. 7 are the same as numerals shown in FIGS. 8A to 8K.

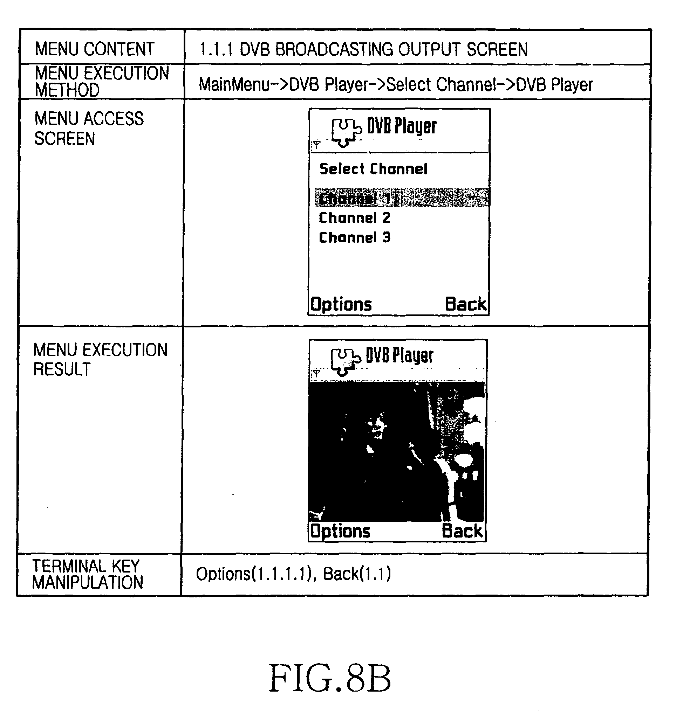

First, the initial screen and channel search function will be described. In first execution, as shown in FIG. 8A, a menu is displayed, and a channel corresponding to a basic frequency is searched. If channel search is again performed, when option and search channel are selected in sequence, the channel is again displayed and the searched service is updated. If the channel is selected, a screen of the channel selected as shown in FIG. 8B is displayed on the display unit 150.

Second, the broadcasting view and audio/video option setting function will be described. If the user selects the channel on a select menu and presses an OK key, the broadcasting is just initiated. As shown in FIG. 8C, while the user views the broadcasting, he/she presses an option key (left soft key of a display screen as shown in FIG. 8C). If so, it is in a pause state, and in this state, the user can change audio and video setting as in Table 2 and then, can keep viewing.

**Table 2**

| | |
|---|---|
| Close DVB Player | Returning to a channel selection screen in a paused state. |
| Capture Video Frame | Capturing and storing a video screen in play as a picture. |
| Video preferences | Controlling a current video display screen. |
| | - brightness, contrast, color |
| | - controllable display size (support only three kinds) |
| | Small(1/2), Normal, Full Screen Size |
| Audio preferences | Up or down a volume of audio in play. Mute (no sound) is also possible |
| View EPG information | Converting into an EPG information screen. Stopping a player itself. |
| | That is, changing an execution program into an EPG program. |
| Change a Channel | Stopping a process of a current stream, and returning to a channel selection screen. |

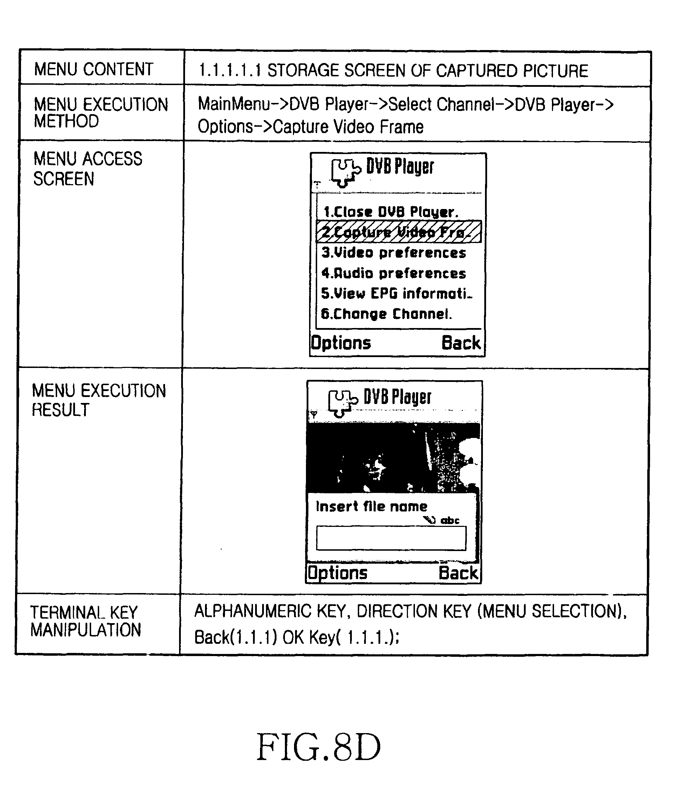

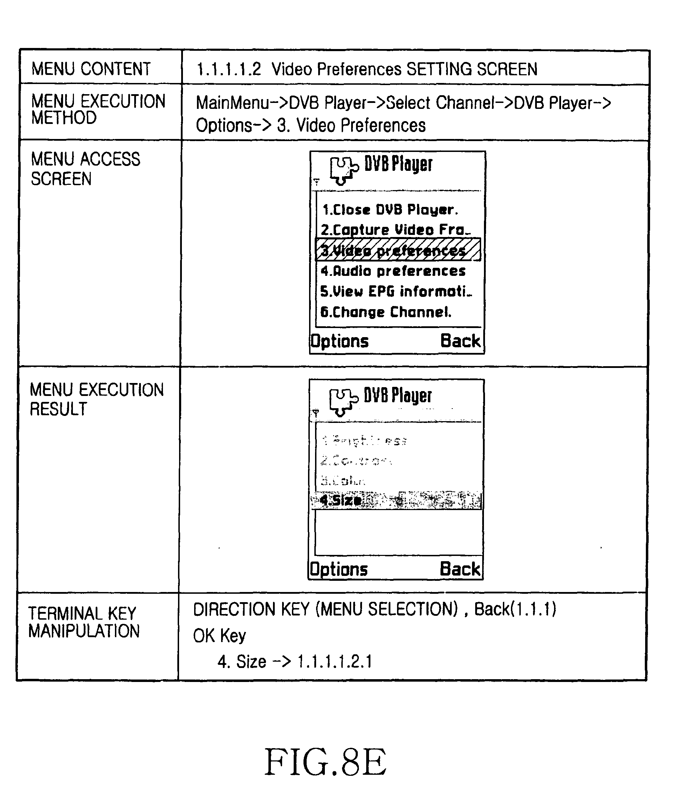

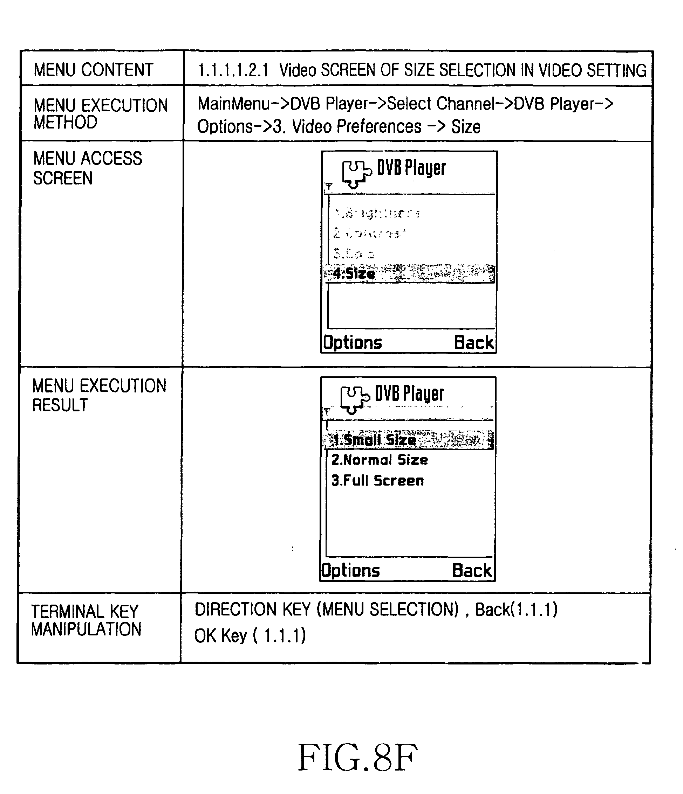

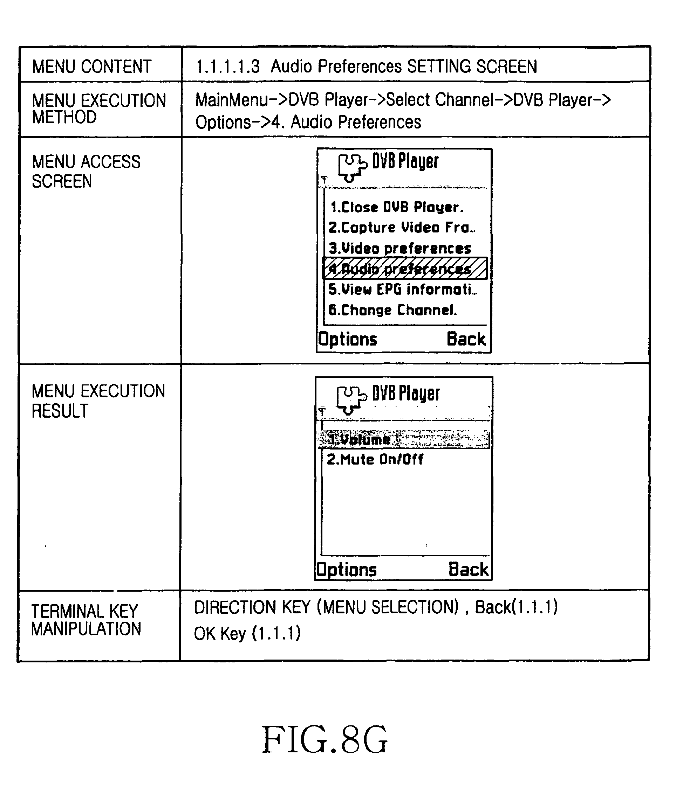

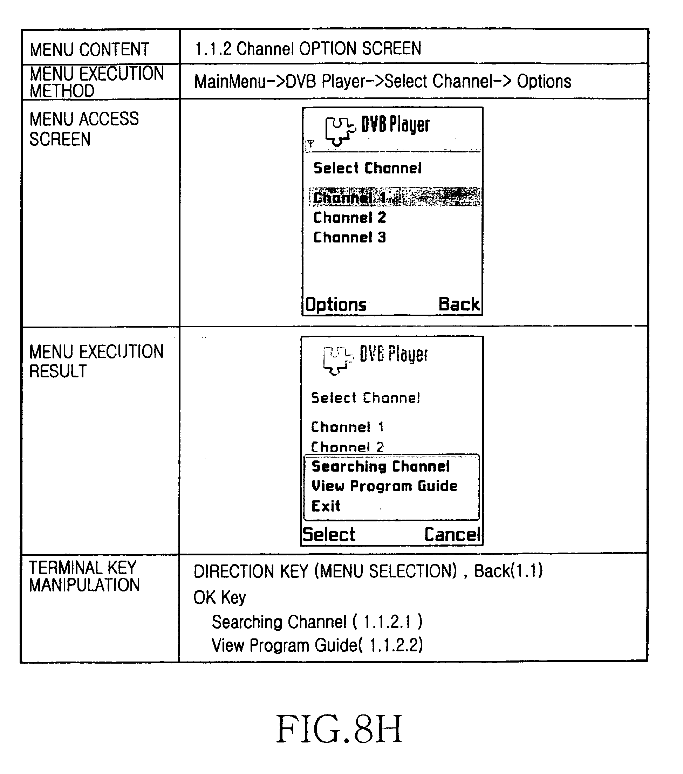

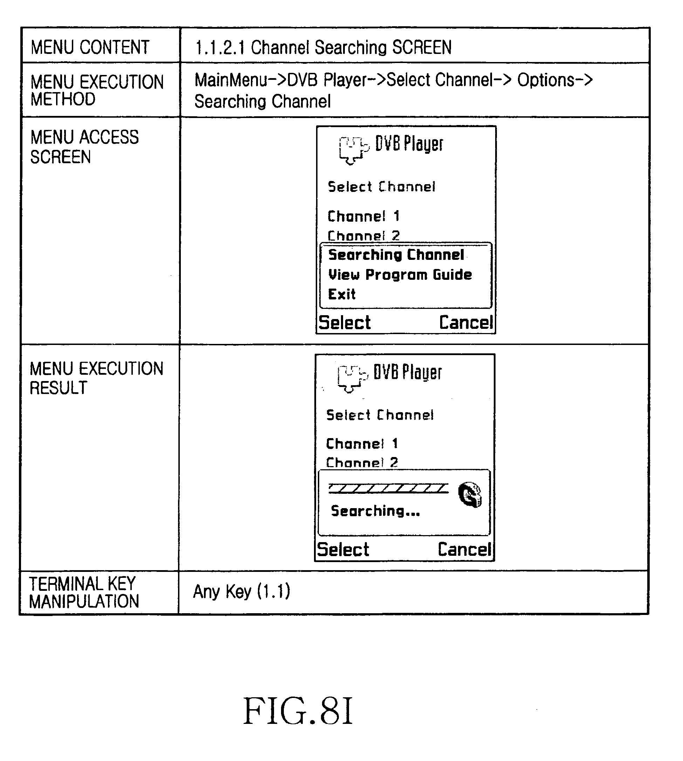

In case where it is intended that a screen is captured and stored as a still image as in the Table 1, "capture video frame" is selected in an option menu as shown in FIG. 8C. Then, as shown in FIG. 8D, the video image displayed on the display unit 150 is displayed as the still image and a window for inputting a file name is displayed. If the file name is inputted, the displayed still image is stored in a memory. In case where it is intended to change the currently displayed screen, "video preferences" is selected in the option menu as shown in FIG. 8C. Then, as shown in FIG. 8E, a menu capable of selecting brightness, contrast, color, and size is displayed, and a desired function is selected in a menu shown in FIG. 8E. In case where the size is selected, as shown in FIG. 8F, a screen size capable of being selected by the user is displayed, and a video having the screen size based on user's selection is displayed on the display unit 150. In case where audio is set, as shown in FIG. 8G, a function of audio volume or mute can be set. The user can change the channel in an option screen shown in FIG. 8C. If the user selects "change a channel" on the option screen, the controller 100 displays a channel select menu as shown FIG. 8H. If a channel is selected from the displayed menu, as shown in FIG. 8I, the selected channel is searched, and the channel search operation is displayed.

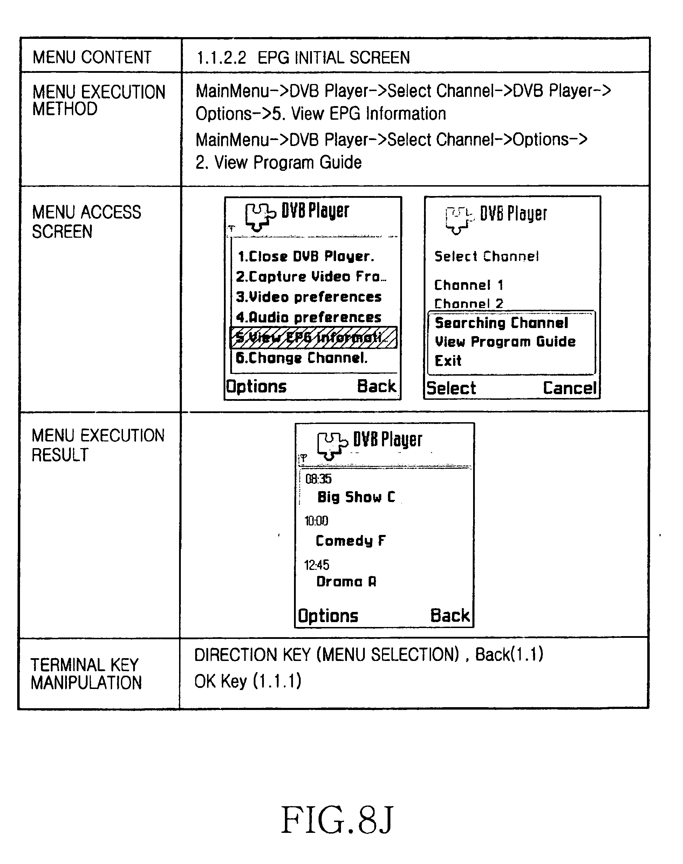

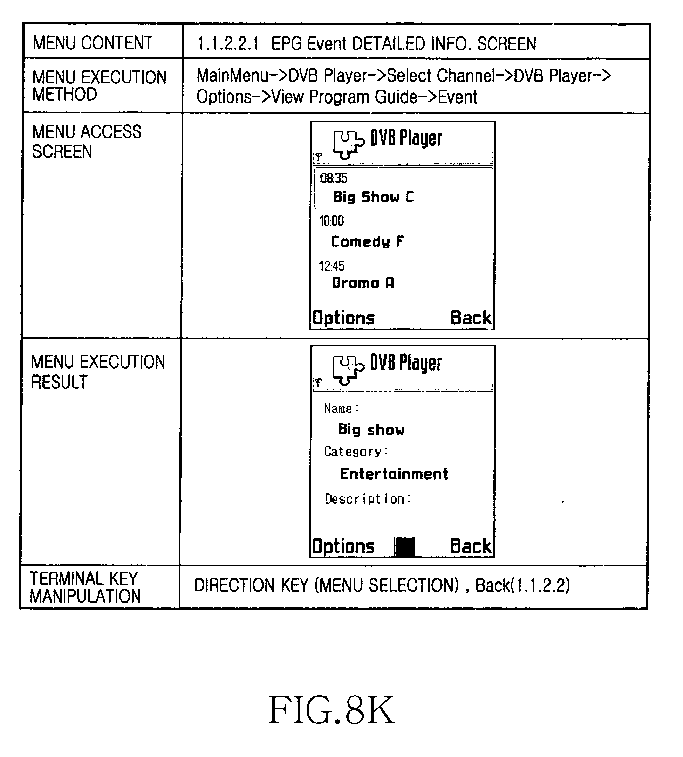

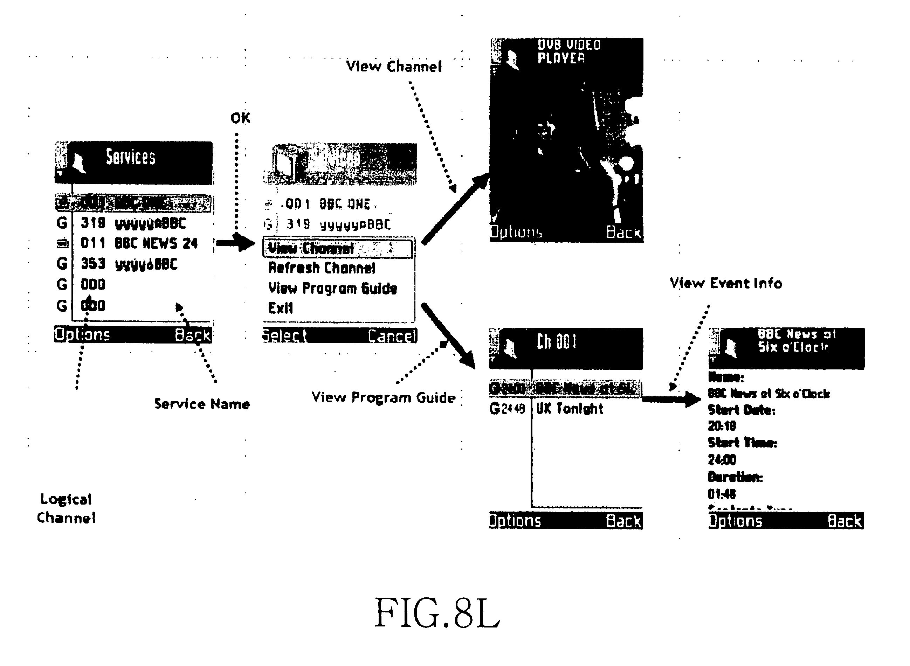

The user can confirm programs of the selected service channel. If the user selects "View EPG information" on the option screen displayed as shown in FIG. 8C, as shown in FIG. 8J, the controller 100 changes an EPG program to an execution program while pausing and converting a played screen into an EPG information display screen, and displays the EPG information display screen as shown in FIG. 8J. If the user selects a desired event in a state of displaying events of the service channel as shown in FIG. 8H, the controller 100 displays detailed information on the selected event as shown in FIG. 8K. In other words, if the user selects an EPG function in a state of displaying the broadcasting of the selected service channel as shown in FIG. 8L, programs of the present selected service channel are displayed. If a specific program is selected, the controller 100 displays detailed information such as a name, a start date, a start time, and a duration time of the selected program.

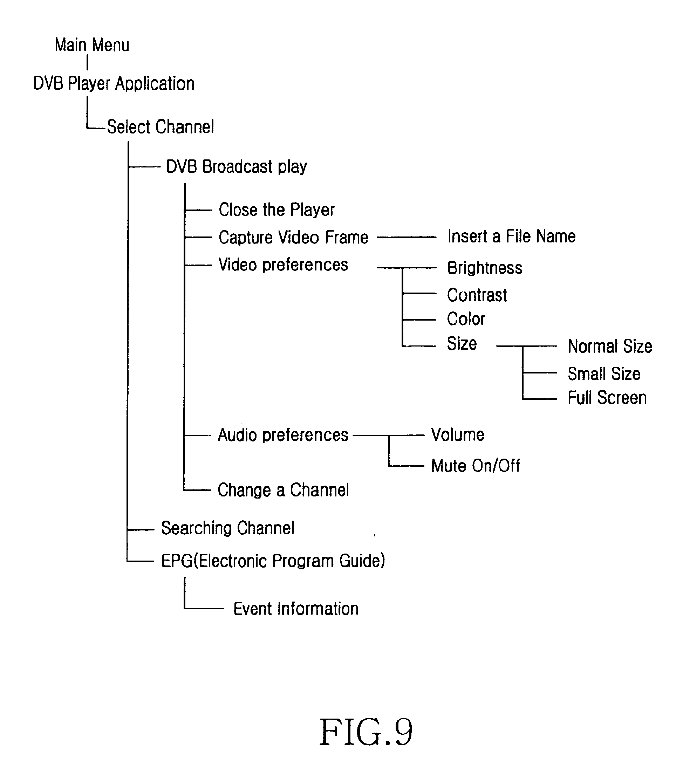

Accordingly, as shown in FIGS. 8A to 8L, menus of applications of the digital broadcasting receiver have structures of FIG. 9. In other words, if the application of the digital broadcasting receiver is selected from a main menu, a channel select menu is displayed. If the channel is selected, the broadcasting of the selected channel is displayed on the screen. In this state, the user can select options of the broadcasting view, or display the channel search function for changing the channel, and the EPG. The option functions of the broadcasting view can provide five options as described above. If an arbitrary option is selected from the five options, downlink menus are displayed to allow the user to set a function of the selected option. If the EPG function is selected, the controller 100 displays the EPG information of the selected channel, and if an arbitrary event of the displayed EPG information is set, the controller 100 displays detailed information on the selected event.

Here, a structure and functions of the EPG information will be in detail described.

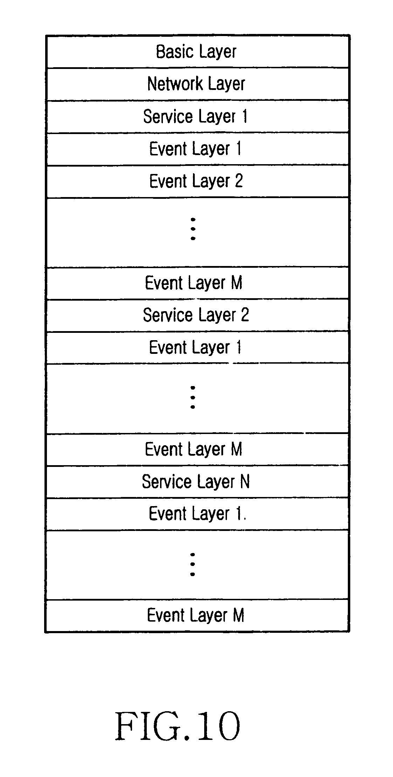

FIG. 10 illustrates an EPG structure according to an embodiment of the present invention. The inventive EPG structure includes a basic layer, a network layer, a service layer, and an event layer. The basic layer includes basic information on the EPG, and has information on a time and a country. The network layer includes information on the physical channel (frequency channel), and the physical channel information is acquired through a network information table (NIT). The event layer includes respective program information of the service channel, and the program information is acquired through an event information table (EIT).

The basis layer, the network layer, and the service layer of FIG. 10 are EPG information of a high level, and the event layer is EPG information of a low level. The network layer is information of the physical channel, and the information of the service layer is information of the service channels using the physical channel. For example, British broadcasting corporation (BBC) uses one physical channel (frequency channel), and the physical channel of the BBC includes BBC1, BBC2, and BBC news channels that are a plurality of service channels. Korean broadcasting system (KBS) uses one physical channel. The service channels using the physical channel of the KBS can be KBS1, KBS2, KBS drama, KBS sports, KSB1 FM, and KBS2 FM. The respective service channels have respective broadcasting schedule and program information. The schedule and program information are event information.

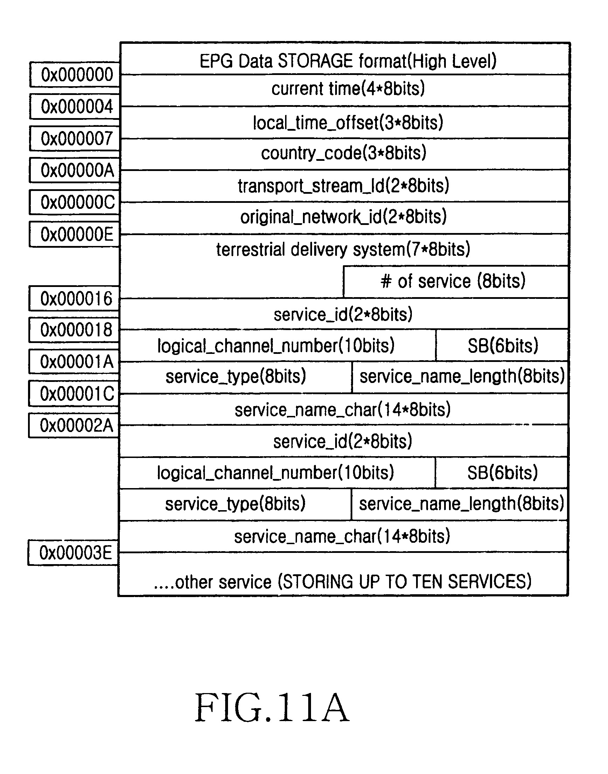

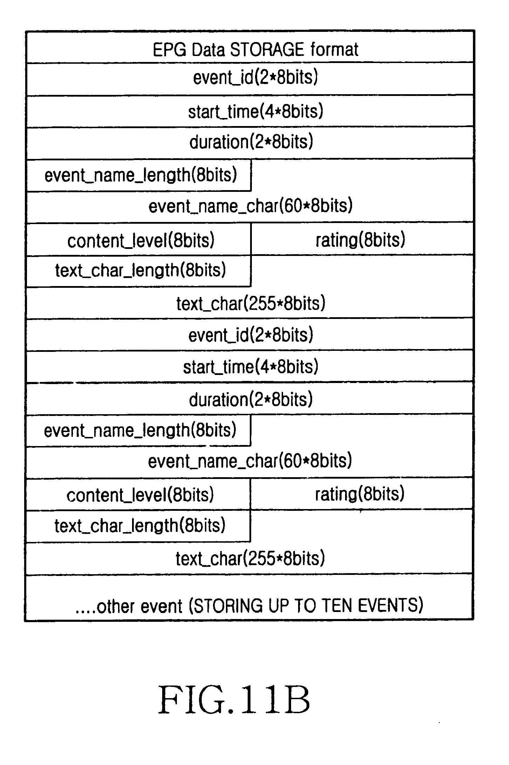

The EPG data includes information of all broadcasting channels and therefore, needs a long time when the EPG data is displayed on the display unit 150. Accordingly, in case where the user confirms a specific program of a specific service channel from the EPG data, a time and a procedure can be complicated. Accordingly, in an embodiment of the present invention, there is provided a method for grouping the service channels of the EPG data on a per-group basis, and editing and displaying program data of the service channels. In an embodiment of the present invention, the service channels using the same physical channels are grouped in one, and information of the grouped service channels are summarized and stored. The summary information of the service channel can be an identification (ID) of the service channel, a logical channel number, a service type, and a service channel name. The program information broadcasted in the respective service channels are summarized and stored. The program data of the service channel can be stored in a time sequence, and the summary information of the program can be the program identification, a program start time, a broadcasting time, a program name, a program category, a viewer's age, and a brief program description. For example, it is assumed that the broadcasting using the same physical channel is the KBS, and it is assumed that the service channels of the KBS are KBS1, KBS2, KBS drama, KBS sports, KBS cinema, KBS foreign broadcasting, KBS FM1, and KBS FM2. In this case, in the wireless terminal, upon receipt of the EPG data, the service channels (KBS1, KBS2, KBS drama, KBS sports, KBS cinema, KBS foreign broadcasting, KBS FM1, and KBS FM2) using the same physical channel frequency in the EPG data are grouped as shown in FIG. 11A, and the summary information of the service channel includes an ID of the respective grouped service channel, a channel number, a service type, and a service channel name. The service channels store the program information broadcasted in a corresponding service channel in a sequence of a broadcasting time as shown in FIG. 11B. The program summary information of the service channel can include the program identification (ID), a program start time, a broadcasting time, a program name, a program category, a viewer's age, and program description data. The structure of FIG. 11B can be constructed in number corresponding to number of the service channels.

Accordingly, upon receipt of the EPG data, in the controller 100, the EPG data is edited and stored in the memory 180 as shown in FIGS. 11A and 11B. In case where the user selects an EPG display function, the summary information of the service channels having structure of FIG. 11A are displayed. If a specific service channel is selected from the displayed summary information, program data of the selected service channel having structure of FIG. 11B can be displayed. After the summarized service channels of FIG. 11A are displayed, the summarized program data of the respective service channels shown in FIG. 11B can be displayed. In this case, it is a state where the information of the service channel and the program information of the respective service channels are summarized and stored and therefore, the controller 110 can display the service channels and the programs of the respective service channels within a short time. The received EPG data can be stored in the memory 180 as it is without change. In this case, the stored EPG data or the program data of FIGS. 11A and 11B according to an embodiment of the present invention can be also selected and displayed. In other words, when the EPG display function is selected, the controller 100 can also display the received EPG data as it is.

As described above, the digital broadcasting receiver according to an embodiment of the present invention has a construction of FIG. 1, and upon receipt of the EPG data, the controller 100 converts the received EPG data into the structured EPG data of FIGS. 11A and 11B and stores the structured EPG data in the memory 180. If the user of the digital broadcasting receiver requests for displaying the channel information, the controller 100 guides for selection of the EPG data or the structured EPG data and displays the selected EPG data as the channel information on the display unit 150.

Accordingly, in a description of the above operation with reference to FIG. 1, the broadcasting receiver including the tuner 110 and the demodulator 120 demodulates the digital broadcasting signal of the broadcasting channel selected by the user under control of the controller 100. The demodulated broadcasting signal becomes a transport stream including packet data of a MPEG-2_TS structure. As described above, the tuner 110 and the demodulator 120 can be a broadcasting receiver. Then, the data processor 130 demultiplexes the demodulated digital broadcasting signal, and separates the EPP data including the channel information and the broadcasting data of the audio and video data. The audio and video decoder within the data processor 130 decodes the audio and video data, respectively. The decoded audio and video data is played through the speaker 160 and the display unit 150, respectively.

The controller 100 receiving the EPG data analyzes the EPG data, generates the summary information on a service channel-by-service channel basis, generates the summary information of the programs of the respective service channels, generates the structured EPG data, and stores the generated EPG data in the memory 180. The decoding of the EPG data can be performed in the controller 100 in the SI decoders of FIGS. 6A and 6B. Subsequently, if the user of the digital broadcasting receiver requests for displaying the channel information, the controller 100 generates the EPG data or the structured EPG data by the user's selection, and displays the generated EPG data on the display unit 150. As described above, in the digital broadcasting receiver according to an embodiment of the present invention, when the channel information is displayed, the EPG data can be displayed by the user's selection and, after the names of the respective service channels are processed in the digital broadcasting receiver, the broadcasting programs of the service channel can be displayed on a broadcasting time-by-broadcasting time basis depending on the user's selection.

The structured EPG data generated by the controller 100 can include first EPG data and second EPG data. The first EPG data is provided as much as number of the service channels and has the respective service channels having service channel information including service channel category and name. The second EPG data has the broadcasted event information of the service channel stored in a sequence of broadcasting time, and has the event information including a broadcasting start time, a broadcasting time, and an event name and summary of a corresponding event.

The first EPG data can include the network layer and the service layers. The network layer stores number of a plurality of service channels using the identifier of the physical channel, broadcasting station information, and the physical channel. The service layers are provided as much as number of the service channels and each stores a service channel identifier, a service channel number, a service category, and service channel names. The second EPG data can include event layers as much as number of programs of a corresponding service channel. The event layers are provided in numbers corresponding to the respective service channels and each includes the event broadcasting start time, the event broadcasting time, the event name, an event category, and the event summary.

When the structured EPG data is displayed on the display unit 150, upon user's request for the channel information, the controller 100 displays a menu for guiding for selecting the channel information intended to be displayed, from the EPG and the structured EPG data, on the display unit 150. After that, if the user selects the EPG or structured EPG data, the controller 100 has access to the channel information selected in the memory 150 and displays the selected channel information on the display unit 150. In case where the structured EPG data is displayed as the channel information, the controller 100 displays the first EPG data on the display unit 150, thereby displaying the service channel summary information including the names of the service channels provided in the digital broadcasting receiver. If the user selects a specific service channel from the service channel summary information, the controller 100 has access to the second EPG data of the selected service channel in the memory 150 and displays the second EPG data on the display unit 150.

The digital broadcasting receiver displaying the EPG and structured EPG data as the channel information can be mounted on the wireless terminal.

FIG. 11A illustrates EPG information structure of a high level of FIG. 10.

Referring to FIG. 11A, first, "current time", "local_time_offset", and "country code" are information of the basic layer. The "current time" denotes a current time of an area where a viewer is positioned, the "local_time_offset" denotes a time offset value representing a difference between the current time and a time of an area where a broadcasting station is positioned, and the "country code" denotes information of an area or a country where the viewer is positioned

Second, "transport_stream_id", "original_network_id", "terrestrial delivery stream", and "number of service" being information of the network layer are information acquired in the NIT. The "transport_stream_id" being an ID of the TS signal can be described by the ID of the NIT, and the "original_network_id" being a network ID of the broadcasting system (originating delivery system) can be a broadcasting station ID. The "terrestrial delivery stream" being the broadcasting station information includes a center frequency of 32 bits, a bandwidth of 3 bits as in Table 3 below, a constellation of 2 bits as in Table 4 below, hierarchy information of 3 bits as in Table 5 below, a code rate as in Table 6 below, a guard interval of 2 bits as in Table 7 below, and a transmission mode of 2 bits as in Table 8 below. The "number of service" denotes number of the service channels included in the physical channel. In other words, in case where the physical channel is the BBC, the "number of service" can be three, and in case of being the KBS, it can be six.

**Table 3**

| Bandwidth | Bandwidth value |
|---|---|
| 000 | 8MHz |
| 001 | 7MHz |
| 010 | 6MHz |
| 011 to 111 | Reserved for future use |

**Table 4**

| Constellation | Constellation characteristics |
|---|---|
| 00 | QPSK |
| 01 | 16-QAM |
| 10 | 64-QAM |
| 11 | Reserved for future use |

**Table 5**

| Hierarchy_information | α value |
|---|---|
| 000 | Non-hierarchical |
| 001 | α=1 |
| 010 | α=2 |
| 011 | α=4 |
| 100 to 111 | Reserved for future use |

**Table 6**

| Code rate | Description |
|---|---|
| 000 | 1/2 |
| 001 | 2/3 |
| 010 | 3/4 |
| 011 | 5/6 |
| 100 | 7/8 |
| 101 to 111 | Reserved for future use |

**Table 7**

| Guard_interval | Guard interval values |
|---|---|
| 00 | 1/32 |
| 01 | 2/16 |
| 10 | 1/8 |
| 11 | 1/4 |

**Table 8**

| Transmission_mode | Description |
|---|---|
| 00 | 2k mode |
| 01 | 8k mode |
| 10 to 11 | Reserved for future use |

Third,"service_id","logical_channel_number","service_type","service_name_lengt h", and "service_name_char." being information of the service layer are obtained by the SDT. The service layer is provided as much as the number of the service channels ("number of service") belonging to the physical channel. In other words, "N" of FIG. 10 is the number of the service channels (number of service). The "service_id" being the identifier of the service channel is uniquely assigned every service channel. The "logical_channel_number" denotes a service channel number. The "service_type" denotes a service category, and has service format coding as in Table 9 below. The "service_name_length" denotes number of characters of a service name, and the "service_name_char. denotes a service channel name. The number of the service layers are provided as much as the number of the service channels included in the NIT information as described above.

**Table 9**

| Service_type | Description |
|---|---|
| 0x00 | Reserved for future use |
| 0x01 | Digital television service |
| 0x02 | Digital radio sound service |
| 0x03 | Teletext service |
| 0x04 | NVOD reference service |
| 0x05 | NVOD time-shifted service |
| 0x06 | Mosaic service |
| ... | ... |
| 0x10 | DVB MHP service |
| 0x11 to 0x7F | Reserved for future use |
| 0x80 to 0xFE | User defined |
| 0xFF | Reserved for future use |

The above structure being the high level information of the EPG includes the current time, the channel number, and the service names, and stores only actual TS in a high level formation. The service layers are provided as much as the number of the service channels belonging to the physical channel, and has the country code for controlling a graphic user interface (GUI).

FIG. 11B illustrates EPG information structure of a low level of FIG. 10. FIG. 11 B illustrates the respective event information provided in the service channel for the respective service layers of FIG. 11A.

Referring to FIG. 11B, "transport_stream, "original_network_id", and "service_id" are information of the physical and service channels for the service channel of the low level. Specific events of the service channel are EPG information for one event of "event_id", "start_time", "duration", "event_name_length", "content_level", "rating", "text_char_length", and "text_char". The "event_id" is the program id, the "start_time" is a time at which the program starts, the "duration" is a time for which the program is broadcasted, the "event_name_length" is number of characters of the program name, the "content_level" is the program category representing news, sports, and drama, and the "rating" denotes a viewable age. The "text_char_length" is number of characters of a summary text of the program, and the "text_char" is a content text of the program. The "text_char" can be a plot in the drama, and can be a corresponding sports summary content such as an event, a team, and a player in the sports. The above event information is provided as much as number of the programs of the corresponding service channel. In the displaying of the event information, the events broadcasted after lapse of a time set by the user can be displayed as much as a set number (M). If the user does not select the time, the event information as much as the number set from the current time are displayed.

As described above, the event information display the event name, the start time, the broadcasting time, the program category, preference, and program summary. The event information are displayed as much as the number set by the user. As described above, in a broadcasting data displaying method according to an embodiment of the present invention, as shown in FIG. 11A, the summary information (channel number and broadcasting channel name) of the service channels provided in the physical channel are displayed. In a method for displaying the broadcasting program information provided in the respective service channels, as shown in FIG. 11B, the program information of the corresponding service are displayed. The respective service channels have the EPG information of the structure of FIG. 11B. Accordingly, if the user selects to display the information of the service channels provided at a specific physical channel frequency, the controller 110 has access to the high EPG information having the structure of FIG. 11A in the memory 180, and displays the high EPG information on the display unit 150. If the user selects to display information of a specific service channel, the controller 110 has access to the low EPG information of the corresponding service channel having the structure of FIG. 11B in the memory 180, and displays the low EPG information on the display unit 150. Accordingly, the user of the wireless terminal can confirm the service channel information of the summarized physical channel and the broadcasting program information of the specific service channel.

Second, a procedure of displaying the broadcasting information of the DVB_H type digital broadcasting receiver will be described.

The EPG data is the broadcasting program data used in a DVB_T type digital broadcasting. The EPG data mainly includes broadcasting relating program information. However, the ESG data used in the DVB_H type digital broadcasting includes a variety of information including multimedia data besides program information. The ESG data provides the channel service information included in the EPG and multimedia data of the program broadcasted over the channel. The multimedia data can be a title image, a title video, and a title audio. The ESG data includes information for providing a bi-directional communication service, and the information can be purchase relating information, information for participating in the broadcasted program, and information for executing a game when the broadcasted program is concurrent with the game.

In case where the ESG data is displayed, the program information of the service channels are arranged and displayed at each broadcasting time zone. Accordingly, it is desirable to display the broadcasting program information of the ESG data in format as in the EPG broadcasting program. For this, in case where the broadcasting program information is displayed from the ESG data, the ESG data should be edited in order to display the service channel and the program information of the service channel. In the following description, a method for editing the ESG data and displaying the broadcasting program information of the respective service channels will be described.

Unlike the EPG data, the ESG data has a data format based on the IP information. Accordingly, a construction of a DVH_H type digital broadcasting receiver for receiving the ESG data will be described. The DVB_H type digital broadcasting receiver has the same construction of FIG. 1. However, the DVB_H type digital broadcasting receiver receives IP-based MPEG-TS data and therefore, the demodulator 120 and the data processor 130 have a different construction from the DVB_T type digital broadcasting receiver. Accordingly, first, constructions of the demodulator 120 and the data processor 130 of the DVB_H type digital broadcasting receiver will be described, and an operation of processing the ESG data will be described.

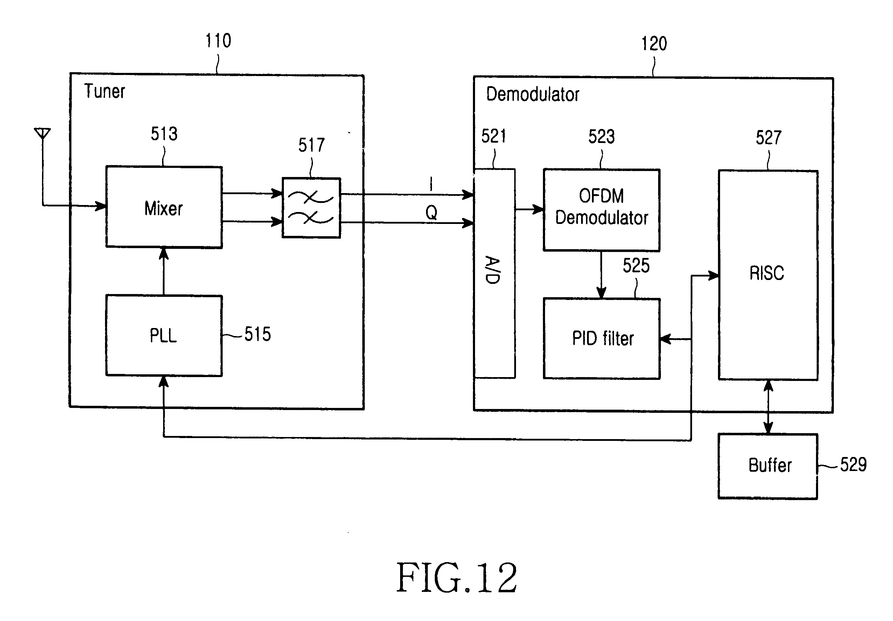

FIG. 12 illustrates the constructions of a tuner 110 and the demodulator 120 of the DVB_H type digital broadcasting receiver.

Referring to FIG. 12, a phase locked loop (PLL) 515 of the tuner 110 generates a frequency for setting a physical frequency of the broadcasting channel under control of a reduced instruction set computer (RISC) 527. A mixer 513 mixes a received broadcasting signal and an output frequency of the PLL 515, and outputs a broadcasting signal of a set physical channel frequency. A filter 517 filters a signal of a set physical channel frequency band. An analog-to-digital converter 521 of the demodulator 520 converts an output signal of the tuner 110 into digital data. An orthogonal frequency division multiplexing (OFDM) demodulator 523 demodulates a modulated broadcasting signal. A PID filter 525 filters a signal having a PID of the set broadcasting channel from the demodulated signal. The signal outputted from the PID filter 525 is buffered in a buffer 529 through the RISC 527. The RISC 527 controls a time slicing operation to reduce power consumption of the digital broadcasting receiver, and performs a multi-protocol encapsulation forward error correction (MPE-FEC) function for correcting error generated in reception and improving a reception rate. Data buffered in the buffer 529 is an IP datagram.

The tuner 110 employs a direct conversion type tuner. The tuner 110 selects the broadcasting signal having the frequency of the set broadcasting channel, and converts the selected broadcasting signal into an in-phase and quadrature (I/Q) signal The demodulator 120 converts an output of the tuner 110 into digital data, and demodulates the digital data in an OFDM method. The demodulated data has the MPEG-2 TS structure, and data having the PID of the set broadcasting channel is filtered. The PID filtered data has the time slicing and MPE-FEC function. The time slicing is a technique adopted to reduce the power consumption of the hardware in the digital broadcasting receiver where, only when desired broadcasting data is received, the hardware is operated and, when the desired broadcasting data is received, the hardware is off. Accordingly, if the time slicing technique is used, only the desired broadcasting PID data is outputted. Accordingly, in the MPEG-2 TS demultiplexing process performed during the PID filtering process, the signal of the user's set broadcasting channel of several broadcasting channels using the same physical channel frequency is demultiplexed. The MPEG-2 TS demultiplexing process is differently operated from the MPEG-2 TS demultiplexing performed in the multi data processor 130. If the MPEG-2 TS demultiplexing is performed, a FEC table including only MPE table and parity information can be acquired. The MPE table and the FEC table are used to perform the MPE-FEC function.

Accordingly, in the RISC 527, the IP datagram being data obtained by performing the MPEG-2 TS demultiplexing and MPE-FEC processes is transmitted to the multi data processor 130, so that the broadcasting is played.

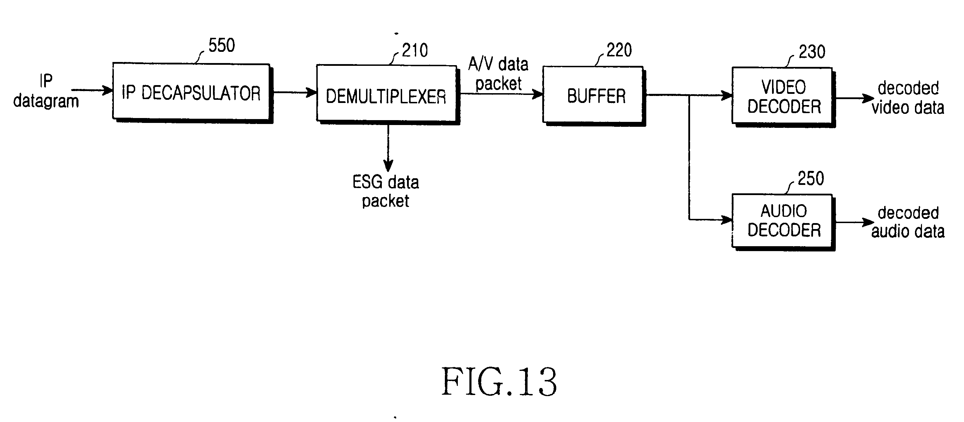

Then, after the data processor 130 receives the IP datagram from the demodulator 120 and decapsulates the IP information, it demultiplexes the decapsulated IP information and processes the audio and video data. FIG. 13 illustrates a construction of the data processor 130.

Referring to FIG. 13, an IP decapsulator 550 processes the IP information in the IP datagram outputted from the demodulator 120, and generates a service data packet stream and an ESG data packet stream. A payload of the service data packet stream is transmitted to the demultiplexer 210, and the ESG data packet stream is applied to the controller 100. The payload of the service data packet stream applied to the demultiplexer 210 is the same data as that of FIG. 4A and is provided in a packet format. Accordingly, in a subsequent process operation after the demultiplexer 210, the same process as that of FIG. 2 is performed. In other words, in the service data packet stream, the IP information is decapsulated and audio and video packets are processed using the same construction and method as the DVB_T. However, in the ESG data packet stream, a process is performed in a method different from the EPG. A method for processing the ESG data will be described later.

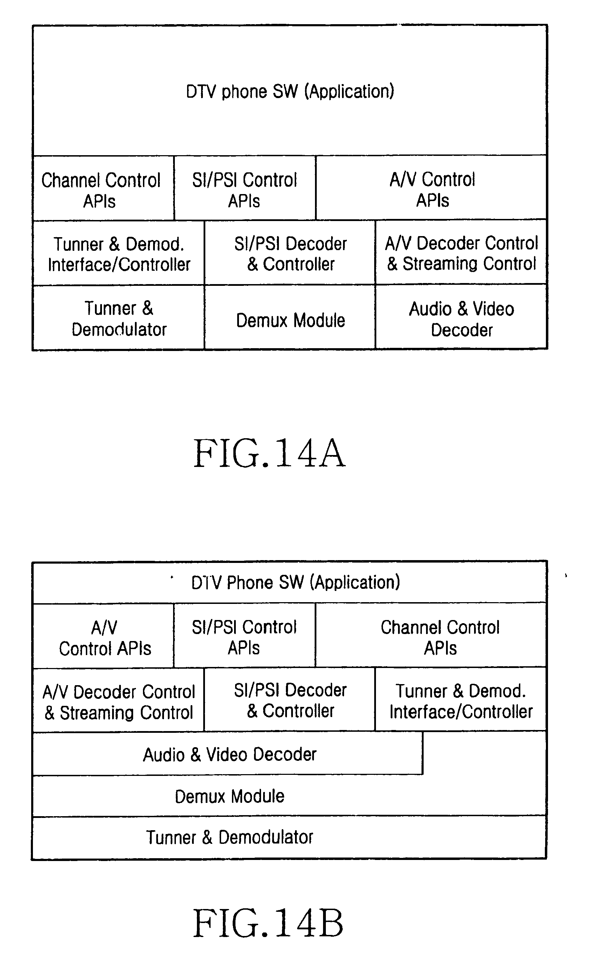

FIGS. 14A and 14B illustrate structures of application interfaces in the DVB_H type digital broadcasting receiver according to an embodiment of the present invention. FIGS. 14A and 14B illustrate the API architectures of the wireless terminal including the digital broadcasting receiver. FIG. 14A illustrates the API structure in case where the RF tuner 110, the demodulator 120, and the data processor 130 are embodied in hardware, and FIG. 14B illustrates the API architecture in case where the RF tuner 110 and the demodulator 120 are embodied in hardware, and the data processor 130 is embodied in software. Excepting for PSI/SI decoder & controller, FIGS. 14A and 14B are the same in API architecture as FIGS. 6A and 6B, and is the same even in operation. The PSI/SI decoder & controller having constructions of processing the EPG data will be in detail described below.

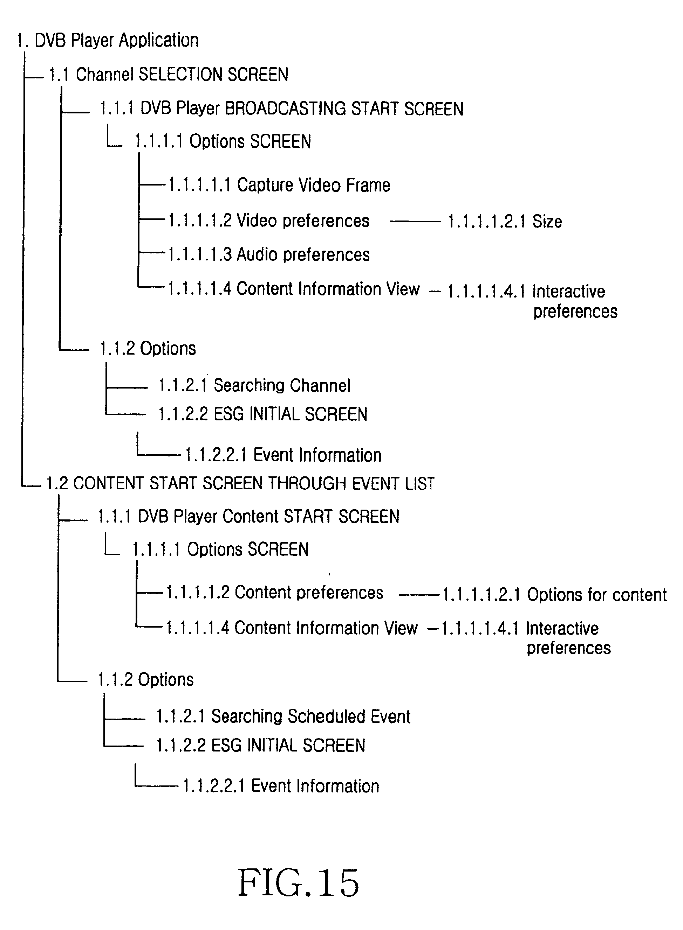

The application of the digital broadcasting receiver includes the initial screen and channel search function, the broadcasting view and audio/video option setting function, and the ESG information viewing function. FIG. 15 illustrates a construction of a UI screen of the DVB_H type digital broadcasting receiver according to an embodiment of the present invention.

Referring to FIG. 15, the ESG provides a method for providing a service being the traditional channel information and a method for providing a schedule event (ScheduleEvent) being content (traditional program) information based on time for channel selection. Accordingly, the digital broadcasting receiver can provide all of two methods for the channel selection.

In the ESG, a channel of a traditional television is expressed as a term "service". Information on the service is transmitted through the ESG and, the ESG can lead the user to the channel selection. This method employs a UI construction for the users familiar with the traditional channel selection, and can reduce confusion occurring when the users who have selected the channel through the EPG informatized on the basis of the channel select the broadcasting through the ESG informatized on the basis of event of the program (content). The information on the service used to lead to the channel selection can be "ServiceNumber", "ServiceName", "ServiceLogo", and "ServiceProvider", and each of them refers to a channel number, a channel name, a representative logo image of the channel, and a channel provider. This information can vary depending on a version of the received ESG. The user can select the channel using the above information, and view the on-air program (content) of the selected channel.

In the UI construction for the channel selection using the service of the digital broadcasting receiver (service of DVB-H player application), there are provided two options. One of them is an option in the channel selection, and the other is an option of a broadcasting start screen. The former option in the channel selection has "Searching channel" for listing information of the broadcasting channels (services) transmitted through the broadcasting stream, so that the user can view the listed information, and has a function of allowing the user to view "Event Information" being a broadcasting time table of the traditional TV in the selected channel. The latter option of the broadcasting start screen provides a function of changing various setting relating to the program (content) under view or displaying detailed information on the program. "Capture Video Frame" performs a function of capturing a currently displayed screen and storing the captured screen as an image file, "Video Preference" and "Audio Preference" perform a function of changing a basic setting for audio/video, and "Content Information View" performs a function of displaying the detailed information on the program under view.

As another method for the channel selection shown as in 12 of FIG. 15, there is a method using an event list including time-based scheduling information of the program (content). The program (content) refers to the traditional TV program, and the event list can include schedule information on other type content, not the TV program. The content can be another ESG, Java Applet, and WAP page, and is operated in determined schedule information. Accordingly, in selection of the content based on the method using the event list, an option of a content start screen should be different from that of the broadcasting start screen using the service information. In other words, the "Capture Video Frame", the "Video Preferences", and the "Audio Preferences" should be changed into "Content Preferences". The "Content Preferences" has an option specialized to a corresponding content, and the specialized option is decided depending on a content type. For example, when the content type is the A/V (broadcasting program), an option such as 1.1.1 will be applied, and when the content type is the Java Applet, an option for execution and end of the Java Applet will be applied. Even in other content types, a necessary option can be supported depending on the respective content types.

Hereinafter, a procedure for, in the DVB_H digital broadcasting receiver, receiving the ESG data packet stream, processing an IP header, editing the broadcasting program data included in the ESG data into the program of the service channel, and displaying the edited program data will be in detail described.

An operation of the IP decapsulator 550 of FIG. 13 will be described.

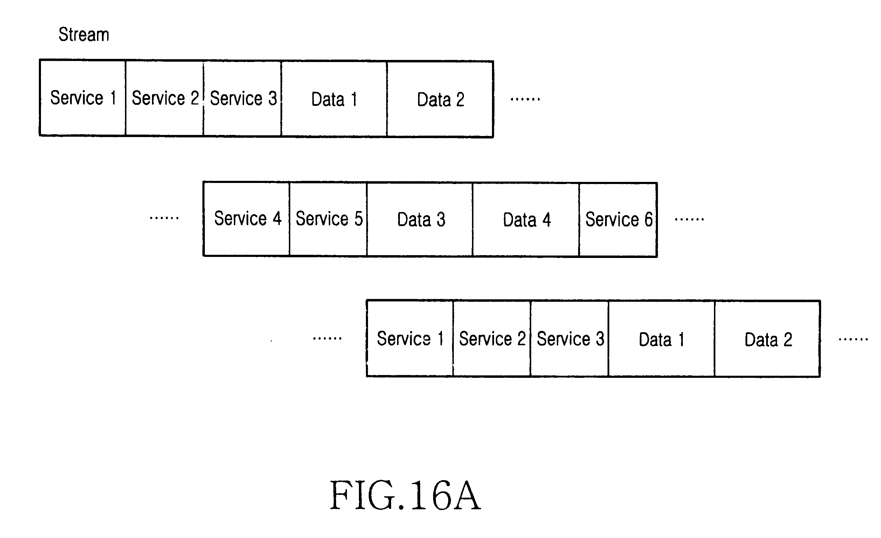

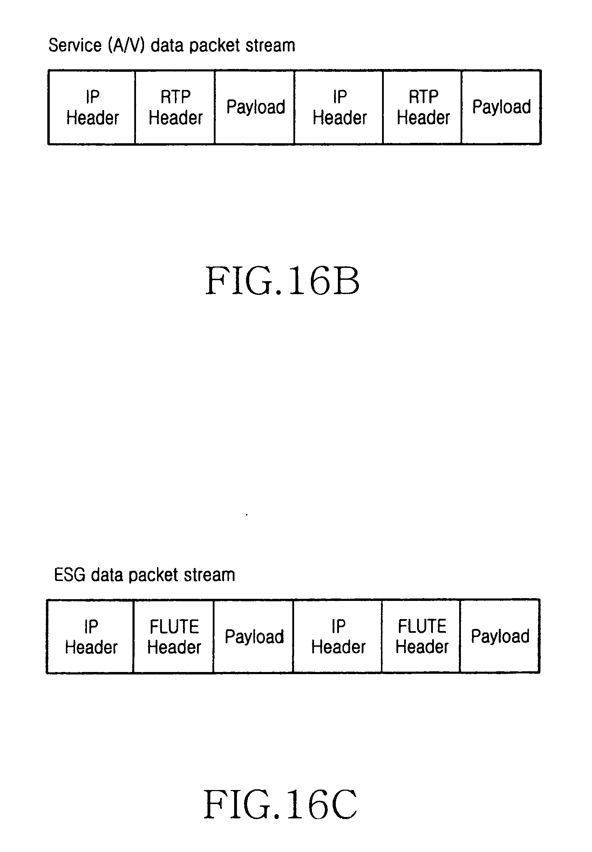

FIG. 16A exemplifies a stream construction of the IP datagram, FIG. 16B illustrates a structure of the service data packet stream in the IP datagram, and FIG. 16C illustrates a structure of the ESG data packet stream in the IP datagram. In the structure of the ESG data packet stream shown in FIG. 16C, a FLUTE header includes an asynchronous layered coding/layered coding transport (ALC/LCT) building block header, and the payload can be XML-structure FDT or real data. Accordingly, the ESG data are stored in the payload region.

Therefore, the IP decapculator 550 receiving the above IP datagram receives the IP datagram shown in FIG. 16A. The service data packet stream of FIG. 16B with the IP header eliminated is transmitted to the demultiplexer (TS demux) 210 and, the ESG data packet stream of FIG.16C with the IP header eliminated is transmitted to the controller 100.

A procedure of eliminating the IP information in the IP decapsulator 210 will be described. The IP decapsulator 550 confirms a version of the received IP datagram, and confirms whether or not a current protocol includes a user datagram protocol (UDP) or a transmission control protocol/Internet protocol (TCP/IP). If the current protocol does not include the UDP or the TCP/IP, the IP datagram is not a desired datagram and therefore, is not processed. Otherwise, the payloads are extracted from the IP datagram, and a datagram is again created. If the UPD header is eliminated, a desired real time transport protocol (RTP) or the MPEG-2 TS data is extracted.

The IP datagram outputted from the demodulator 120 is inputted in a format of FIG. 16A, and the IP datagrams can have the structures of FIG. 16B or 16C, respectively. Accordingly, upon receipt of the IP datagram, the IP decapsulator 550 analyzes the IP header, and confirms the IP version and the used protocol. The IP version can be an IP version 6 and an IP version 4. After that, in the IP version 6, the IP decapculator 210 parses a header of the IP version 6 and searches for the protocol, and in the IP version 4, the IP decapsulator 210 parses a header of the IP version 4 and searches for the protocol. The protocol can employ the UDP and the TCP/IP. Accordingly, after the confirming of the protocol, the IP decapsulator 550 confirms a field of the IP header and acquires a payload length. Next, after extracting of the payload datagram, the IP decapsulator 550 eliminates the UDP or TCP/IP header, and extracts the TS stream.

In an embodiment of the present invention, it is assumed that, as described above, the ESG data packet stream is processed in software. Accordingly, the IP decapsulator 111 transmits the ESG data packet stream to the controller 100. In the service data packet stream, the IP decapsulator 111 transmits a RTP header to the controller 100, and transmits the payload portion to the demultiplexer 210. The payload information transmitted to the demultiplexer 210 can be a packet stream having the MPEG-2 TS structure.

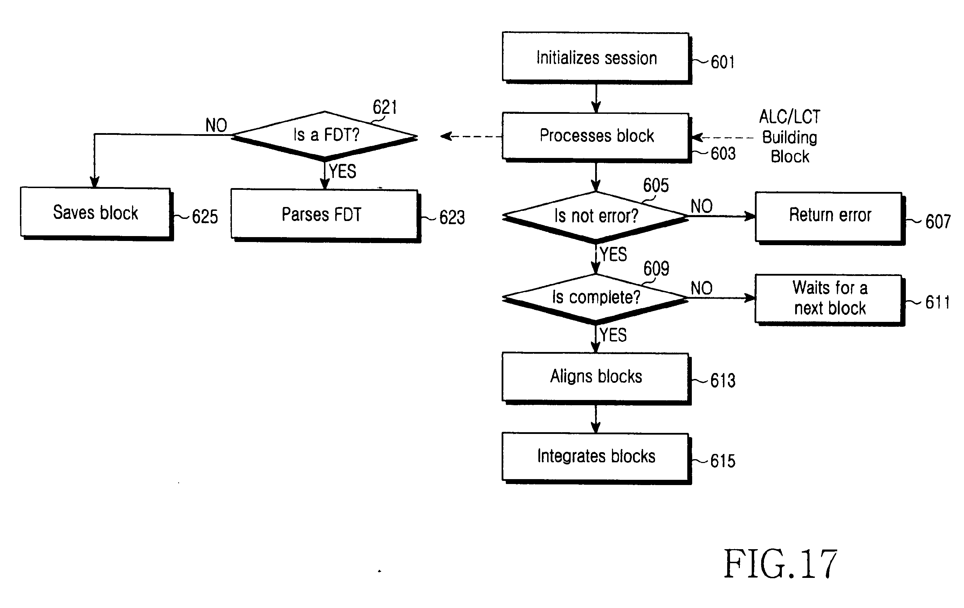

FIG. 17 is a flowchart illustrating a procedure of acquiring the FLUTE payload in the ESG data packet stream of FIG. 16C. In an embodiment of the present invention, it is assumed that, as described above, editing of the ESG data and the FLUTE header of the ESG data packet stream is processed in the controller 100. The processing of the ESG data packet stream of the controller 100 is performed in the PSD/SI decoder & controller of FIG. 14A or 14B. In other words, the PSI/SI decoder of the controller 100 decodes the ESG data packet stream. The PSI/SI decoder can be provided in hardware or software like the audio/video decoder.

Referring to FIG. 17, the ESG data is acquired through the FLUTE payload.

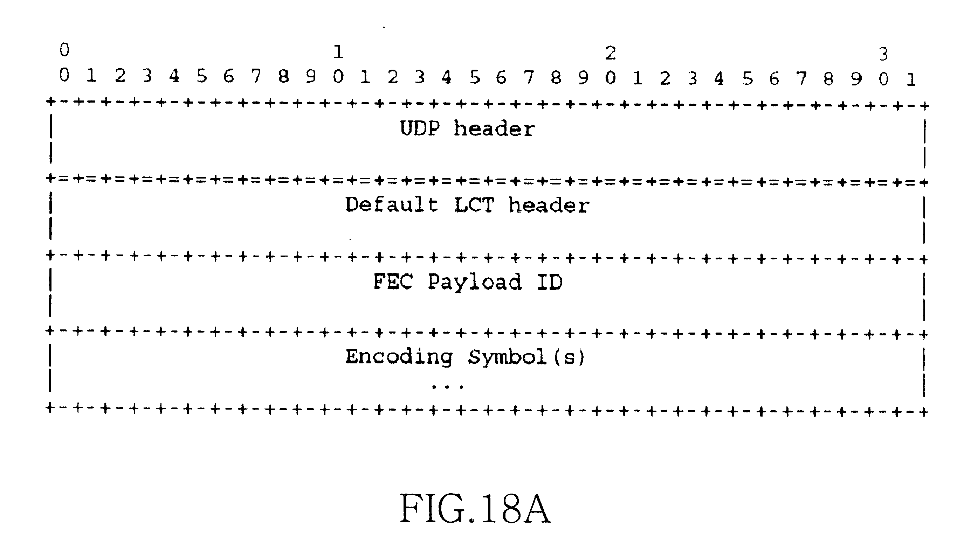

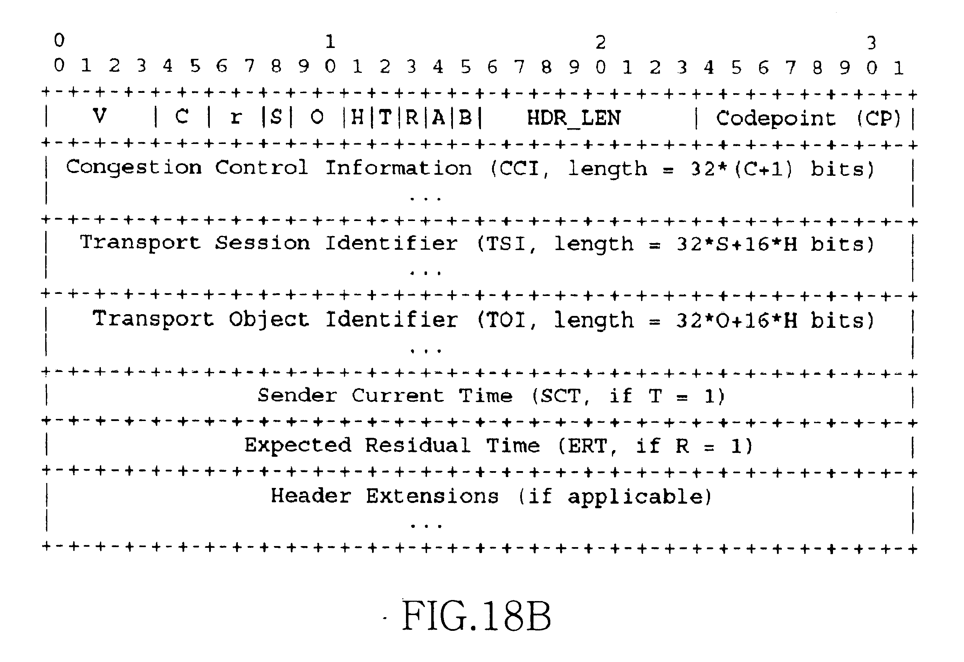

The controller 100 performs a session initialization operation in Step 601. After that, if the IP decapsulator 550 receives the ALC/LCT building block of the FLUTE header, the controller 100 processes the ALC/LCT building block received in Step 603. An ALC header of the ALC/LCT building block is provided to have a construction of FIG. 18A. In the ALC header, a LCT header being a second field is provided to have a construction of FIG. 18B. All determination processes of FIG. 17 are made through a value set to the LCT header of FIG. 18B. In a description of a construction of the LCT header of FIG. 18B, a RFC3451 being a definition of each value of the header is confirmed.

In Step 603, the controller 100 processes the ALC/LCT building block with reference to the LCT header having the construction of FIG. 18B in the ALC header of FIG. 18A. In Step 621, the controller 100 checks whether or not the ALC/LCT building block is a file delivery table (FDT). If the ALC/LCT building block is the FDT, in Step 623, the controller 623 parses the FDT and otherwise, in Step 625, the controller 623 saves the processed block. The controller 100 determines whether or not the ALC/LCT building block is the FDT with reference to a transport object identifier (TOI) field that is a fourth layer of the LCT header having the construction of FIG. 18B. When the TOI field has a value of zero, the controller 100 determines that the ALC/LCT building block is the FDT. The FDT includes individual information on transmitted files, and the individual information includes a file name, a path, and a file type. After processing of the ALC/LCT building block, in Step 605, the controller 100 checks whether or not an error occurs. Upon occurrence of the error, in Step 607, the controller 100 error-processes the ALC/LCT building block. However, if it is determined to be normal in Step 605, in Step 609, the controller 100 checks whether or not to receive all ALC/LCT building blocks and otherwise, in Step 611, the controller 100 waits for receipt of a next block. If the above steps are repeated and all ALC/LCT building blocks are received, in Step 609, the controller 100 detects the receipt of the blocks, aligns the processed blocks and then, in Step 615, integrates the aligned blocks.

As described above, the controller 100 acquires the ESG data from the ESG data packet stream. After that, the controller 100 can display data of such as the broadcasting program using the acquired ESG data.

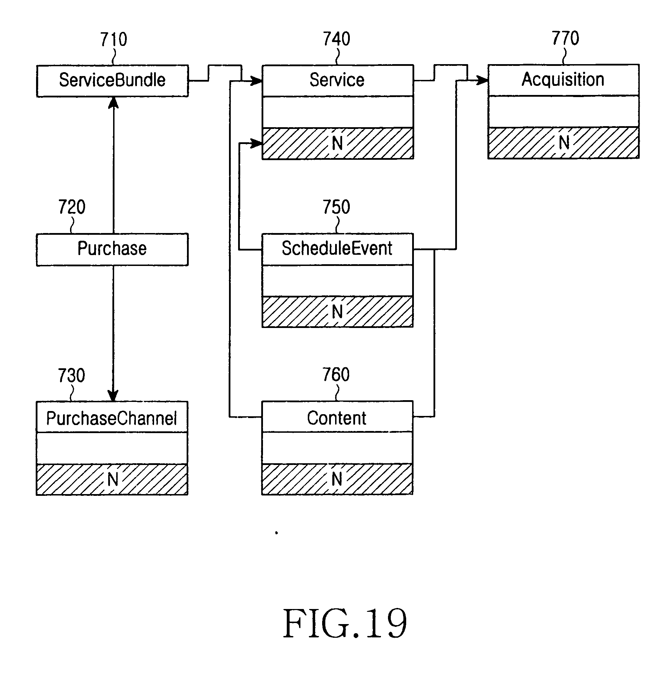

FIG. 19 illustrates an ESG structure.

Referring to FIG. 19, the ESG includes seven fragments. The fragments have a mutual linkage relationship, and have a structure capable of referring to data. One schedule event 750 indicates one service 740, and a list of an acquisition 770 and a list of content 760 for the one service. One service indicates a list of the acquisition 770 corresponding to the service. One content 760 indicates a list of the self-belonging service 740. One service bundle 710 indicates a list of the service 740, and one purchase 720 indicates a list of one service bundle 710 and purchase channel 730. Accordingly, as shown in FIG. 19, the respective fragments 710 to 770 have the mutual linkage relationship. Table 10 below illustrates an example of the contents fragment 760 of the ESG having the structure of FIG. 19.

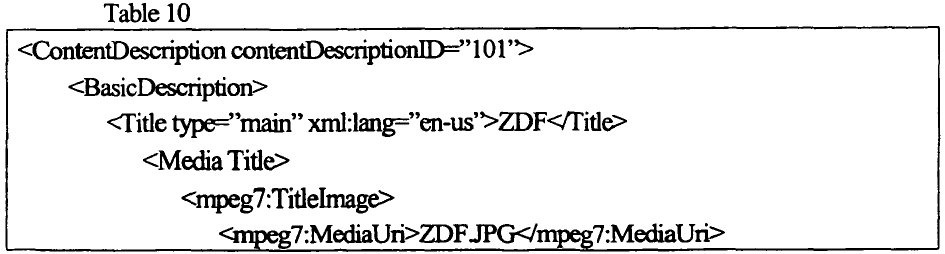

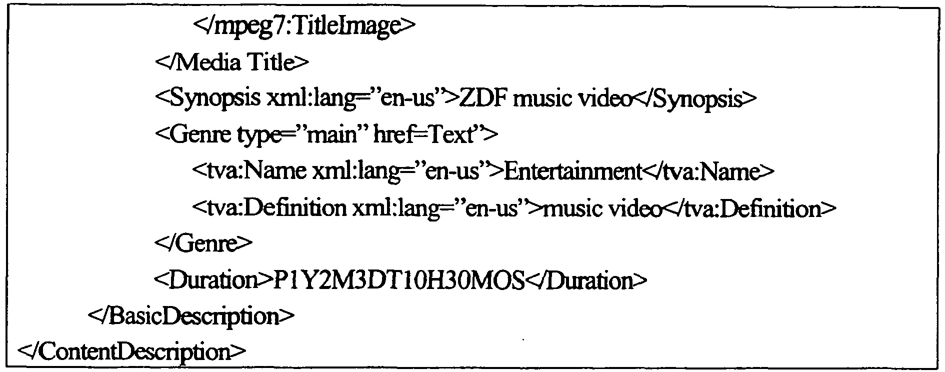

A content of the Table 10 has an ID of 101, a title of ZDF, and a title image of ZDF.JPG. It can be appreciated that a content summary is a ZDF music video, and a genre is a music video in entertainment It can be appreciated from "P1Y2M3DT10H20Mos" that the music video of the Table 10 has a viewing time limit of one year, two months, three days, 10 hours, and 30 minutes. For viewing the above broadcasting, the service 740 and the schedule event 750 including the content should be searched through the ID, and the acquisition 770 should be acquired from the searched service 740 or the schedule event 750.

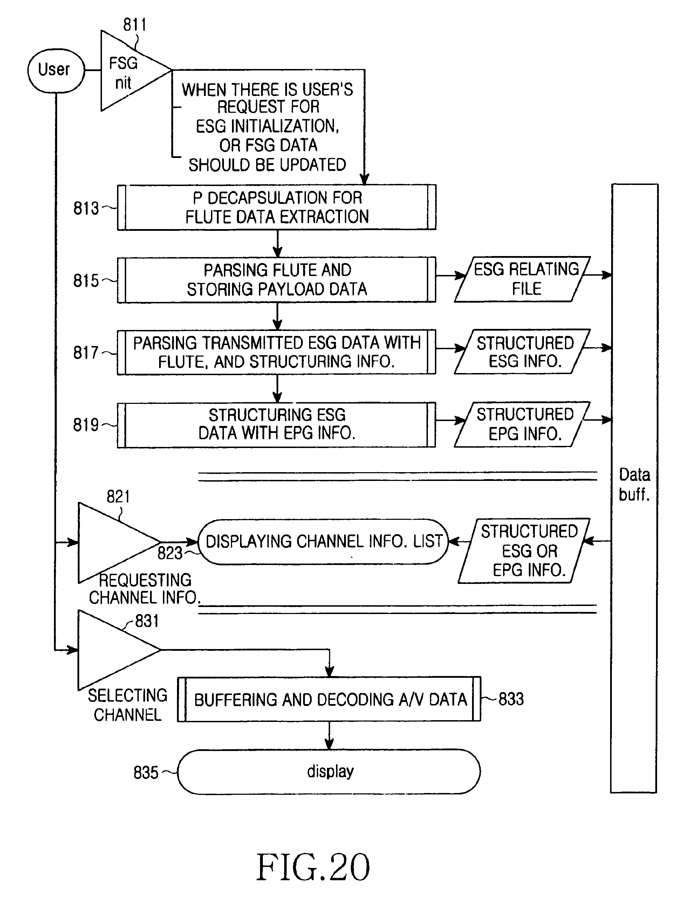

FIG. 20 illustrate a procedure of extracting and structuring the ESG data from the ESG data packet stream, and editing and structuring the ESG data in a format of the EPG data according to an embodiment of the present invention.

Referring to FIG. 20, first, when ESG initialization request is made, in Step 811, the controller 100 detects the request, and in Step 813, the controller 100 performs an IP decapsulating operation for extracting FLUTE data from the ESG data packet stream. The ESG initialization is generated when the user requests for the ESG initialization or the ESG data should be updated. After the IP decapsulation is performed, in Step 815, the controller 100 parses the FLUTE protocol and stores the payload data. The stored data can include the XML-formatted ESG data. After that, in Step 817, the controller 100 parses the XML-formatted ESG data, and generates and stores the structured ESG data (information) in the memory 180. The structured ESG data is data for displaying as the channel information when there occurs user's channel information request. In an embodiment of the present invention, together with the structured ESG data, it is structured and stored as EPG type channel display information including only the program information of the respective service channel. In other words, the ESG data is structured and stored as the EPG data.

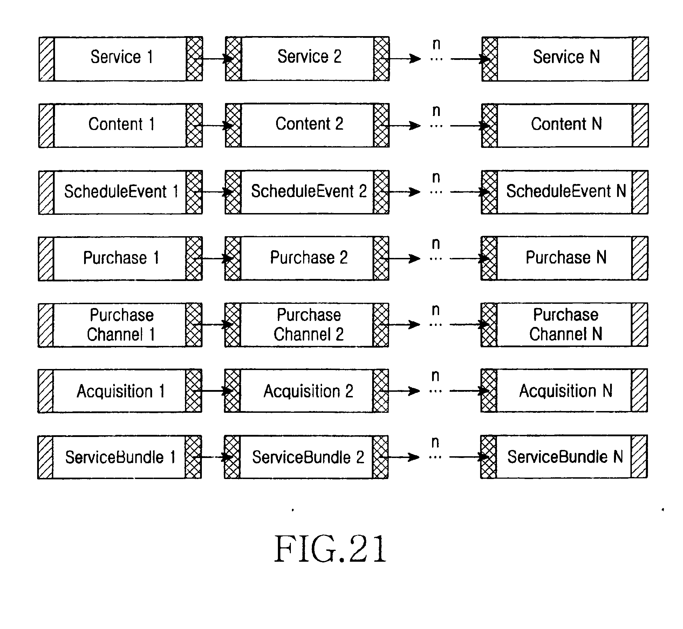

FIG. 21 illustrates a structure of the XML-formatted inputted ESG data parsed and stored in the memory 180.

Referring to FIG. 21, the ESG data in which, as shown in FIG. 19, a total of seven ESG fragments form a structure of linked lists depending on respective types, is stored in the memory 180. The memory 180 stores the ESG data in a heap memory. The heap memory refers to a memory space that can be assigned and used at a dynamic time and be released in its assignment at a predetermined time point. The header being an uppermost structure of each fragment is accessible to a whole area within an ESG module, and necessary information is obtained by having access to each fragment header through an ESG module API according to need.

For example, describing a procedure of confirming a field value "ServiceNumber" of a service 2, a series of procedure of a first process of acquiring a pointer (memory address) of a service fragment header being the whole area, using the ESG API, a second process of acquiring a pointer of a service fragment (service 2) subsequently connected from the acquired pointer using the ESG API, and a third process of acquiring the value of "ServiceNumber" from the contents of the acquired pointer. In each fragment, information of the field intending to be acquired from the fragment can be acquired through the above series of the procedure.

The ESG is structured so that the ESG information can be stored in the memory to have the above data structure and easily transmitted to a module needing the ESG information.

If the above procedure is performed, the memory 180 stores the structured ESG data and the EPG data. In the above state, if the user requests for the channel information, the controller 100 has access to the structured ESG or EPG data in the memory 180 and displays the access data on the display unit 150. The user can select a function of displaying the ESG formatted channel information and also, can select a function of selecting the EPG formatted channel information. The selection of the channel information displaying function can be performed in several methods. In an embodiment of the present invention, a channel information view menu can display ESG and EPG display menus, and can display the channel information of a display menu based on the user's selection. In other words, as described above, the structured ESG data can be displayed as the channel information and also, the ESG data can be edited and displayed on a service-by-service basis and on a content-by-content basis (program and event).

In a description of a method for displaying the ESG data, first, in the ESG data structured as shown in FIG. 21, the controller 100 acquires a schedule event list and a service list, and acquires content information through the selected service ID.

If the user selects the channel, in Steps 833 and 835, the controller 100 processes and displays the data of the selected broadcasting channel. In other words, the controller 100 controls the tuner 110 and the demodulator 120 to select the user's setting channel, and demodulate the received broadcasting signal, thereby generating the IP datagram. The IP datagram outputted from the demodulator 120 can be the service data packet stream of FIG. 4B. Then, the data processor 130 decapsulates the IP information in the received IP datagram, and the demultiplexer demultiplexes the packets constituting the payload and generates a video ES and/or an audio ES. The video decoder decodes the video ES, and outputs the video data to the display unit 150. The audio decoder decodes the audio ES, and outputs the audio data to the speaker 160.

Table 11 below illustrates an example of the structured ESG data.

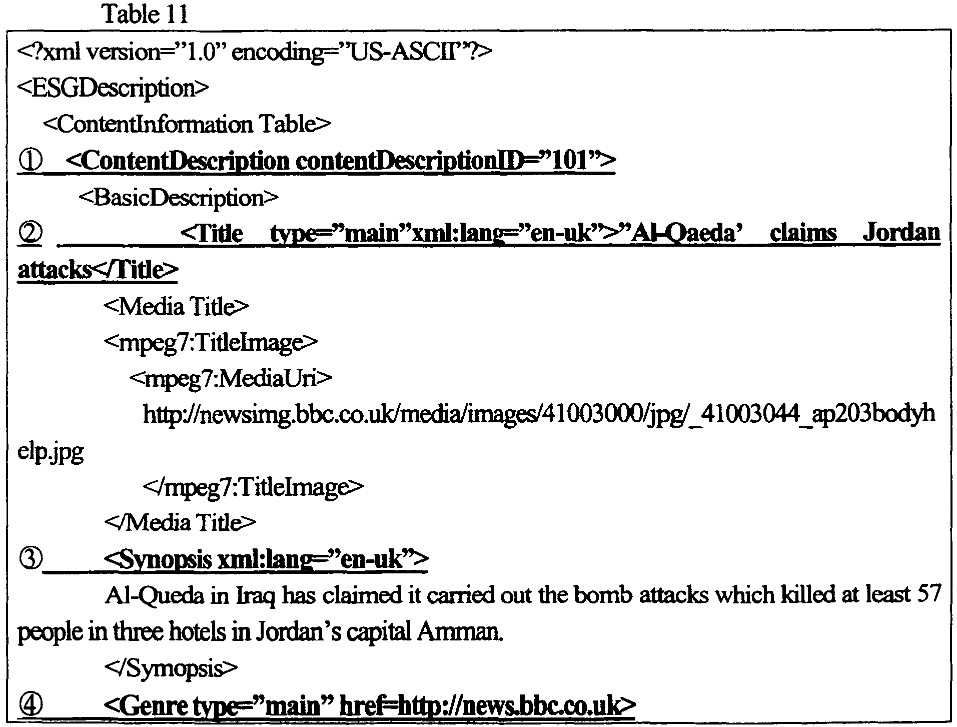

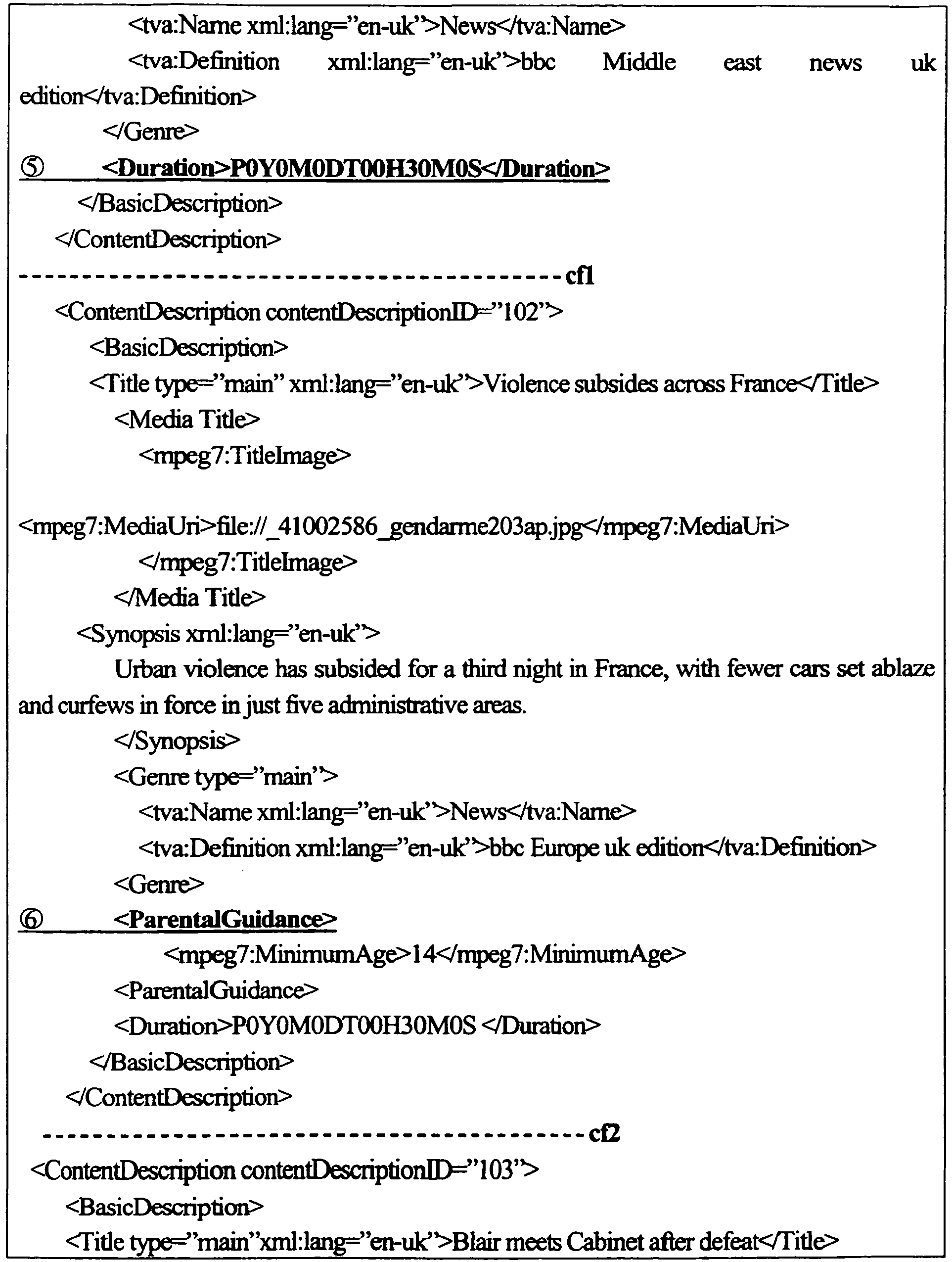

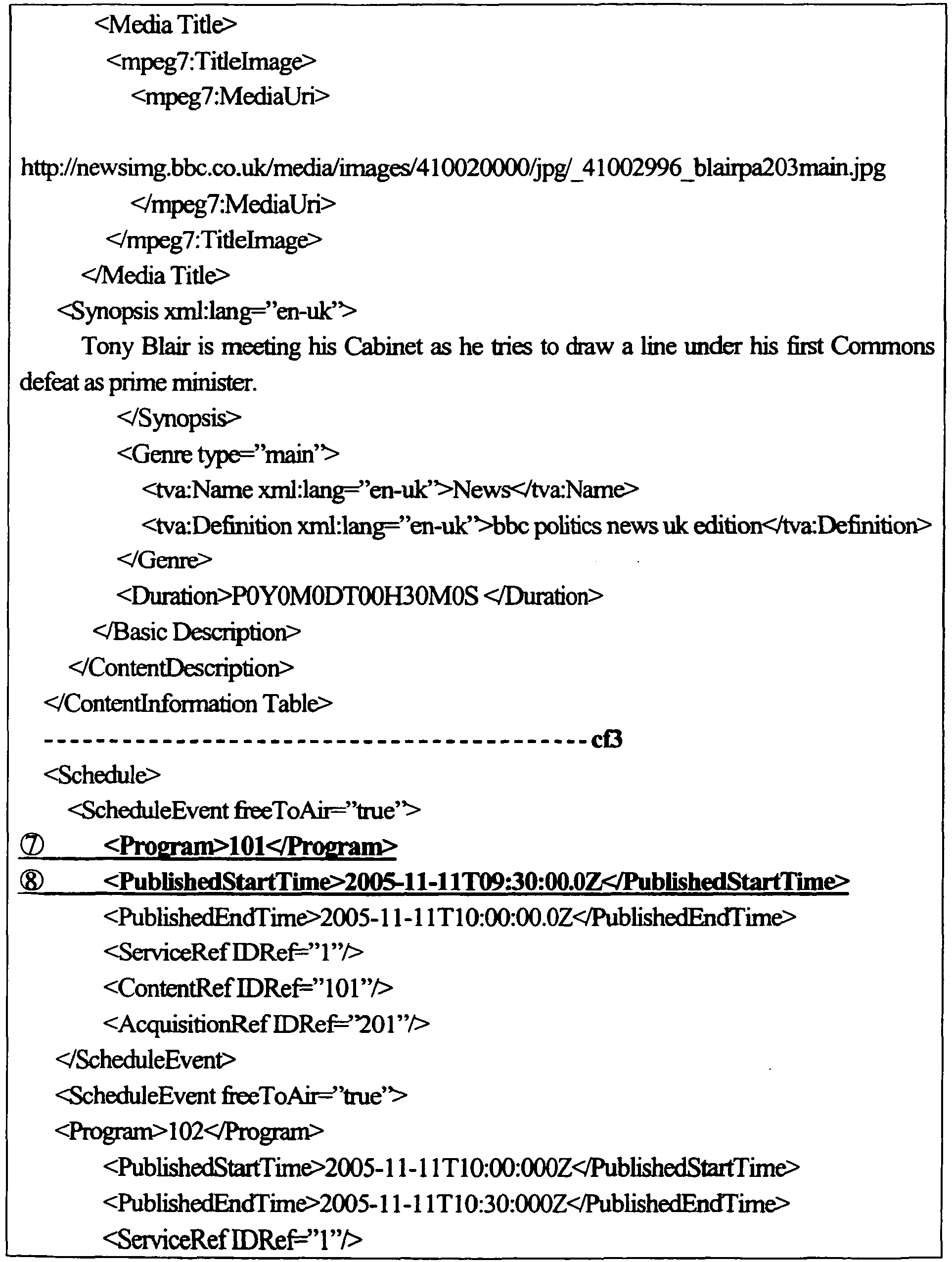

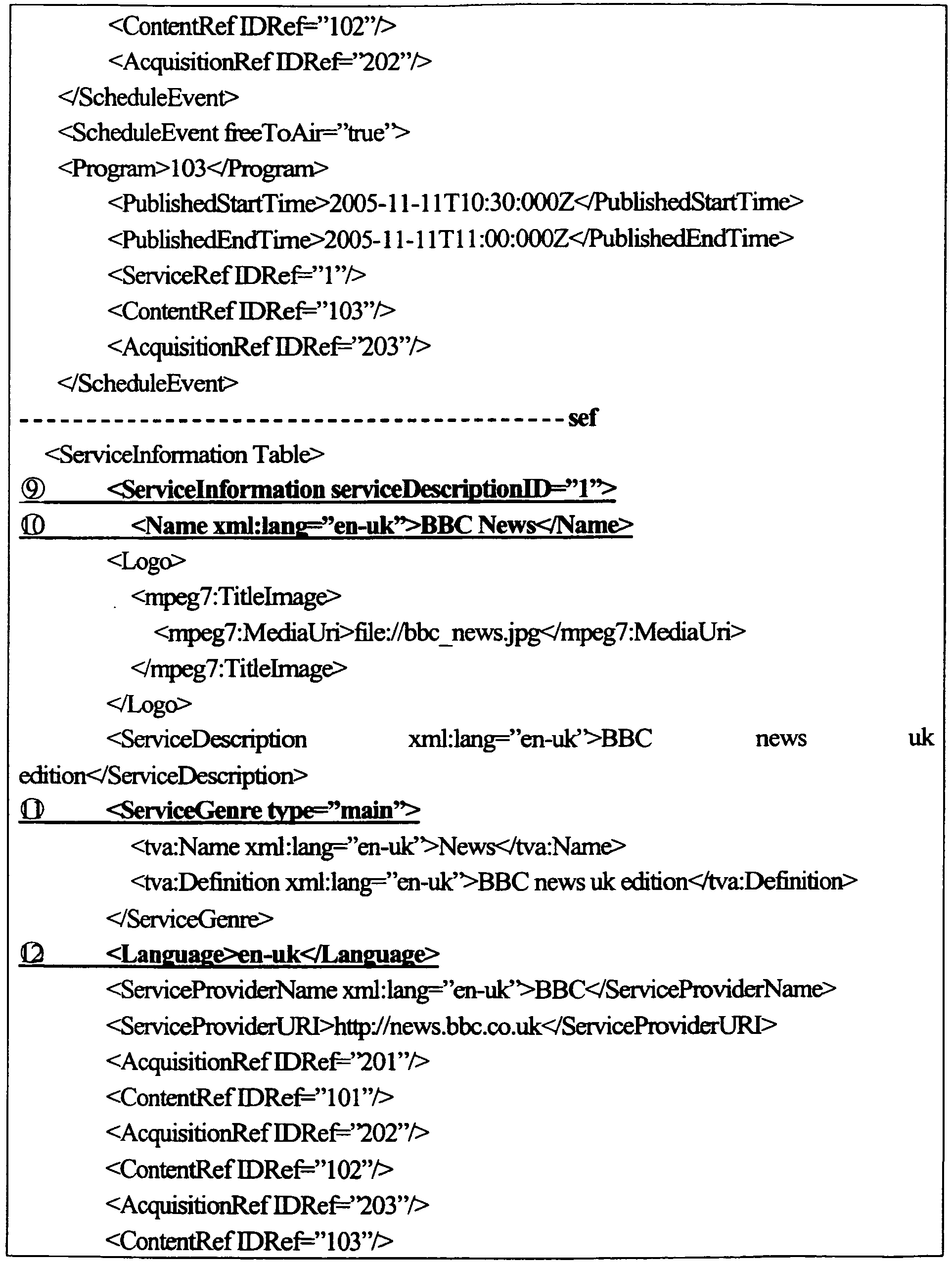

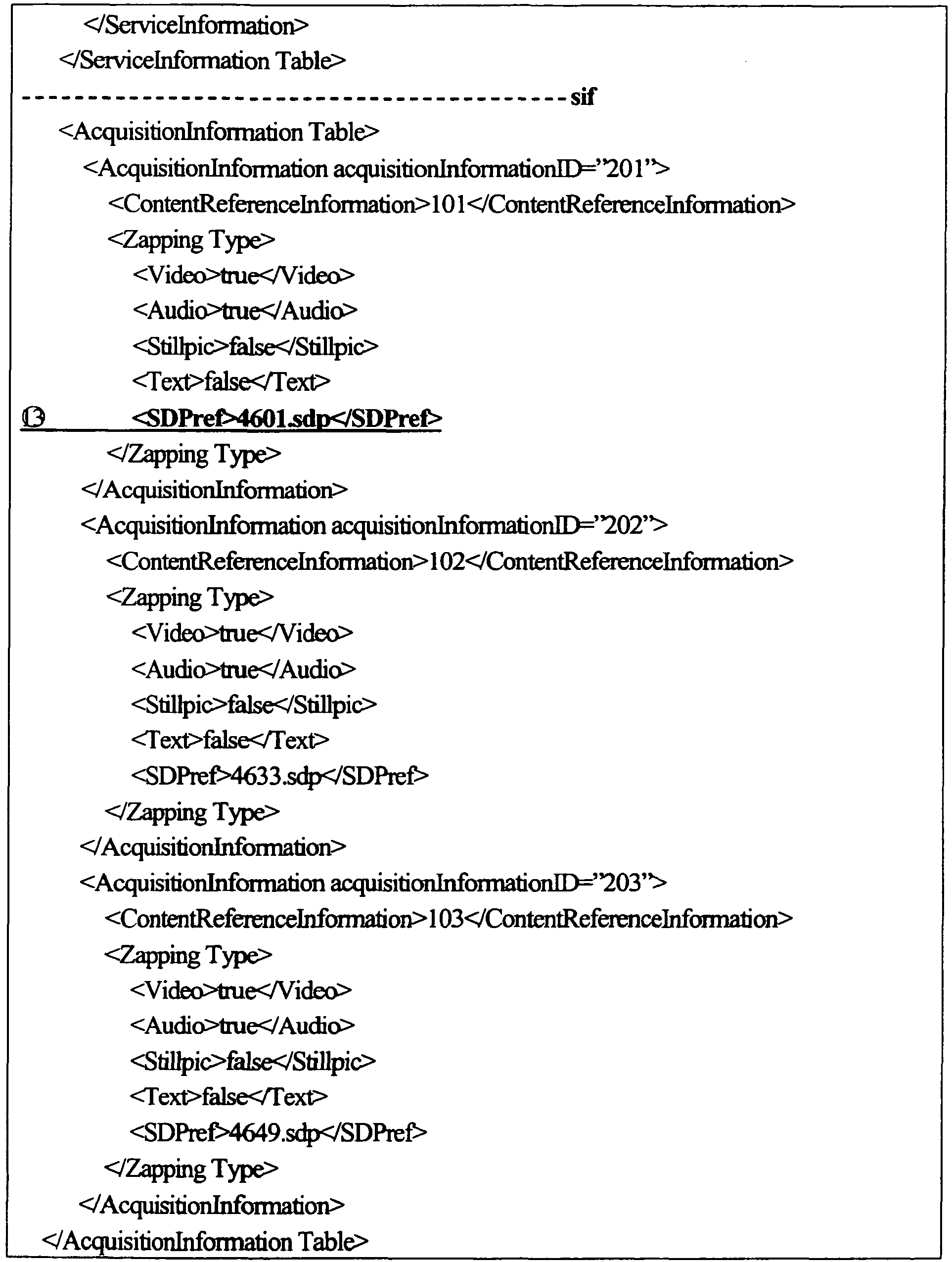

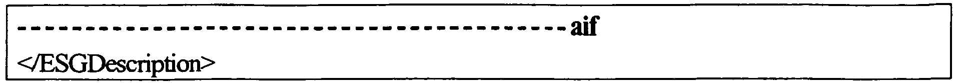

In an embodiment of the present invention, there is provided a method for matching and structuring the ESG data having the structure of the Table 11 to and into the EPG data format, and upon request for displaying the channel information, displaying the structured EPG formatted data. The structured EPG data refers to EPG data obtained by summarizing information on the service-by-service basis and information on the content-by-content (program and event) basis as shown in FIGS.11A and 11B.

The ESG data of the Table 11 has the structure of a dynamic stream. The dynamic stream refers to a stream received irrespective of a sequence of the service channels and contents. In other words, the dynamic stream refers to a stream received with the contents of several service channels mixed in a broadcasting time sequence. Accordingly, when the channel information of the ESG data is displayed, the contents of several service channels are mixed and displayed in the broadcasting time sequence. On contrary, the EPG data is a static stream. The static stream refers to a stream received with the contents of the same service channel based on the broadcasting time sequence. As described above, the viewer is familiar with the displaying of the EPG formatted channel information, and this can be also preferred. Accordingly, it is desirable that, together with a method for displaying the ESG formatted channel information, a method for converting the ESG data into the EPG data format and displaying the converted EPG data is used.

For this, in an embodiment of the present invention, the ESG data having the structure of the Table 11 can be converted into the EPG data format, and upon user's request for displaying the channel information, the ESG data or the EPG data can be selectively displayed. In a detailed description of the structure of the Table 11, "cf" denotes a contents fragment, "sef" denotes a schedule event fragment, "sig" denotes a service information fragment, and "aif" denotes an acquisition information fragment. Accordingly, the Table 11 illustrates an example of sequentially receiving three fragments (cf1 to cf3), and respective ones of the schedule event fragment (sef), the service information fragment (sif), and the acquisition information fragment (aif).

In a description of a construction of the contents fragment, the contents fragment includes information on a content description ID and a basic description. The content description ID is information for identifying the service channel, and represents to be a first content of a broadcasting channel 1. The basic description information includes information such as a title type (title type), a media title (media title), a title synopsis (synopsis), a content genre type (genre type), view guidance (parental guidance), and a broadcasting time (duration). In the Table 11, the contents fragments (cf1 to cf3) are denoted by "101" to "103". Accordingly, it can be appreciated that the contents fragments (cf1 to cf3) are all contents fragments of the same service. However, in the contents fragments, contents of other services can be arranged in a time sequence.

First, the title type is a title of a corresponding content, and includes information on a used language and the title of the corresponding content Second, the title media is to display multimedia data information on the title of the content. The title media can have a coding type and a storage position of the multimedia data (url information on a location of the multimedia data as in the cf1 or information of the multimedia data actually received as in the cf2). Third, the title synopsis has data obtained by synopsizing the content of the corresponding title. Fifth, the title genre is a kind of the corresponding title, and exemplifies a case where the title genre is news in the cf1 to cf3. Fourth, the view guidance is to guide the corresponding title for the viewable age, and a viewable age of the cf2 is exemplified as a minimum age of 14. Fifth, the broadcasting time refers to a time for which the corresponding content of the title is broadcasted.

Second, in a description of constructions of the schedule event fragment, the schedule event fragment is a fragment including schedule event information of the contents fragments. The schedule event fragment includes names or content IDs of the respective contents fragments, broadcasting start and end times of the content, a service ID, a content ID, and a corresponding content acquisition ID. For example, in a description of a schedule event of the contents fragment (cf1), first, a content matched with the content name or the content ID is "101 ", the broadcasting start time is 09:30, November 11, 2005, the end time is 10:00, November 11, 1005, the service channel is "1", the content ID is "101", a content "101" acquisition ID is "201". Even the schedule events of the contents fragments (cf2 and cf3) are defined in the schedule event fragment in the above method.

Third, in a description of a construction of the service information fragment, the service information fragment includes a broadcasting channel, a channel name, a title logo image, a service genre type, a service language, service language and URI information, content description IDs, and acquisition ID information corresponding thereto. In a description of a construction of the service information fragment included in the Table 1, the broadcasting channel served is "1", the channel name is "BBC news", the title logo image is "bbc_news.jpg", the service genre is "news", the provided language is "United Kingdom (UK)", the UIR is "http//news.bbc.co.uk", a content ID of an acquisition ID "201" is "101", a content ID of an acquisition ID "202" is "102", and a content ID of an acquisition ID "203" is "103".

Fourth, in a description of a construction of the acquisition information fragment, the acquisition information fragment includes information on the acquisition ID and the content ID of the contents (cf1 to cf3), multimedia data structure of the content, and a content data storage position. In a description of the acquisition information of the fragment (cf1), the acquisition ID is "201", the content ID is "101", a constructed multimedia type (zapping type) includes video and audio data, a still picture and a text are not provided, and a storage position of actual data (audio and video file) of the content "101" is "4601.sdp (session description protocol)". Even remaining contents fragments (cf2 and cf3) have acquisition information in the above structure.

Accordingly, in case where the ESG data block of the Table 11 is matched to the EPG data format, it can be displayed as in Table 12 below. In other words, as shown in the Table 1 below, the content IDs "101", "102", and "103" are all included in "service information 1". It can be appreciated that "ScheduleEvent" and "AcquisitionInformation" are matched to corresponding content IDs, respectively.

**Table 12**

| | | | |
|---|---|---|---|
| ScheduleEvent 101 | SeviceInfonnation 1 | ContentDescription 101 | AcquisitionInformation 201 |
| ScheduleEvent 102 | | ContentDescription 102 | AcquisitionInformation 202 |
| ScheduleEvent 103 | | ContentDescription 103 | AcquisitionInformation 203 |

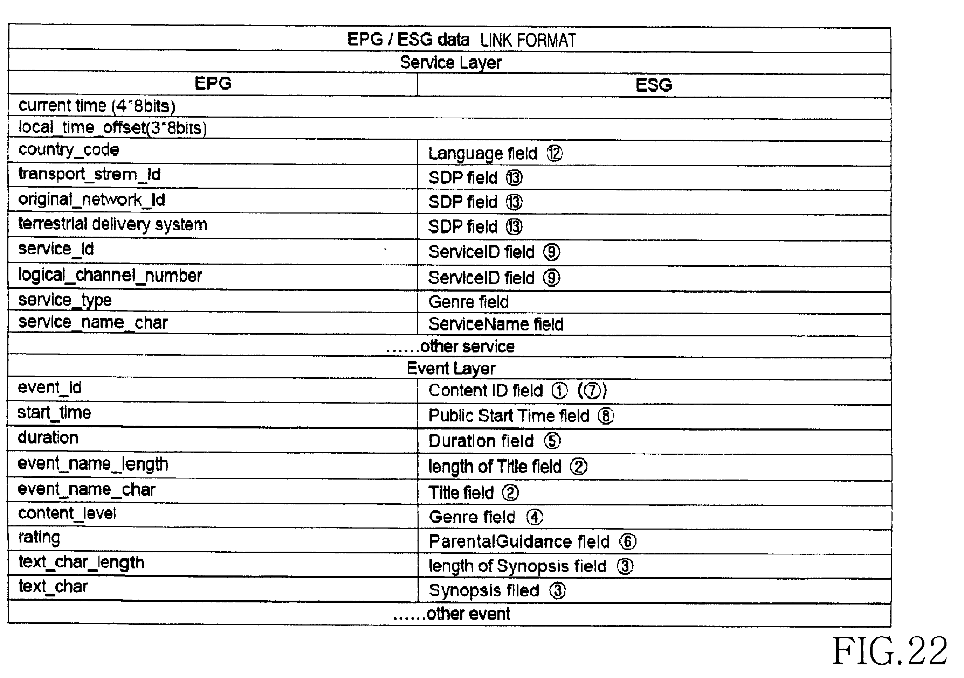

Accordingly, the ESG data having the format of the Table 11 can be linked with the EPG format of FIGS. 11A and 11B. FIG. 22 illustrates a result obtained by linking and matching the ESG data with the EPG data format. As shown in FIG. 22, the ESG data is a user guide of more advanced concept than that of the EPG data and therefore, the link with the EPG data format can be easily converted from the ESG information as in FIG. 22 through a preprocessing process.

Referring to FIG. 22, in a method for displaying the EPG data according to an embodiment of the present invention, there is provided the structures of FIGS. 11A and 11B. In an embodiment of the present invention, when the channel information of the ESG data is displayed, the ESG data is displayed even in the EPG displaying method besides an inherent ESG data displaying function. For this, in an embodiment of the present invention, the ESG data having the structure of the Table 11 is converted into the channel information of the EPG structures of FIGS. 11A and 11B. FIG. 22 is a matching table for displaying the ESG data in the EPG format.

First, an operation of matching the ESG data to the EPG format of FIG. 11A will be described. The EPG format of FIG. 11A has field information obtained by summarizing the information of the respective service channels. First, the country code is matched with a language field of the service information fragment of the ESG data. The language field of the service information fragment shows a language and a country of a corresponding service (e.g. en:uk (English:the United Kingdom)). Transport stream id (transport_stream_id), network id (original_network_id), and regional information (terrestrial delivery system) fields of the EPG format are matched with a SDP field of the acquisition information fragment of the ESG data. The service ID (service_id) and the channel number (logical_channel_number) of the EPG format are matched with a service ID field of the service information fragment. The service type (service_type) of the EPG format is matched with the genre type (genre field) of the contents fragment of the ESG data. The service channel name (service_name_char) of the EPG format is matched with a service name field of the service information fragment of the ESG data. As described above, when the ESG data is matched to the EPG format, in the information summary of the service channels, the channel names and numbers and the genres of the respective services of the ESG data are summarized and displayed in the EPG format of FIG. 11A.

Second, an operation of matching the ESG data to the EPG format of FIG.11B will be described. In the structure of FIG. 11B, the program information of the respective service channels is displayed. First, the event ID (event_id) of the EPG format is matched with a content ID field of the contents fragment of the ESG data (or the program ID of the schedule event fragment). The broadcasting start time (start_time) of the EPG format is matched with the broadcasting start time of the schedule event fragment of the ESG data. The broadcasting time (duration) of the EPG format is matched with the broadcasting time of the contents fragment of the ESG data. The event name (event_name_length) and the event name (event_name_char) of the EPG format are matched with a title type field of the contents fragment of the ESG data. A content level (content_level) of the EPG format is matched with a genre type field of the contents fragment of the ESG data. A rating field of the EPG format is matched with a parent guide field of the contents fragment of the ESG data. The program summary (text_char-length and text_char) of the EPG format is matched with a synopsis field of the contents fragment of the ESG data. As described above, when the ESG data is matched to the EPG format, in the EPG format of FIG. 11B, the program information summary of the respective service channels can summarize and display the start time, broadcasting time, title name, genre, viewable age guide, and title summary information of the programs of the service channel corresponding to the content and the schedule event fragments of the ESG data. The above construction is generated on a per-title basis.

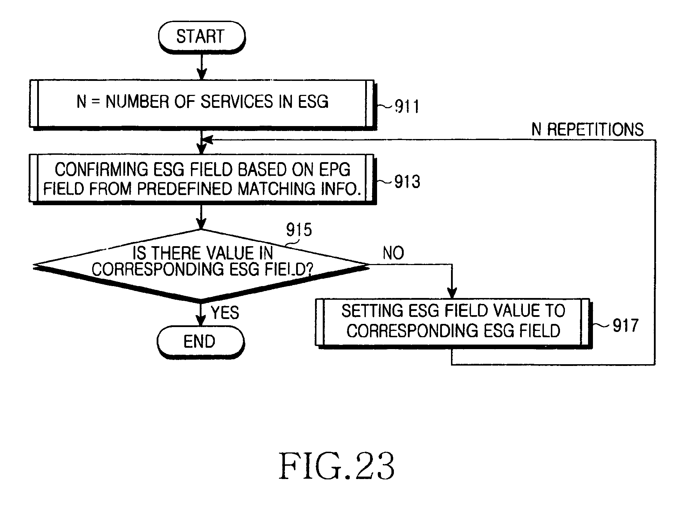

FIG. 23 is a flowchart illustrating a preprocessing process for converting the ESG data of FIG. 22 into the EPG data format.

Referring to FIG. 23, first, in Step 911, the controller, 100 confirms number of services in the ESG data having the structure of the Table 11 and then, sets the service number to a variable "N". After that, in Step 913, the controller 100 confirms an ESG field based on the EGP field from predefined matching information as in FIG. 22. In Step 915, the controller 100 checks whether or not there is a value in a corresponding ESG field. If there is the value in the ESG field, in Step 917, the controller 100 matches corresponding fields of the ESG data to the predefined matching field. In other words, the ESG data having the structure of the Table 11 is matched to the EPG data format having the structures of FIGS. 11A and 11B with the pattern of FIG. 22. The above operation is repeatedly performed while the respective contents of the service channel are converted into the EPG format.

If the operation of FIG. 23 is performed, the ESG data of the Table 11 is converted into the channel information of the EPG format as in Table 13 below.

**Table 13**

| EPG/ESG data link format | |
|---|---|
| Service Layer | |
| EPG | ESG |
| Current time (4*8bits) | |
| Local_time_offset (3*8bits) | |
| Country code | "en-uk" |
| Transport_stream_id | "4601.sdp/4633.sdp/4649.sdp" |
| Original_network_id | |
| Terrestrial delivery system | |
| Service id | "1" |
| Logical_chamel number | "1" |
| Service_type | "News/BBC news uk edition" |
| Service_name_char | "BBC News" |
| ···other service | |

| Event layer | |
|---|---|
| Event_id | 101 |
| Start_time | 2005-11-11T09:30:00.0Z |
| duration | P0Y0M0DT00H30M0 |
| Event_name_length | Length of"Al-Queda'claims Jordan attacks" |
| Event_name_char | "Al-Qaeda'claims Jordan attacks" |
| Text_char_length | Length of "Al-Qaeda in Iraq has claimed it carried out the bomb attacks which killed at least 57 people in three hotels in Jordan's capital Amman." |
| Event id | 102 |
| Start_time | 2005-11-11T10:00:00.0Z |
| Duration | P0Y0M0DT00H30M0 |
| Event_name_length | Length of "violence subsides across France" |
| Event_name_char | "Violence subsides across France" |
| Content_level | "News/bbc Europe uk edition" |
| Rating | "MinimumAge: 14" |
| Text_char_length | Length of "Urban violence has subsided for a third night in France, with fewer cars set ablaze and curfews in force in just five administrative areas." |
| Text char | "Urban violence has subsided for a third night in France, with fewer cars set ablaze and curfews in force in just five administrative areas." |
| Event id | 103 |
| Start_time | 2005-11-11T10:30:00.0Z |
| Duration | P0Y0M0DT00H30M0 |
| Event_name_length | Length of "Blair meets Cabinet after defeat" |
| Event name char | "Blair meets Cabinet after defeat" |
| Content level | "News/bbc politics news uk edition" |
| Rating | |
| Text_char_length | Length of "Tony Blair is meeting his Cabinet as he tries to draw a line under his first commons defeat as prime minister." |
| Text_char | "Tony Blair is meeting his Cabinet as he tries to draw a |
| | line under his first commons defeat as prime minister." |
| ···.. other event | |

Accordingly, upon occurrence of the initialization request for the ESG data in the Step 811 of FIG. 20, in the Step 817, the structured ESG data of the Table 11 is generated and at the same time, in the Step 819, the structured EPG data obtained by matching the ESG data to the EPG format having the construction of FIG. 22 is generated and stored in the memory 180. After that, upon user's request for the channel information, the controller 100 can select the structured ESG data or EPG data in the memory 180 by user's selection and can display the selected ESG data or EPG data on the display unit 150. Accordingly, in the apparatus having the DVB_H type digital broadcasting receiver, when the channel information is displayed, the structured ESG data can be used to display the ESG data arranged depending on the broadcasting time of the contents, and the contents to be broadcasted at a specific service channel can be displayed on the broadcasting time-by-broadcasting time basis.

As described above, in the digital broadcasting receiver using the ESG data as channel information display data, when the channel information is displayed, it can be displayed as the structured ESG data and the structured EPG data. In other words, in case where the user confirms the information of the channels broadcasted in the digital broadcasting receiver, he/she needs a function of displaying the service channels and the programs broadcasted in the corresponding service channel. This is because, in the ESG data, when the broadcasted channel information is displayed, the information of the programs broadcasted over the respective service channels is displayed on the broadcasting time-by-broadcasting time basis and therefore, the broadcasting programs of several service channels are together displayed. Accordingly, it is desirable to add a function of displaying the channel information of the digital broadcasting receiver in the EPG format.

The ESG data has the IP-based data structure. Accordingly, the broadcasting receiver and the data processor 130 should have a structure for processing the IP information. For this, the broadcasting receiver including the tuner 110 and the demodulator 120, receives and demodulates the digital broadcasting signal of the selected channel, confirms the PID of the demodulated data, and outputs the IP datagram data having the PID of the set channel. Then, the data processor 130, which includes the IP decapsulator 550, the demultiplexer 210, the video decoder 230, and the audio decoder 250, decapsulates IP data of IP datagram data, separates the service data packet stream or the ESG data packet stream, and demultiplexes and decodes the service data packet stream into the audio and video data. The decoded audio and video data is played through the speaker 160 and the display unit 150, respectively.

The controller 100 controls the broadcasting receiver to receive the digital broadcasting signal of the broadcasting channel set by the user. The controller 100 parses the ESG data packet stream outputted from the data processor 130, and generates and stores the structured ESG data in the memory 180. The controller 100 analyzes the structured ESG data, generates the summary information on a service channel-by-service channel basis, generates the summary information of the programs of the respective service channels, and generates and stores the structured EPG data in the memory 180. After that, upon user's request for displaying the channel information, the controller 100 controls an operation for displaying the ESG data or the structured ESG data selected by the user's selection on the display unit 150.

Upon receipt of the ESG data packet stream, the controller 100 generating the structured EPG data parses the ESG data, generates and stores the structured ESG data in the memory 180, combines the channel information data of the acquisition fragment and the service information fragment of the structured ESG data, generates the summary information of the programs of the respective service channels, generates the structured first EPG data, combines the channel information data of the schedule event fragments and the contents fragments, and generates and stores the structured second EPG data in the memory 180 as the structured EPG data.

The controller 100 matches the service identification field and the name and genre fields of the service information fragment and the acquisition fragment of the structured ESG data, to the service channel name, category, and language, respectively, and generates the first EPG data. The controller 100 matches the broadcasting start time field of the schedule event fragment of the structured ESG data and the broadcasting field, the title field, and the genre and synopsis fields of the content fragment, to the event start time, the event broadcasting time, the event name, the event category, and the event summary of the event information, respectively, and generates the structured second EPG data. After that, the controller 100 stores the generated first and second EPG data in the memory 180 as the structured EPG data.

The first EPG data is generated as the structured EPG data by matching the SDP field of the acquisition information fragment of the structured ESG data to the network layer of the first EPG data, and matching the service ID field, the service genre field, and the service name field of the service information fragment to the corresponding service channel number, service type, and service channel name of the service layer of the first EPG data, respectively. The second EPG data is generated as the structured second EPG data by matching the content identification field and the broadcasting start time field of the schedule event fragment of the structured ESG data to the event identification and the start time of the second EPG data, respectively, and matching the broadcasting time field, the title field, the genre field, and the synopsis field of the contents fragment to the broadcasting time, the event name, the content level, and the event summary of the second EPG data, respectively.

After the storing of the above structured ESG data and EPG data in the memory 180, upon the user's request for displaying of the channel information, the controller 100 controls an operation for displaying the structured ESG and structured EPG data, having access to the structured ESG or EPG data selected by the user in the memory, and displaying the structured ESG or EPG data on the display unit 150. In case where the user requests for displaying the structured EPG data, the controller 100 has access to the first EPG data in the memory 180, and displays the first EPG data on the display unit 150. After that, if the user sees the summary information of the specific service channels displayed on the display unit 150 and requests for displaying the channel information of the specific service channel, the controller 100 has access to the second EPG data of the corresponding service channel in the memory 180 and displays the second EPG data on the display unit 150. As described above, if the user requests for displaying the channel information of the structured EPG data, first, the controller 100 displays the summary information for displaying the names of all service channels of the digital broadcasting receiver. If the user requests for displaying the channel information of the specific service channel while displaying the information of the service channels, the controller 100 can display the programs broadcasted over the corresponding channel on the display unit 150 in the broadcasting time sequence.

According to an embodiment of the present invention, the digital broadcasting receiver for displaying the ESG and structured EPG data as the channel information can be installed at the wireless terminal.

As described above, the wireless terminal having the digital broadcasting receiver can embody the user interfaces for selecting the digital broadcasting channel, changing the audio and video display state of the selected channel, and displaying the program information of the broadcasting channel. Accordingly, there is an advantage of selecting the inputted digital broadcasting channel on the display unit of the wireless terminal, and displaying audio and video display states of the selected channel, and the program information of the respective service channels depending on the user's selection.

### Industrial Applicability

An apparatus and method for displaying broadcasting information in a digital broadcasting receiver is applicable to a wireless terminal.

While the present invention has been described and illustrated herein with reference to the preferred embodiments thereof, it will be apparent to those skilled in the art that various modifications and variations can be made therein without departing from the scope of the invention. Thus, it is intended that the present invention covers the modifications and variations of this invention that come within the scope of the appended claims and their equivalents.

## Claims

1. An apparatus for displaying channel information in a digital broadcasting receiver, the apparatus comprising:
a broadcasting receiver for receiving and demodulating a digital broadcasting signal of a selected channel;
a data processor (130) for demultiplexing the demodulated broadcasting signal, separating electronic program guide, EPG,
and broadcasting data, and decoding the broadcasting data;
a controller (100) being adapted to
a) upon receipt of the EPG data;
analyzing the EPG data,
generating summary information on a service channel-by-service channel basis for a physical channel as first EPG data, wherein the first EPG data comprises for each service channel information having service channel category and name,
generating summary information of programs of respective service channels as second EPG data, wherein the second EPG data comprises event information broadcasted over the service channel and stored in a broadcasting time sequence, and the event information having a broadcasting start time, a broadcasting time, an event name, and an event summary of a corresponding event,
generating structured EPG data comprising the first and second EPG data,
storing the EPG data and the structured EPG data in a memory (180), and
b) the controller (100) being further adpated to:
displaying in a display unit (150) the structured EPG data stored in the memory by sequentially accessing the first EPG data and the corresponding second EPG data by user's selection as the channel information,
wherein the first EPG data further comprises:
a network layer comprising a physical channel identification, broadcasting station information, and the number of service channels using the physical channel; and
service layers provided as much as the number of the service channels, and each comprising a service channel identification, a service channel number, a service category, and a service channel name; and
wherein the second EPG data comprises event layers provided as much as number of programs of a corresponding service channel, and the event layers are provided in number corresponding to the respective service channels and each has the event broadcasting start time, the event broadcasting time, the event name, an event category, and the event summary.

2. The apparatus of claim 1, wherein, upon user's request for the channel information, the controller (100) is adapted to control an operation for displaying the EPG and structured EPG data, having access to the EPG or structured EPG data selected by a user in the memory, and to display the EPG or structured EPG data on the display unit (150).

3. The apparatus of claim 2, wherein the digital broadcasting receiver is a wireless terminal further comprising a wireless communication unit (190).

4. The apparatus of claim 1, wherein the broadcasting receiver is further adapted to output Internet protocol, IP, datagram data;
the data processor (130) is further adapted to decapsulate IP data of the IP datagram data, to separate a service data packet stream or an electronic service guide, ESG, data packet stream, and to demultiplex and decode the service data packet stream into audio and video data;
the controller (100) is further adapted to control operations of
parsing the ESG data packet stream,
generating structured ESG data,
analyzing the structured ESG data comprising the first and second EPG data,
storing the structured ESG data and the EPG data in the memory (180), and
displaying in the display unit (150) the structured ESG data stored in the memory by sequentially accessing the first EPG data and the corresponding second EPG data by user's selection as the channel information.

5. The apparatus of claim 4, wherein, upon receipt of the ESG data packet stream, the controller (100) is adapted to parse the ESG data, to generate and store the structured ESG data in the memory, to combine channel information data of a service information fragment (740) and an acquisition fragment (770) of the structured ESG data, to generate the summary information of the programs of the respective service channels, to generate the structured first EPG data, to combine channel information data of contents fragments (760) and schedule event fragments (750), and to generate the structured second EPG data.

6. The apparatus of claim 5, wherein the controller (100) is adapted to match a service identification field, a name field, and a genre field of the service information fragment (740) and the acquisition fragment (770) of the structured ESG data to service channel name, category and language, respectively, to generate the first EPG data, and
wherein the controller is adapted to match a broadcasting start time field of the schedule event fragment (750) of the structured ESG data and a broadcasting field, a title field, a genre field, and a synopsis field of the contents fragment (760) to an event start time, an event broadcasting time, an event name, an event category, and an event summary of the event information to generate and store the structured second EPG data in the memory (180).

7. The apparatus of claim 6, wherein the controller (100) is adapted to match a session description protocol, SDP, field of the acquisition information fragment (770) of the structured ESG data to a network layer of the first EPG data, and matches a service ID field, a service genre field, and a service name field of the service information fragment (740) to corresponding service channel number, service type, and service channel name of a service layer of the first EPG data, respectively, to generate the structured first EPG data.

8. The apparatus of claim 7, wherein the controller (100) is adapted to match a content identification field and the broadcasting start time field of the schedule event fragment (750) of the structured ESG data to event identification and start time of the second EPG data, respectively, and to match the broadcasting time field, the title field, the genre field, and the synopsis field of the contents fragment (760) to a broadcasting time, an event name, a content level, and an event summary of the second EPG data, respectively, to generate the structured second EPG data.

9. The apparatus of claim 6, wherein, upon user's request for the channel information, the controller (100) is adapted to control an operation for displaying the structured ESG and structured EPG data, having access to the structured ESG or EPG data selected by a user in the memory (180), and to display the structured ESG or EPG data on the display unit (150).

10. A method for displaying channel information in a digital broadcasting receiver, the method comprising the steps of:
receiving and demodulating a digital broadcasting signal of a selected channel;
demultiplexing the demodulated broadcasting signal, separating electronic program guide, EPG, and broadcasting data, and decoding the broadcasting data;
generating upon receipt of the EPG data structured EPG data using the steps of:
storing the EPG data,
analyzing the EPG data,
generating summary information on a service channel-by-service channel basis for a physical channel as first EPG data, wherein the first EPG data comprises for each service channel information having service channel category and name,
generating summary information of programs of respective service channels as second EPG data, wherein the second EPG data comprises event information broadcasted over the service channel and stored in a broadcasting time sequence, and the event information having a broadcasting start time, a broadcasting time, an event name, and an event summary of a corresponding event,
generating structured EPG data comprising the first and second EPG data, and
storing the EPG data and the structured EPG data; and
upon request for displaying the channel information, displaying the structured EPG data selected, which is stored, by sequentially accessing the first EPG data and the corresponding second EPG data,
wherein the first EPG data further comprises:
a network layer comprising a physical channel identification, broadcasting station information, and the number of service channels using the physical channel; and
service layers provided as much as the number of the service channels, and each storing a service channel identification, a service channel number, a service category, and a service channel name; and
wherein the second EPG data comprises event layers provided as much as number of programs of a corresponding service channel, and the event layers are provided in number corresponding to the respective service channels and each has the event broadcasting start time, the event broadcasting time, the event name, an event category, and the event summary.

11. The method of claim 10, wherein the step of displaying the channel information comprises the steps of:
upon request for the channel information, guiding for selection of the EPG and structured EPG data; and
upon selection of the EPG data in the above step, displaying the EPG data as the channel information, and upon selection of the structured EPG data, displaying the structured EPG data as the channel information.

12. The method of claim 10, the method further comprises the steps of:
outputting Internet protocol, IP, datagram data;
decapsulating IP data of the IP datagram data,
separating a service data packet stream or an electronic service guide, ESG, data packet stream, and demultiplexing and decoding the service data packet stream into audio and video data (813);
generating the structured EPG data comprising the steps of:
parsing the ESG data packet stream,
generating and storing structured ESG data (815), and
analyzing the structured ESG data comprising the first and
second EPG data; and
upon the request (821, 831) for displaying the channel information, displaying the selected ESG data stored in the memory by sequentially accessing the first EPG data and the corresponding second EPG data as the channel information (835).

13. The method of claim 12, wherein the step of generating the structured EPG data comprising the steps of:
upon receipt of the ESG data packet stream, parsing the ESG data, and generating and storing the structured ESG data; and
combining channel information data of a service information fragment and an acquisition fragment of the structured ESG data,
generating the summary information of the programs of the respective service channels, generating the structured first EPG data, combining channel information data of contents fragments and schedule event fragments, and generating and storing the structured second EPG data.

14. The method of claim 13, wherein, in the step of generating the first EPG data, a service identification field, a name field, and a genre field of the service information fragment and the acquisition fragment of the structured ESG data are matched to service channel name, category and language, respectively, to generate the first EPG data, and
in the step of generating the second EPG data, a broadcasting start time field of the schedule event fragment of the structured ESG data and a broadcasting field, a title field, a genre field, and a synopsis field of the contents fragment are matched to an event start time, an event broadcasting time, an event name, an event category, an event summary of the event information to generate the structured second EPG data.

15. The method of claim 13, wherein, in the step of generating the first EPG data, a session description protocol, SDP, field of the acquisition information fragment of the structured ESG data is matched to a network layer of the first EPG data, and
a service ID field, a service genre field, and a service name field of the service information fragment are matched to corresponding service channel number, service type, and service channel name of a service layer of the first EPG data, respectively, to generate the structured first EPG data.

16. The method of claim 13, wherein, in the step of generating the second EPG data, a content identification field and the broadcasting start time field of the schedule event fragment of the structured ESG data are matched to event identification and start time of the second EPG data, respectively, and
the broadcasting time field, the title field, the genre field, and the synopsis field of the contents fragment are matched to a broadcasting time, an event name, a content level, and an event summary of the second EPG data, respectively, to generate the structured second EPG data.

17. The method of claim 13, wherein the step of displaying the channel information by a user comprises the steps of:
guiding for selection of the ESG and structured EPG data; and
upon selection of the ESG data, displaying the structured ESG data as the channel information, and upon selection of the EPG data, selecting the structured EPG data as the channel information.

## Patentansprüche

1. Vorrichtung zum Anzeigen von Kanalinformationen in einem digitalen Rundfunkempfänger, wobei die Vorrichtung umfasst:
einen Rundfunkempfänger zum Empfangen und Demodulieren eines digitalen Rundfunksignals eines ausgewählten Kanals;
einen Datenprozessor (130) zum Demultiplexen des demodulierten Rundfunksignals, zum Separieren des elektronischen Programmführers EPG und der Rundfunkdaten und zum Decodieren der Rundfunkdaten;
ein Steuergerät (100), das
a) beim Empfang der EPG-Daten geeignet ist zum:
Analysieren der EPG-Daten;
Erzeugen von zusammenfassenden Informationen schrittweise von Servicekanal zu Servicekanal für einen physikalischen Kanal als erste EPG-Daten, wobei die ersten EPG-Daten für jeden Servicekanal Informationen umfassen, welche die Servicekanalkategorie und den Namen aufweisen,
Erzeugen von zusammenfassenden Informationen von Programmen der jeweiligen Servicekanäle als zweite EPG-Daten, wobei die zweiten EPG-Daten Eventinformationen umfassen, die über den Servicekanal gesendet und in einer Sendezeitabfolge gespeichert werden, und wobei die Eventinformationen einen Sendebeginnzeitpunkt, eine Sendezeit, einen Eventnamen und eine Eventzusammenfassung eines entsprechenden Events aufweisen,
Erzeugen strukturierter EPG-Daten, welche die ersten und zweiten EPG-Daten umfassen,
Speichern der EPG-Daten und der strukturierten EPG-Daten in einem Speicher (180), und
b) wobei das Steuergerät (100) ferner geeignet ist zum:
in einer Anzeigeeinheit (150) Anzeigen der strukturierten EPG-Daten, die in dem Speicher gespeichert sind, durch sequentielles Abrufen der ersten EPG-Daten und der entsprechenden zweiten EPG-Daten nach Auswahl durch einen Benutzer als die Kanalinformationen,
wobei die ersten EPG-Daten ferner umfassen:
eine Netzwerkschicht, die eine physikalische Kanalkennzeichnung, Sendestationsinformationen und die Zahl der Servicekanäle aufweist, die den physikalischen Kanal nutzen; und
Serviceschichten, von denen so viele wie die Zahl der Servicekanäle bereitgestellt sind und wobei jede eine Servicekanalkennzeichnung, eine Servicekanalzahl, eine Servicekategorie und einen Servicekanalnamen umfasst; und
wobei die zweiten EPG-Daten Eventschichten umfassen, von denen so viele wie die Zahl der Programme eines entsprechenden Servicekanals bereitgestellt sind und die Eventschichten in der Zahl bereitgestellt sind, die den jeweiligen Servicekanälen entspricht, und jede den Event-Sendebeginnzeitpunkt, die Eventsendezeit, den Eventnamen, eine Eventkategorie und die Eventzusammenfassung aufweist.

2. Vorrichtung nach Anspruch 1, wobei das Steuergerät (100) beim Anfordern der Kanalinformationen durch den Benutzer in der Lage ist, einen Arbeitsgang zum Anzeigen der EPG- und der strukturierten EPG-Daten zu steuern, wobei er Zugriff auf die EPG- oder die strukturierten EPG-Daten hat, die durch einen Benutzer in dem Speicher ausgewählt wurden, und die EPG- oder die strukturierten EPG-Daten auf der Anzeigeeinheit (150) anzuzeigen.

3. Vorrichtung nach Anspruch 2, wobei der digitale Rundfunkempfänger ein Funkendgerät ist, das eine Funkkommunikationseinheit (190) umfasst.

4. Vorrichtung nach Anspruch 1, wobei der Rundfunkempfänger ferner geeignet ist, Internetprotokoll-IP-Datagrammdaten auszugeben,
wobei der Datenprozessor (130) ferner geeignet ist, IP-Daten aus den IP-Datagrammdaten zu entkapseln, einen Servicedatenpaketstrom oder einen Datenpaketstrom eines elektronischen Serviceführers ESG zu separieren und den Servicedatenpaketstrom in Audio- und Videodaten zu demultiplexen und zu decodieren,
wobei das Steuergerät (100) ferner geeignet ist, die Arbeitsgänge zu steuern zum
syntaktischen Analysieren des ESG-Datenpaketstroms, Erzeugen strukturierter ESG-Daten,
Analysieren der strukturierten ESG-Daten, welche die ersten und zweiten EPG-Daten umfassen,
Speichern der strukturierten ESG-Daten und der EPG-Daten im Speicher (180) und
Anzeigen der im Speicher gespeicherten strukturierten ESG-Daten in der Anzeigeeinheit (150) durch sequentielles Abrufen der ersten EPG-Daten und der entsprechenden zweiten EPG-Daten nach Auswahl durch einen Benutzer als die Kanalinformationen.

5. Vorrichtung nach Anspruch 4, wobei das Steuergerät (100) beim Empfang des ESG-Datenpaketstroms geeignet ist, die ESG-Daten syntaktisch zu analysieren, die strukturierten ESG-Daten zu erzeugen und im Speicher zu speichern, die Kanalinformationsdaten eines Serviceinformationsfragments (740) und eines Erfassungsfragments (770) der strukturierten ESG-Daten zu kombinieren, die zusammengefassten Informationen von den Programmen der jeweiligen Servicekanäle zu erzeugen, die strukturierten ersten EPG-Daten zu erzeugen, die Kanalinformationsdaten von Inhaltsfragmenten (760) und Sendeplan-Eventfragmenten (750) zu kombinieren und die strukturierten zweiten EPG-Daten zu erzeugen.

6. Vorrichtung nach Anspruch 5, wobei das Steuergerät (100) geeignet ist, ein Servicekennzeichnungsfeld, ein Namenfeld und ein Genrefeld des Serviceinformationsfragments (740) und des Erfassungsfragments (770) der strukturierten ESG-Daten an den Servicekanalnamen bzw. die Kategorie und die Sprache anzupassen, um die ersten EPG-Daten zu erzeugen, und
wobei das Steuergerät geeignet ist, ein Sendebeginnzeitpunkt-Feld des Sendeplan-Eventfragments (750) der strukturierten ESG-Daten und ein Sendefeld, ein Titelfeld, ein Genrefeld und ein Synopsisfeld des Inhaltsfragments (760) an einen Eventbeginnzeitpunkt, eine Eventsendezeit, einen Eventnamen, eine Eventkategorie und eine Eventzusammenfassung der Eventinformationen anzupassen, um die strukturierten zweiten EPG-Daten zu erzeugen und im Speicher (180) zu speichern.

7. Vorrichtung nach Anspruch 6, wobei das Steuergerät (100) geeignet ist, ein Sitzungsbeschreibungsprotokoll-SDP-Feld des Informationserfassungsfragments (770) der strukturierten ESG-Daten an eine Netzwerkschicht der ersten EPG-Daten anzupassen, und es ein Service-ID-Feld, ein Servicegenre-Feld und ein Servicenamen-Feld des Serviceinformationsfragments (740) jeweils an die entsprechende Servicekanalzahl, den Servicetyp und den Servicekanalnamen einer Serviceschicht der ersten EPG-Daten anpasst, um die strukturierten ersten EPG-Daten zu erzeugen.

8. Vorrichtung nach Anspruch 7, wobei das Steuergerät (100) geeignet ist, ein Inhaltskennzeichnungsfeld und das Sendebeginnzeitpunkt-Feld des Sendeplan-Eventfragments (750) der strukturierten ESG-Daten an die Eventkennzeichnung bzw. den Beginnzeitpunkt der zweiten EPG-Daten anzupassen und das Sendezeitfeld, das Titelfeld, das Genrefeld und das Synopsisfeld des Inhaltsfragments (760) jeweils an eine Sendezeit, einen Eventnamen, eine Inhaltsebene und eine Inhaltszusammenfassung der zweiten EPG-Daten anzupassen, um die strukturierten zweiten EPG-Daten zu erzeugen.

9. Vorrichtung nach Anspruch 6, wobei das Steuergerät (100) beim Anfordern der Kanalinformationen durch den Benutzer in der Lage ist, einen Arbeitsgang zum Anzeigen der strukturierten ESG- und der strukturierten EPG-Daten zu steuern, wobei er Zugriff auf die strukturierten ESG- oder EPG-Daten hat, die durch einen Benutzer in dem Speicher (180) ausgewählt wurden, und die strukturierten ESG- oder EPG-Daten auf der Anzeigeeinheit (150) anzuzeigen.

10. Verfahren zum Anzeigen von Kanalinformationen in einem digitalen Rundfunkempfänger, wobei das Verfahren die Schritte umfasst:
Empfangen und Demodulieren eines digitalen Rundfunksignals eines ausgewählten Kanals;
Demultiplexen des demodulierten Rundfunksignals, Separieren des elektronischen Programmführers EPG und der Rundfunkdaten und Decodieren der Rundfunkdaten;
beim Empfang der EPG-Daten Erzeugen strukturierter EPG-Daten unter Verwendung der Schritte:
Speichern der EPG-Daten,
Analysieren der EPG-Daten,
Erzeugen von zusammenfassenden Informationen schrittweise von Servicekanal zu Servicekanal für einen physikalischen Kanal als erste EPG-Daten, wobei die ersten EPG-Daten für jeden Servicekanal Informationen umfassen, welche die Servicekanalkategorie und den Namen aufweisen,
Erzeugen von zusammenfassenden Informationen von Programmen der jeweiligen Servicekanäle als zweite EPG-Daten, wobei die zweiten EPG-Daten Eventinformationen umfassen, die über den Servicekanal gesendet und in einer Sendezeitabfolge gespeichert werden, und wobei die Eventinformationen einen Sendebeginnzeitpunkt, eine Sendezeit, einen Eventnamen und eine Eventzusammenfassung eines entsprechenden Events aufweisen,
Erzeugen strukturierter EPG-Daten, welche die ersten und zweiten EPG-Daten umfassen,
Speichern der EPG-Daten und der strukturierten EPG-Daten; und
beim Anfordern der Anzeige der Kanalinformationen Anzeigen der ausgewählten strukturierten EPG-Daten, die gespeichert sind, durch sequentielles Abrufen der ersten EPG-Daten und der entsprechenden zweiten EPG-Daten,
wobei die ersten EPG-Daten ferner umfassen:
eine Netzwerkschicht, die eine physikalische Kanalkennzeichnung, Sendestationsinformationen und die Zahl der Servicekanäle umfassen, die den physikalischen Kanal nutzen; und
Serviceschichten, von denen so viele wie die Zahl der Servicekanäle bereitgestellt sind und wobei jede eine Servicekanalkennzeichnung, eine Servicekanalzahl, eine Servicekategorie und einen Servicekanalnamen speichert; und
wobei die zweiten EPG-Daten Eventschichten umfassen, von denen so viele wie die Zahl der Programme eines entsprechenden Servicekanals bereitgestellt sind und die Eventschichten in der Zahl bereitgestellt sind, die den jeweiligen Servicekanälen entspricht, und jede den Event-Sendebeginnzeitpunkt, die Eventsendezeit, den Eventnamen, eine Eventkategorie und die Eventzusammenfassung aufweist.

11. Verfahren nach Anspruch 10, wobei der Schritt zum Anzeigen der Kanalinformationen die Schritte umfasst:
beim Anfordern der Kanalinformationen Führen bei der Auswahl der EPG- und der strukturierten EPG-Daten; und
bei der Auswahl der EPG-Daten in dem obigen Schritt Anzeigen der EPG-Daten als die Kanalinformationen und bei der Auswahl der strukturierten EPG-Daten Anzeigen der strukturierten EPG-Daten als die Kanalinformationen.

12. Verfahren nach Anspruch 10, wobei das Verfahren ferner die Schritte umfasst:
Ausgeben der Internetprotokoll-IP-Datagrammdaten,
Entkapseln der IP-Daten aus den IP-Datagrammdaten, Separieren eines Servicedatenpaketstroms oder eines Datenpaketstroms eines elektronischen Serviceführers ESG und Demultiplexen sowie Decodieren des Servicedatenpaketstroms in Audio- und Videodaten (813),
Erzeugen der strukturierten EPG-Daten, die Schritte umfassend:
syntaktisches Analysieren des ESG-Datenpaketstroms,
Erzeugen und Speichern strukturierter ESG-Daten (815), und
Analysieren der strukturierten ESG-Daten, welche die ersten und zweiten EPG-Daten umfassen, und
bei Anforderung (821, 831) der Anzeige der Kanalinformationen Anzeigen der ausgewählten ESG-Daten, die im Speicher gespeichert sind, durch sequentielles Abrufen der ersten EPG-Daten und der entsprechenden zweiten EPG-Daten als die Kanalinformationen (835).

13. Verfahren nach Anspruch 12, wobei der Schritt zum Erzeugen der strukturierten EPG-Daten die Schritte umfasst:
bei Eingang des ESG-Datenpaketstroms syntaktisches Analysieren der ESG-Daten und Erzeugen sowie Speichern der strukturierten ESG-Daten; und Kombinieren der Kanalinformationsdaten eines Serviceinformationsfragments und eines Erfassungsfragments der strukturierten ESG-Daten, Erzeugen der zusammengefassten Informationen von den Programmen der jeweiligem Servicekanäle, Erzeugen der strukturierten ersten EPG-Daten, Kombinieren der Kanalinformationsdaten von Inhaltsfragmenten und Sendeplan-Eventfragmenten und Erzeugen sowie Speichern der strukturierten zweiten EPG-Daten.

14. Verfahren nach Anspruch 13, wobei in dem Schritt zum Erzeugen der ersten EPG-Daten ein Servicekennzeichnungsfeld, ein Namenfeld und ein Genrefeld des Serviceinformationsfragments und des Erfassungsfragments der strukturierten ESG-Daten an den Servicekanalnamen bzw. die Kategorie und die Sprache angepasst werden, um die ersten EPG-Daten zu erzeugen, und
wobei in dem Schritt zum Erzeugen der zweiten EPG-Daten ein Sendebeginnzeitpunkt-Feld des Sendeplan-Eventfragments der strukturierten ESG-Daten und ein Sendefeld, ein Titelfeld, ein Genrefeld und ein Synopsisfeld des Inhaltsfragments an einen Eventbeginnzeitpunkt, eine Eventsendezeit, einen Eventnamen, eine Eventkategorie und eine Eventzusammenfassung der Eventinformationen angepasst werden, um die strukturierten zweiten EPG-Daten zu erzeugen.

15. Verfahren nach Anspruch 13, wobei in dem Schritt zum Erzeugen der ersten EPG-Daten ein Sitzungsbeschreibungsprotokoll-SDP-Feld des Informationserfassungsfragments der strukturierten ESG-Daten an eine Netzwerkschicht der ersten EPG-Daten angepasst wird und
ein Service-ID-Feld, ein Servicegenre-Feld und ein Servicenamen-Feld des Serviceinformationsfragments jeweils an die entsprechende Servicekanalzahl, den Servicetyp und den Servicekanalnamen einer Serviceschicht der ersten EPG-Daten angepasst werden, um die strukturierten ersten EPG-Daten zu erzeugen.

16. Verfahren nach Anspruch 13, wobei in dem Schritt zum Erzeugen der zweiten EPG-Daten ein Inhaltskennzeichnungsfeld und das Sendebeginnzeitpunkt-Feld des Sendeplan-Eventfragments der strukturierten ESG-Daten an die Eventkennzeichnung bzw. den Beginnzeitpunkt der zweiten EPG-Daten angepasst werden und
das Sendezeitfeld, das Titelfeld, das Genrefeld und das Synopsisfeld des Inhaltsfragments jeweils an eine Sendezeit, einen Eventnamen, eine Inhaltsebene und eine Inhaltszusammenfassung der zweiten EPG-Daten angepasst werden, um die strukturierten zweiten EPG-Daten zu erzeugen.

17. Verfahren nach Anspruch 13, wobei der Schritt zum Anzeigen der Kanalinformationen durch einen Benutzer die Schritte umfasst:
Führen für die Auswahl der ESG- und der strukturierten EPG-Daten; und
bei der Auswahl der ESG-Daten Anzeigen der strukturierten ESG-Daten als die Kanalinformationen und bei der Auswahl der EPG-Daten Auswählen der strukturierten EPG-Daten als die Kanalinformationen.

## Revendications

1. Appareil d'affichage d'informations de canal dans un récepteur de diffusion numérique, l'appareil comprenant :
un récepteur de diffusion pour recevoir et démoduler un signal de diffusion numérique d'un canal sélectionné ;
un processeur de données (130) pour démultiplexer le signal de diffusion démodulé, séparer des données de guide de programme électronique, EPG, et des données de diffusion, et décoder les données de diffusion ;
un organe de commande (100) étant apte à :
a) à la réception des données EPG :
analyser les données EPG,
générer des informations récapitulatives pour chaque canal de service pour un canal physique en tant que premières données EPG, dans lequel les premières données EPG comprennent pour chaque canal de service des informations comportant une catégorie et un nom de canal de service,
générer des informations récapitulatives de programmes de canaux de service respectifs en tant que deuxièmes données EPG, dans lequel les deuxièmes données EPG comprennent des informations d'événement diffusées sur le canal de service et stockées dans une séquence de durée de diffusion, et les informations d'événement comportant une heure de début de diffusion, une durée de diffusion, un nom d'événement et un récapitulatif d'événement d'un événement correspondant,
générer des données EPG structurées comprenant les premières et deuxièmes données EPG,
stocker les données EPG et les données EPG structurées dans une mémoire (180), et
b) l'organe de commande (100) étant en outre apte à :
afficher dans une unité d'affichage (150) les données EPG structurées stockées dans la mémoire en accédant séquentiellement aux premières données EPG et aux deuxièmes données EPG correspondantes par sélection d'utilisateur en tant qu'informations de canal,
dans lequel les premières données EPG comprennent en outre :
une couche de réseau comprenant une identification de canal physique, des informations de station de diffusion, et le nombre de canaux de service utilisant le canal physique ; et
des couches de service d'un nombre égal au nombre de canaux de service, comprenant chacune une identification de canal de service, un numéro de canal de service, une catégorie de service, et un nom de canal de service ; et
dans lequel les deuxièmes données EPG comprennent des couches d'événement d'un nombre égal au nombre de programmes d'un canal de service correspondant, et les couches d'événement sont d'un nombre égal au nombre de canaux de service respectifs, chacune comportant l'heure de début de diffusion d'événement, la durée de diffusion d'événement, le nom d'événement, une catégorie d'événement et le récapitulatif d'événement.

2. Appareil selon la revendication 1, dans lequel, lorsqu'un utilisateur demande des informations de canal, l'organe de commande (100) est apte à commander une opération pour afficher les données EPG et les données EPG structurées, en ayant accès aux données EPG ou aux données EPG structurées sélectionnées par un utilisateur dans la mémoire, et à afficher les données EPG ou les données EPG structurées sur l'unité d'affichage (150).

3. Appareil selon la revendication 2, dans lequel le récepteur de diffusion numérique est un terminal sans fil comprenant en outre une unité de communication sans fil (190).

4. Appareil selon la revendication 1, dans lequel le récepteur de diffusion est en outre apte à délivrer des données de datagrammes de protocole Internet, IP, ; le processeur de données (130) est en outre apte à décapsuler des données IP des données de datagrammes IP, pour séparer un flux de paquets de données de service ou un flux de paquets de données de guide de service électronique, ESG, et à démultiplexer et décoder le flux de paquets de données de service en données audio et Vidéo ;
l'organe de commande (100) est en outre apte à commander des opérations consistant à :
effectuer une analyse syntaxique du flux de paquets de données ESG,
générer des données ESG structurées,
analyser les données ESG structurées comprenant les premières et deuxièmes données EPG,
stocker les données ESG structurées et les données EPG dans la mémoire (180), et
afficher dans l'unité d'affichage (150) les données ESG structurées stockées dans la mémoire en accédant séquentiellement aux premières données EPG et aux deuxièmes données EPG correspondantes par sélection d'utilisateur en tant qu'informations de canal.

5. Appareil selon la revendication 4, dans lequel, à la réception du flux de paquets de données ESG, l'organe de commande (100) est apte à effectuer une analyse syntaxique des données ESG, à générer et stocker les données ESG structurées dans la mémoire, à combiner des données d'informations de canal d'un fragment d'informations de service (740) et d'un fragment d'acquisition (770) des données ESG structurées, à générer les informations récapitulatives des programmes des canaux de service respectifs, à générer les premières données EPG structurées, à combiner des données d'informations de canal de fragments de contenu (760) et de fragments d'événement de programmation (750), et à générer les deuxièmes données EPG structurées.

6. Appareil selon la revendication 5, dans lequel l'organe de commande (100) est apte à faire correspondre un champ d'identification de service, un champ de nom, et un champ de genre du fragment d'informations de service (740) et du fragment d'acquisition (770) des données ESG structurées avec respectivement un nom de canal de service, une catégorie et une langue, pour générer les premières données EPG, et
dans lequel l'organe de commande est apte à faire correspondre un champ d'heure de début de diffusion du fragment d'événement de programmation (750) des données ESG structurées et un champ de diffusion, un champ de titre, un champ de genre, et un champ de synopsis du fragment de contenu (760) avec une heure de début d'événement, une durée de diffusion d'événement, un nom d'événement, une catégorie d'événement et un récapitulatif d'événement des informations d'événement pour générer et stocker les deuxièmes données EPG structurées dans la mémoire (180) .

7. Appareil selon la revendication 6, dans lequel l'organe de commande (100) est apte à faire correspondre un champ de protocole de description de session, SDP, du fragment d'informations d'acquisition (770) des données ESG structurées avec une couche de réseau des premières données EPG, et à faire correspondre un champ d'identifiant de service, un champ de genre de service, et un champ de nom de service du fragment d'informations de service (740) avec respectivement un numéro de canal de service, un type de service, et un nom de canal de service d'une couche de service des premières données EPG, pour générer les premières données EPG structurées.

8. Appareil selon la revendication 7, dans lequel l'organe de commande (100) est apte à faire correspondre un champ d'identification de contenu et le champ d'heure de début de diffusion du fragment d'événement de programmation (750) des données ESG structurées avec respectivement une identification d'événement et une heure de début des deuxièmes données EPG, et à faire correspondre le champ de durée de diffusion, le champ de titre, le champ de genre, et le champ de synopsis du fragment de contenu (760) avec respectivement une durée de diffusion, un nom d'événement, un niveau de contenu et un récapitulatif d'événement des deuxièmes données EPG pour générer les deuxièmes données EPG structurées.

9. Appareil selon la revendication 6, dans lequel, lorsqu'un utilisateur demande les informations de canal, l'organe de commande (100) est apte à commander une opération pour afficher les données ESG structurées et les données EPG structurées, en ayant accès aux données ESG ou EPG structurées sélectionnées par un utilisateur dans la mémoire (180), et à afficher les données ESG ou EPG structurées sur l'unité d'affichage (150).

10. Procédé d'affichage d'informations de canal dans un récepteur de diffusion numérique, le procédé comprenant les étapes consistant à :
recevoir et démoduler un signal de diffusion numérique d'un canal sélectionné ;
démultiplexer le signal de diffusion démodulé, séparer des données de guide de programme électronique, EPG, et des données de diffusion, et décoder les données de diffusion ;
générer, à la réception des données EPG, des données EPG structurées en utilisant les étapes consistant à :
stocker les données EPG,
analyser les données EPG,
générer des informations récapitulatives pour chaque canal de service pour un canal physique en tant que premières données EPG, dans lequel les premières données EPG comprennent pour chaque canal de service des informations comportant une catégorie et un nom de canal de service,
générer des informations récapitulatives de programmes de canaux de service respectifs en tant que deuxièmes données EPG, dans lequel les deuxièmes données EPG comprennent des informations d'événement diffusées sur le canal de service et stockées dans une séquence de durée de diffusion, et les informations d'événement comportant une heure de début de diffusion, une durée de diffusion, un nom d'événement et un récapitulatif d'événement d'un événement correspondant,
générer des données EPG structurées comprenant les premières et deuxièmes données EPG, et
stocker les données EPG et les données EPG structurées ; et
en cas de demande d'affichage d'informations de canal, afficher les données EPG structurées sélectionnées, qui sont stockées, en accédant séquentiellement aux premières données EPG et aux deuxièmes données EPG correspondantes,
dans lequel les premières données EPG comprennent en outre :
une couche de réseau comprenant une identification de canal physique, des informations de station de diffusion, et le nombre de canaux de service utilisant le canal physique ; et
des couches de service d'un nombre égal au nombre de canaux de service, chacune stockant une identification de canal de service, un numéro de canal de service, une catégorie de service, et un nom de canal de service ; et
dans lequel les deuxièmes données EPG comprennent des couches d'événement d'un nombre égal au nombre de programmes d'un canal de service correspondant, et les couches d'événement sont d'un nombre égal au nombre de canaux de service respectifs, chacune comportant l'heure de début de diffusion d'événement, la durée de diffusion d'événement, le nom d'événement, une catégorie d'événement et le récapitulatif d'événement.

11. Procédé selon la revendication 10, dans lequel l'étape d'affichage des informations de canal comprend les étapes consistant à :
lorsque des informations de canal sont demandées, guider pour la sélection des données EPG et des données EPG structurées ; et
à la sélection des données EPG à l'étape ci-dessus, afficher les données EPG en tant qu'informations de canal, et à la sélection des données EPG structurées, afficher les données EPG structurées en tant qu'informations de canal.

12. Procédé selon la revendication 10, le procédé comprenant en outre les étapes consistant à :
délivrer des données de datagrammes de protocole Internet, IP,
décapsuler des données IP des données de datagrammes IP,
séparer un flux de paquets de données de service ou un flux de paquets de données de guide de service électronique, ESG, et démultiplexer et décoder le flux de paquets de données de service en données audio et vidéo (813),
générer les données EPG structurées comprenant les étapes consistant à :
effectuer une analyse syntaxique du flux de paquets de données ESG,
générer et stocker des données ESG structurées (815), et
analyser les données ESG structurées comprenant les premières et deuxièmes données EPG, et
en cas de demande (821, 831) d'affichage des informations de canal, afficher les données ESG sélectionnées stockées dans la mémoire en accédant séquentiellement aux premières données EPG et aux deuxièmes données EPG correspondantes en tant qu'informations de canal (835).

13. Procédé selon la revendication 12, dans lequel l'étape consistant à générer les données EPG structurées comprend les étapes consistant à :
à la réception du flux de paquets de données ESG, effectuer une analyse syntaxique des données ESG et générer et stocker les données ESG structurées ; et
combiner des données d'informations de canal d'un fragment d'informations de service et d'un fragment d'acquisition des données ESG structurées, générer les informations récapitulatives des programmes des canaux de service respectifs, générer les premières données EPG structurées, combiner des données d'informations de canal de fragments de contenu et de fragments d'événement de programmation, et générer et stocker les deuxièmes données EPG structurées.

14. Procédé selon la revendication 13, dans lequel, à l'étape consistant à générer les premières données EPG, un champ d'identification de service, un champ de nom, et un champ de genre du fragment d'informations de service et du fragment d'acquisition des données ESG structurées sont mis en correspondance avec respectivement un nom de canal de service, une catégorie et une langue, pour générer les premières données EPG, et
à l'étape consistant à générer les deuxièmes données EPG, un champ d'heure de début de diffusion du fragment d'événement de programmation des données ESG structurées et un champ de diffusion, un champ de titre, un champ de genre, et un champ de synopsis du fragment de contenu sont mis en correspondance avec une heure de début d'événement, une durée de diffusion d'événement, un nom d'événement, une catégorie d'événement et un récapitulatif d'événement des informations d'événement pour générer les deuxièmes données EPG structurées.

15. Procédé selon la revendication 13, dans lequel, à l'étape consistant à générer les premières données EPG, un champ de protocole de description de session, SDP, du fragment d'informations d'acquisition des données ESG structurées est mis en correspondance avec une couche de réseau des premières données EPG, et
un champ d'identifiant de service, un champ de genre de service, et un champ de nom de service du fragment d'informations de service sont mis en correspondance avec respectivement un numéro de canal de service, un type de service, et un nom de canal de service d'une couche de service des premières données EPG, pour générer les premières données EPG structurées.

16. Procédé selon la revendication 13, dans lequel, à l'étape consistant à générer les deuxièmes données EPG, un champ d'identification de contenu et le champ d'heure de début de diffusion du fragment d'événement de programmation des données ESG structurées sont mis en correspondance avec respectivement une identification d'événement et une heure de début des deuxièmes données EPG, et
le champ de durée de diffusion, le champ de titre, le champ de genre, et le champ de synopsis du fragment de contenu sont mis en correspondance avec respectivement une durée de diffusion, un nom d'événement, un niveau de contenu et un récapitulatif d'événement des deuxièmes données EPG pour générer les deuxièmes données EPG structurées.

17. Procédé selon la revendication 13, dans lequel l'étape consistant à afficher les informations de canal par un utilisateur comprend les étapes consistant à :
guider pour la sélection des données ESG et des données EPG structurées ; et
à la sélection des données ESG, afficher les données ESG structurées en tant qu'informations de canal, et à la sélection des données EPG, sélectionner les données EPG structurées en tant qu'informations de canal.
